# EUROPÄISCHE PATENTSCHRIFT

(11) **EP 1 036 825 B1**
(45) Veröffentlichungstag und Bekanntmachung des Hinweises auf die Patenterteilung: **06.05.2004**
(21) Anmeldenummer: 00810188.3
(22) Anmeldetag: 07.03.2000
(51) Int. Cl.: C09B 62/443, C09B 62/45, C09B 62/04

(54) **Reaktivfarbstoffe, Verfahren zu deren Herstellung und deren Verwendung**
Reactive dyestuffs, process for their preparation and use thereof
Colorants réactifs, procédé pour leur préparation et leur utilisation

(30) Priorität: 15.03.1999 EP 99810229
(43) Veröffentlichungstag der Anmeldung: 20.09.2000
(73) Patentinhaber: Ciba Specialty Chemicals Holding Inc., 4057 Basel (CH)
(72) Erfinder: Reichert, Hans, 79618 Rheinfelden (DE); Verdugo, Thomas, 4415 Lausen (CH)

(56) Entgegenhaltungen:
- EP-A- 0 134 033
- EP-A- 0 260 227
- EP-A- 0 472 975
- EP-A- 0 681 005
- EP-A- 0 697 443

## Beschreibung

Die vorliegende Erfindung betrifft neue unsymmetrische Dioxazinfarbstoffe, welche faserreaktiv sind, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die einen hohen Ausziehgrad und hohen Fixiergrad aufweisen, wobei insbesondere keine alkalische Nachbehandlung zur Entfernung nicht fixierten Farbstoffs notwendig ist. Sie sollten ferner eine gute färberische Ausbeute und eine hohe Reaktivität aufweisen. Aus der EP-A-0 260 227, EP-A-0 472 975, EP-A-0 681 005 und der US-A-4 841 049 sind unsymmetrische, faserreaktive Dioxazinfarbstoffe bekannt. Von den bekannten Farbstoffen werden die genannten Anforderungen jedoch nicht in allen Eigenschaften erfüllt.

Der vorliegenden Erfindung liegt daher die Aufgabe zugrunde, neue, verbesserte faserreaktive Dioxazinfarbstoffe für das Färben und Bedrucken von Fasermaterialien zu finden, welche die oben charakterisierten Qualitäten in hohem Masse besitzen. Die neuen Farbstoffe sollten sich vor allem durch hohe Ausziehgrade, hohe Fixierausbeuten und hohe Faser-Farbstoff-Bindungsstabilitäten auszeichnen. Sie sollten ferner Färbungen mit guten Allgemeinechtheiten, beispielsweise Licht- und Nassechtheiten, ergeben.

Es hat sich gezeigt, dass mit den weiter unten definierten Reaktivfarbstoffen die gestellte Aufgabe weitgehend gelöst wird.

Gegenstand der vorliegenden Erfindung sind somit Reaktivfarbstoffe der Formel (1) 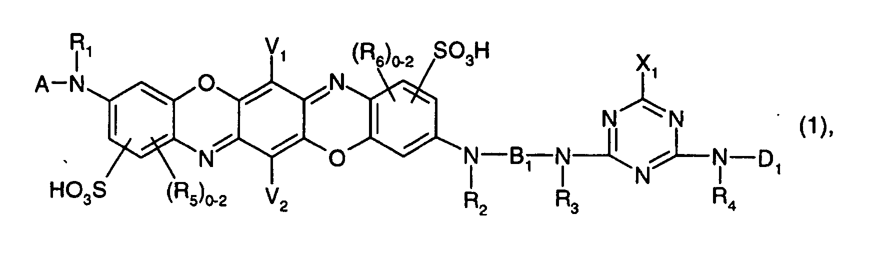 worin
R₁, R₂, R₃ und R₄ unabhängig voneinander Wasserstoff oder gegebenenfalls substituiertes C₁-C₄-Alkyl bedeuten,
(R₅)₀₋₂ und (R₆)₀₋₂ unabhängig voneinander für 0 bis 2 gleiche oder verschiedene Substituenten aus der Gruppe C₁-C₄-Alkyl, C₁-C₄-Alkoxy, C₂-C₄-Alkanoylamino, Halogen, Carboxy, Sulfo, Carbamoyl, N-C₁-C₄-Alkylcarbamoyl, N,N-Di-C₁-C₄-Alkylcarbamoyl, C₁-C₄-Alkylsulfonyl, Sulfamoyl, N-C₁-C₄-Alkylsulfamoyl und N,N-Di-C₁-C₄-Alkylsulfamoyl stehen,
A Wasserstoff oder gegebenenfalls durch Hydroxy, Sulfo, Carboxy oder Sulfato substituiertes C₁-C₄-Alkyl, gegebenenfalls durch C₁-C₄-Alkyl, C₁-C₄-Alkoxy, C₂-C₄-Alkanoylamino, Hydroxy, Carboxy, Carbamoyl, Sulfo oder Halogen substituiertes Phenyl oder Naphthyl, gegebenenfalls im Phenylring durch C₁-C₄-Alkyl, C₁-C₄-Alkoxy, C₂-C₄-Alkanoylamino, Hydroxy, Carboxy, Sulfo, Carbarrioyl, Ureido oder Halogen substituiertes Phenyl-C₁-C₄-Alkylen oder gegebenenfalls durch C₁-C₄-Alkyl substituiertes C₅-C₇-Cycloalkyl bedeutet,
B₁ ein aliphatisches oder aromatisches Brückenglied ist,
D₁ durch mindestens eine faserreaktive Gruppe substituiertes Phenyl oder Naphthyl, das gegebenenfalls durch nicht-faserreaktive Substituenten weitersubstituiert ist, oder
einen durch mindestens eine faserreaktive Gruppe substituierten Mono- oder Disazorest der Formel (4) oder (5)

D*-N=N-(M-N=N)ᵤ-K- (4)

oder

-D*-N=N-(M-N=N)ᵤ-K (5)

bedeutet, worin
D* der Rest einer Diazokomponente der Benzol- oder Naphthalinreihe ist,
M den Rest einer Mittelkomponente der Benzol- oder Naphthalinreihe bedeutet,
K der Rest einer Kupplungskomponente der Benzol-, Naphthalin-, Pyrazolon-, 6-Hydroxypyridon-(2)- oder Acetessigsäurearylamid-Reihe ist,
und u die Zahl 0 oder 1, vorzugsweise 0 ist, wobei D*, M und K weiterhin bei Azofarbstoffen übliche Substituenten tragen können,
V₁ und V₂ unabhängig voneinander Wasserstoff, Halogen, C₁-C₄-Alkyl, C₁-C₄-Alkoxy, oder gegebenenfalls substituiertes Phenyl, Phenoxy, C₂-C₆-Alkanoylamino oder Benzoylamino bedeuten, und
X₁ Halogen, Hydroxy, C₁-C₄-Alkoxy, C₁-C₄-Alkylthio, gegebenenfalls substituiertes Amino oder ein gegebenenfalls weitere Heteroatome enthaltender N-Heterocyclus ist, mit der Massgabe, dass
A und R₁ nicht Wasserstoff sind, wenn B₁ Ethylen, 1,3-Propylen, 1,4-Butylen, gegebenenfalls durch Sulfo substituiertes Phenylen oder 1,4-Cyclohexylen bedeutet oder der Rest 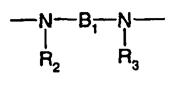 Piperazin ist, und
A nicht Hydroxyethyl und R₁ nicht Wasserstoff bedeuten, wenn B₁ Ethylen und X₁ 2,6-di-Sulfo-phenylamino ist.

Die Reste R₁, R₂, R₃ und R₄ sind als Alkylreste geradkettig oder verzweigt. Die Alkylreste können weitersubstituiert sein, z.B. durch Hydroxy, Sulfo, Sulfato, Cyano oder Carboxy. Als Beispiele seien die folgenden Reste genannt: Methyl, Ethyl, n-Propyl, Isopropyl, n-Butyl, Isobutyl, sek.-Butyl oder tert.-Butyl, sowie die entsprechenden durch Hydroxy, Sulfo, Sulfato, Cyano oder Carboxy substituierten Reste. Als Substituenten sind Hydroxy, Sulfo, Sulfato oder Carboxy, insbesondere Hydroxy oder Sulfato, bevorzugt. Für den Rest R₄ kommt auch ein Rest der Formel -(CH₂)₂-SO₂-(CH₂)₂-Cl in Betracht.

Als C₁-C₄-Alkyl kommen für (R₅)₀₋₂, (R₆)₀₋₂, V₁ und V₂ unabhängig voneinander z.B. Methyl, Ethyl, n-Propyl, Isopropyl, n-Butyl, sek.-Butyl, tert.-Butyl oder Isobutyl, vorzugsweise Methyl oder Ethyl und insbesondere Methyl, in Betracht, wobei die genannten Bedeutungen und Bevorzugungen auch für die folgenden C₁-C₄-Alkylreste gelten.

Als C₁-C₄-Alkoxy kommen für (R₅)₀₋₂, (R₆)₀₋₂, V₁, V₂ und X₁ unabhängig voneinander z.B. Methoxy, Ethoxy, n-Propoxy, Isopropoxy, n-Butoxy oder Isobutoxy, vorzugsweise Methoxy oder Ethoxy und insbesondere Methoxy, in Betracht, wobei die genannten Bedeutungen und Bevorzugungen auch für die folgenden C₁-C₄-Alkoxyreste gelten.

Als C₂-C₄-Alkanoylamino kommt für (R₅)₀₋₂ und (R₆)₀₋₂ z.B. Acetylamino oder Propionylamino, insbesondere Acetylamino, in Betracht, wobei die genannten Bedeutungen und Bevorzugungen auch für die folgenden C₂-C₄-Alkanoylaminoreste gelten.

Als Halogen kommen für (R₅)₀₋₂, (R₆)₀₋₂, V₁ und V₂ unabhängig voneinander z.B. Fluor, Chlor oder Brom, vorzugsweise Chlor oder Brom und insbesondere Chlor, in Betracht.

Als N-C₁-C₄-Alkylcarbamoyl kommen für (R₅)₀₋₂ und (R₆)₀₋₂ unabhängig voneinander z.B. N-Methyl-, N-Ethyl-, N-Propyl-, N-Isopropyl-, N-Butyl-, N-sek.-Butyl-, N-tert.-Butyl- oder N-Isobutylcarbamoyl, vorzugsweise N-Methyl- oder N-Ethylcarbamoyl und insbesondere N-Methylcarbamoyl, in Betracht.

Als N,N-Di-C₁-C₄-Alkylcarbamoyl kommen für (R₅)₀₋₂ und (R₆)₀₋₂ unabhängig voneinander z.B. N,N-Di-Methyl-, N,N-Di-Ethyl-, N,N-Di-Propyl-, N,N-Di-Isopropyl-, N,N-Di-Butyl-, N,N-Di-sek.-Butyl- oder N,N-Di-Isobutylcarbamoyl, vorzugsweise N,N-Di-Methyl- oder N,N-Di-Ethylcarbamoyl und insbesondere N,N-Di-Methylcarbamoyl, in Betracht.

Als C₁-C₄-Alkylsulfonyl kommen für (R₅)₀₋₂ und (R₆)₀₋₂ unabhängig voneinander z.B. Methyl-, Ethyl-, n-Propyl-, Isopropyl-, n-Butyl-, sek.-Butyl-, tert.-Butyl- oder Isobutylsulfonyl, vorzugsweise Methyl- oder Ethylsulfonyl und insbesondere Methylsulfonyl, in Betracht.

Als N-C₁-C₄-Alkylsulfamoyl kommen für (R₅)₀₋₂ und (R₆)₀₋₂ unabhängig voneinander z.B. N-Methyl-, N-Ethyl-, N-Propyl-, N-Isopropyl-, N-Butyl-, N-sek.-Butyl-, N-tert.-Butyl- oder N-Isobutylsulfamoyl, vorzugsweise N-Methyl- oder N-Ethylsulfamoyl und insbesondere N-Methylsulfamoyl, in Betracht.

Als N,N-Di-C₁-C₄-Alkylsulfamoyl kommen für (R₅)₀₋₂ und (R₆)₀₋₂ unabhängig voneinander z.B. N,N-Di-Methyl-, N,N-Di-Ethyl-, N,N-Di-Propyl-, N,N-Di-Isopropyl-, N,N-Di-Butyl-, N,N-Di-sek.-Butyl- oder N,N-Di-Isobutylsulfamoyl, vorzugsweise N,N-Di-Methyl- oder N,N-Di-Ethylsulfamoyl und insbesondere N,N-Di-Methylsulfamoyl, in Betracht.

In einer bevorzugten Ausführungsform der erfindungsgemässen Reaktivfarbstoffe bedeutet A gegebenenfalls durch Hydroxy, Sulfo, Carboxy oder Sulfato substituiertes C₁-C₄-Alkyl, gegebenenfalls durch C₁-C₄-Alkyl, C₁-C₄-Alkoxy, C₂-C₄-Alkanoylamino, Hydroxy, Carboxy, Carbamoyl, Sulfo oder Halogen substituiertes Phenyl oder Naphthyl, insbesondere gegebenenfalls durch die genannten Reste substituiertes Phenyl, gegebenenfalls im Phenylring durch C₁-C₄-Alkyl, C₁-C₄-Alkoxy, C₂-C₄-Alkanoylamino, Hydroxy, Carboxy, Sulfo, Carbamoyl, Ureido oder Halogen substituiertes Phenyl-C₁-C₄-Alkylen, oder gegebenenfalls durch C₁-C₄-Alkyl substituiertes C₅-C₇-Cycloalkyl.

Besonders bevorzugt bedeutet A in den erfindungsgemässen Reaktivfarbstoffen gegebenenfalls durch Hydroxy, Sulfo, Carboxy oder Sulfato, vorzugsweise Hydroxy oder Sulfato und insbesondere Sulfato, substituiertes C₁-C₄-Alkyl. Bevorzugt sind die substituierten Alkylreste.

Als aliphatisches Brückenglied ist B, z.B. ein C₂-C₁₂-Alkylenrest, insbesondere ein C₂-C₆-Alkylenrest, welcher durch 1, 2 oder 3 Glieder aus der Gruppe -NH-, -N(CH₃)- oder insbesondere -O- unterbrochen sein kann und unsubstituiert oder durch Hydroxy, Sulfo, Sulfato, Cyano oder Carboxy substituiert ist. Als Substituenten der für B₁ genannten Alkylenreste sind Hydroxy, Sulfo oder Sulfato, insbesondere Hydroxy oder Sulfato, bevorzugt.

Als aliphatische Brückenglieder kommen für B, weiterhin z.B. C₅-C₉-Cycloalkylenreste, insbesondere Cyclohexylenreste, in Betracht. Die genannten Cycloalkylenreste können gegebenenfalls durch C₁-C₄-Alkyl, C₁-C₄-Alkoxy, C₂-C₄-Alkanoylamino, Sulfo, Halogen oder Carboxy, insbesondere durch C₁-C₄-Alkyl, substituiert sein. Als aliphatische Brückenglieder seien für B₁ ferner gegebenenfalls im Cyclohexylenring durch C₁-C₄-Alkyl, insbesondere Methyl, substituierte Methylencyclohexylen-, Ethylencyclohexylen- oder Methylencyclohexylenmethylenreste genannt.

Für den Rest der Formel 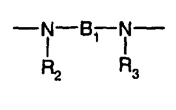 kommt z.B. auch ein Rest der Formel 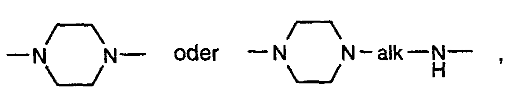 worin alk C₁-C₄-Alkylen, beispielsweise Ethylen, bedeutet, in Betracht.

Als aromatisches Brückenglied ist B₁ z.B. gegebenenfalls durch C₁-C₄-Alkyl, C₁-C₄-Alkoxy, C₂-C₄-Alkanoylamino, Sulfo, Halogen oder Carboxy substituiertes C₁-C₆-Alkylenphenylen, wie beispielsweise Methylenphenylen, C₁-C₄-Alkylenphenylen-C₁-C₄-alkylen, wie beispielsweise Methylenphenylenmethylen oder Phenylen oder ein Rest der Formel 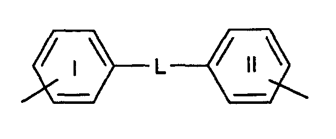 worin die Benzolringe I und II gegebenenfalls durch C₁-C₄-Alkyl, C₁-C₄-Alkoxy, C₂-C₄-Alkanoylamino, Sulfo, Halogen oder Carboxy substituiert sind und L die direkte Bindung oder ein C₂-C₁₀-Alkylenrest ist, welcher durch 1, 2 oder 3 Sauerstoffatome unterbrochen sein kann, oder L ein Brückenglied der Formel -CH=CH-, -N=N-, -NH-, -CO-, -NH-CO-, -NH-SO₂- -NH-CO-NH-, -O-, -S- oder -SO₂- ist. Als aromatisches Brückenglied ist B₁ bevorzugt Phenylen, welches wie oben angegeben substituiert sein kann. Vorzugsweise sind die für B₁ genannten aromatischen Brückenglieder unsubstituiert oder duch Sulfo substituiert.

Bevorzugt ist B₁ ein C₂-C₁₂-Alkylenrest, welcher durch 1, 2 oder 3 Glieder aus der Gruppe - NH-, -N(CH₃)- oder -O- unterbrochen sein kann und unsubstituiert oder durch Hydroxy, Sulfo, Sulfato, Cyano oder Carboxy substituiert ist;
ein gegebenenfalls durch C₁-C₄-Alkyl, C₁-C₄-Alkoxy, C₂-C₄-Alkanoylamino, Sulfo, Halogen oder Carboxy substituierter C₅-C₉-Cycloalkylenrest, C₁-C₆-Alkylenphenylenrest oder Phenylenrest; oder der Rest der Formel 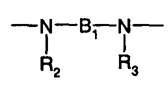 ist ein Rest der Formel

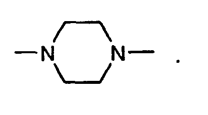

Besonders bevorzugt ist B₁ ein C₂-C₁₂-Alkylenrest, welcher durch 1, 2 oder 3 Glieder -O- unterbrochen sein kann und unsubstituiert oder durch Hydroxy, Sulfo, Sulfato, Cyano oder Carboxy substituiert ist, oder
ein gegebenenfalls durch C₁-C₄-Alkyl, C₁-C₄-Alkoxy, C₂-C₄-Alkanoylamino, Sulfo, Halogen oder Carboxy substituierter Phenylenrest.

Ganz besonders bevorzugt ist B, ein C₂-C₁₂-Alkylenrest, insbesondere ein C₂-C₆-Alkylenrest, wie z.B. 1,2-Ethylen, 1,3-Propylen, 1,2-Propylen, 1,4-Butylen, 1,3-Butylen, 1,5-Pentylen, 3,5-Pentylen, 1,6-Hexylen, 2,5-Hexylen, 4,6-Hexylen oder die Reste der Formel 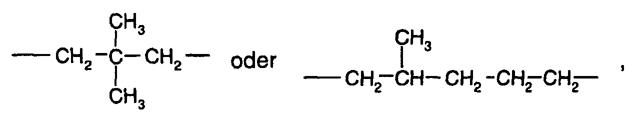 welcher durch 1, 2 oder 3 Glieder -O- unterbrochen sein kann und unsubstituiert oder durch Hydroxy oder Sulfato substituiert ist, und vorzugsweise nicht durch -O- unterbrochen ist.

Ganz besonders wichtig als Brückenglied B₁ sind solche der Formel -CH₂-CH(R₇)- oder -(R₇)CH-CH₂-, worin R₇ C₁-C₄-Alkyl, insbesondere Methyl, bedeutet.

Unter faserreaktiven Resten, die im Rest D₁ enthalten sind, sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen. Die faserreaktiven Reste sind in der Regel direkt oder über ein Brückenglied an den Farbstoffrest gebunden. Geeignete faserreaktive Reste sind beispielsweise solche, die mindestens einen abspaltbaren Substituenten an einem aliphatischen, aromatischen oder heterocyclischen Rest enthalten oder worin die genannten Reste einen zur Reaktion mit dem Fasermaterial geeigneten Rest, wie z.B. einen Vinylrest, enthalten.

Als faserreaktive Reste für D₁ kommen bevorzugt die Reste der Formel (2a), (2b), (2c), (2d), (2e), (2f) oder (2g)

-SO₂-Y (2a),

-NH-CO-(CH₂)ₗ-SO₂-Y (2b),

-CONR₈-(CH₂)ₘ-SO₂-Y (2c),

-NH-CO-CH(Hal)-CH₂-Hal (2d),

-NH-CO-C(Hal)=CH₂ (2e),

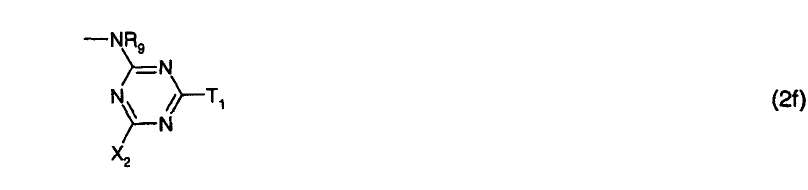

oder 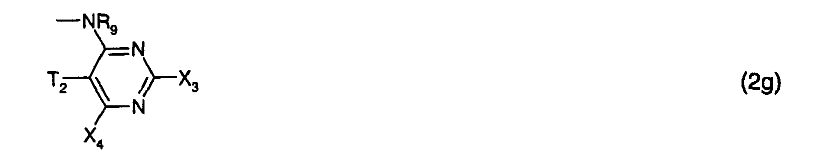 in Betracht, worin
Hal Chlor oder Brom ist;
X₂ Halogen, 3-Carboxypyridin-1-yl oder 3-Carbamoylpyridin-1-yl bedeutet;
T₁ unabhängig die Bedeutung von X₂ hat, für einen nicht-faserreaktiven Substituenten oder für einen faserreaktiven Rest der Formel (3a), (3b), (3c), (3d), (3e) oder (3f) 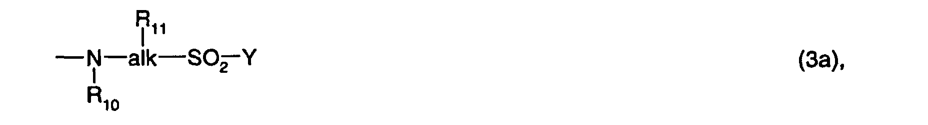 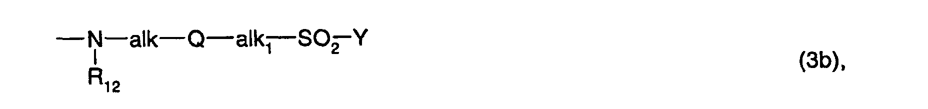 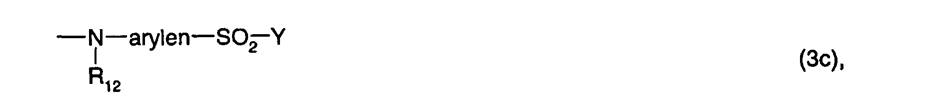 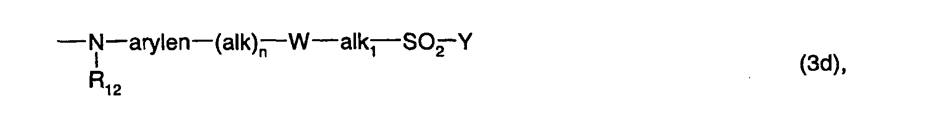 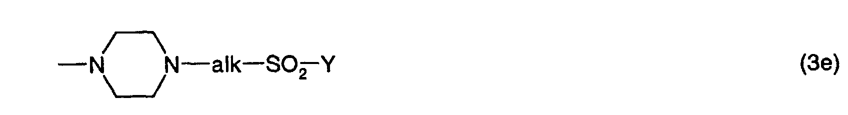 oder 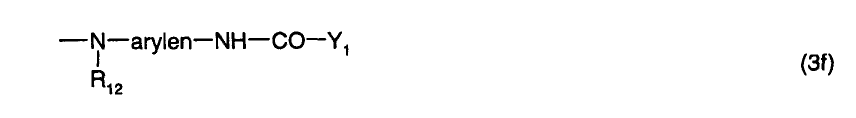 steht, worin
R₈ und R₁₀ unabhängig voneinander je Wasserstoff, gegebenenfalls durch Hydroxy, Sulfo, Sulfato, Carboxy oder Cyano substituiertes C₁-C₄-Alkyl oder einen Rest 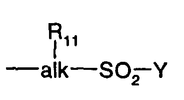 bedeuten,
R₉ und R₁₂ unabhängig voneinander je Wasserstoff oder C₁-C₄-Alkyl sind,
R₁₁ Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Y ist,
alk und alk₁ unabhängig voneinander lineares oder verzweigtes C₁-C₆-Alkylen sind,
arylen einen unsubstituierten oder durch Sulfo, Carboxy, C₁-C₄-Alkyl, C₁-C₄-Alkoxy oder Halogen substituierten Phenylen- oder Naphthylenrest bedeutet,
Q ein Rest -O- oder -NR₁₂-, worin R₁₂ die oben angegebene Bedeutung hat, ist, W für eine Gruppe -SO₂-NR₈-, -CONR₈- oder -NR₈CO- steht, worin R₈ die oben angegebene Bedeutung hat,
Y Vinyl oder einen Rest -CH₂-CH₂-U bedeutet und U eine alkalisch abspaltbare Gruppe ist, Y₁ für eine Gruppe -CH(Hal)-CH₂-Hal oder -C(Hal)=CH₂ steht und Hal Chlor oder Brom bedeutet, und
I und m unabhängig voneinander eine ganze Zahl von 1 bis 6 und n die Zahl 0 oder 1 sind; und
X₃ Halogen oder C₁-C₄-Alkylsulfonyl;
X₄ Halogen oder C₁-C₄-Alkyl und
T₂ Wasserstoff, Cyano oder Halogen bedeuten.

Als alkalisch abspaltbare Gruppe U kommt z.B. -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂ in Betracht. Bevorzugt ist U eine Gruppe der Formel -Cl, -OSO₃H, -SSO₃H, -OCO-CH₃, -OCO-C₆H₅ oder -OPO₃H₂, insbesondere -Cl oder -OSO₃H und besonders bevorzugt -OSO₃H.

Beispiele für geeignete Reste Y sind dementsprechend Vinyl, β-Brom- oder β-Chlorethyl, β-Acetoxyethyl, β-Benzoyloxyethyl, β-Phosphatoethyl, β-Sulfatoethyl und β-Thiosulfatoethyl. Y steht bevorzugt für Vinyl, β-Chlorethyl oder β-Sulfatoethyl und insbesondere für Vinyl oder β-Sulfatoethyl.

R₈ und R₁₀ unabhängig voneinander bedeuten vorzugsweise Wasserstoff oder C₁-C₄-Alkyl, wie Methyl, Ethyl, Propyl, Isopropyl, Butyl, Isobutyl, sek.-Butyl oder tert.-Butyl und besonders bevorzugt Wasserstoff, Methyl oder Ethyl. Insbesondere bevorzugt sind R₈ und R₁₀ Wasserstoff.

R₉ und R₁₂ stehen unabhängig voneinander je bevorzugt für Wasserstoff, Methyl oder Ethyl und besonders bevorzugt für Wasserstoff.

R₁₁ bedeutet bevorzugt Wasserstoff.

l und m stehen unabhängig voneinander bevorzugt für die Zahl 2, 3 oder 4 und besonders bevorzugt für die Zahl 2 oder 3.

Ganz besonders bevorzugt steht I für die Zahl 3 und m für die Zahl 2.

Steht T₁ für einen nicht-reaktiven Substituenten, so kann dieser z.B. Hydroxy; C₁-C₄-Alkoxy; gegebenenfalls durch Hydroxy, Carboxy oder Sulfo substituiertes C₁-C₄-Alkylthio; Amino; ein- oder zweifach durch C₁-C₈-Alkyl substituiertes Amino, wobei das Alkyl gegebenenfalls z.B. durch Sulfo, Sulfato, Hydroxy, Carboxy oder Phenyl, insbesondere durch Sulfo oder Hydroxy, weitersubstituiert ist und gegebenenfalls durch einen Rest -O- unterbrochen ist; Cyclohexylamino; Morpholino; N-C₁-C₄-Alkyl-N-phenylamino oder Phenylamino oder Naphthylamino, wobei das Phenyl oder Naphthyl gegebenenfalls z.B. durch C₁-C₄-Alkyl, C₁-C₄-Alkoxy, Carboxy, Sulfo oder Halogen substituiert ist, bedeuten.

Beispiele für geeignete nicht-reaktive Substituenten T₁ sind Amino, Methylamino, Ethylamino, β-Hydroxyethylamino, N,N-Di-β-Hydroxyethylamino, β-Sulfoethylamino, Cyclohexylamino, Morpholino, o-, m- oder p-Chlorphenylamino, o-, m- oder p-Methylphenylamino, o-, m- oder p-Methoxyphenylamino, o-, m- oder p-Sulfophenylamino, Disulfophenylamino, o-Carboxyphenylamino, 1- oder 2-Naphthylamino, 1-Sulfo-2-naphthylamino, 4,8-Disulfo-2-naphthylamino, N-Ethyl-N-phenylamino, N-Methyl-N-phenylamino, Methoxy, Ethoxy, n- oder iso-Propoxy sowie Hydroxy.

Als nicht-faserreaktiver Rest hat T₁ vorzugsweise die Bedeutung C₁-C₄-Alkoxy, gegebenenfalls durch Hydroxy, Carboxy oder Sulfo substituiertes C₁-C₄-Alkylthio, Hydroxy, Amino, gegebenenfalls im Alkylteil durch Hydroxy, Sulfato oder Sulfo substituiertes N-Monooder N,N-Di-C₁-C₄-Alkylamino, Morpholino, gegebenenfalls im Phenylring durch Sulfo, Carboxy, Chlor, Acetylamino, Methyl oder Methoxy substituiertes Phenylamino oder N-C₁-C₄-Alkyl-N-phenylamino, worin das Alkyl gegebenenfalls durch Hydroxy, Sulfo oder Sulfato substituiert ist, oder gegebenenfalls durch 1 bis 3 Sulfogruppen substituiertes Naphthylamino.

Besonders bevorzugte nicht-faserreaktive Reste T₁ sind Amino, N-Methylamino, N-Ethylamino, Morpholino, Phenylamino, 2-, 3- oder 4-Sulfophenylamino oder N-C₁-C₄-Alkyl-N-phenylamino.

X₂ als Halogen bedeutet z.B. Fluor, Chlor oder Brom und insbesondere Chlor oder Fluor.

T₂, X₃ und X₄ als Halogen bedeuten z.B. Fluor, Chlor oder Brom, insbesondere Chlor oder Fluor.

X₃ als C₁-C₄-Alkylsulfonyl bedeutet z.B. Ethylsulfonyl oder Methylsulfonyl und insbesondere Methylsulfonyl.

X₄ als C₁-C₄-Alkyl bedeutet z.B. Methyl , Ethyl, n- oder iso-Propyl, n-, iso oder tert.-Butyl und insbesondere Methyl.

X₃ und X₄ sind bevorzugt unabhängig voneinander Chlor oder Fluor.

T₂ bedeutet bevorzugt Cyano oder Chlor.

Hal bedeutet vorzugsweise Brom.

Bei alk und alk₁ handelt es sich unabhängig voneinander z.B. um einen Methylen-, Ethylen-, 1,3-Propylen-, 1,4-Butylen-, 1,5-Pentylen- oder 1,6-Hexylenrest oder deren verzweigte Isomere.

Bevorzugt stehen alk und alk₁ unabhängig voneinander je für einen C₁-C₄-Alkylenrest und insbesondere bevorzugt für einen Ethylenrest oder Propylenrest.

Arylen ist vorzugsweise ein unsubstituierter oder z.B. durch Sulfo, Methyl, Methoxy oder Carboxy substituierter 1,3- oder 1,4-Phenylenrest und besonders bevorzugt ein unsubstituierter 1,3- oder 1,4-Phenylenrest.

Q steht vorzugsweise für -NH- oder -O- und insbesondere bevorzugt für -O-.

W bedeutet bevorzugt eine Gruppe der Formel -CONH- oder -NHCO-, insbesondere eine Gruppe der Formel -CONH-,
n steht bevorzugt für die Zahl 0.

Die Reaktivreste der Formeln (3a) bis (3f) sind vorzugsweise solche, worin W eine Gruppe der Formel -CONH-, R₁₀, R₁₁ und R₁₂ je Wasserstoff, Q der Rest -O- oder -NH- , alk und alk₁ unabhängig voneinander je Ethylen oder Propylen, arylen unsubstituiertes oder durch Methyl, Methoxy, Carboxy oder Sulfo substituiertes Phenylen, Y Vinyl, β-Chlorethyl oder β-Sulfatoethyl, Y₁ -CHBr-CH₂Br oder -CBr=CH₂ und n die Zahl 0 bedeuten.

Als faserreaktive Reste für D, kommen besonders bevorzugt Reste der Formel (2a), (2c), (2d), (2e) oder (2f) in Betracht, worin Y Vinyl, β-Chlorethyl oder β-Sulfatoethyl, Hal Brom, R₈ und R₉ Wasserstoff, m die Zahl 2 oder 3, X₂ Chlor oder Fluor, T₁ C₁-C₄-Alkoxy, gegebenenfalls durch Hydroxy, Carboxy oder Sulfo substituiertes C₁-C₄-Alkylthio, Hydroxy, Amino, gegebenenfalls im Alkylteil durch Hydroxy, Sulfato oder Sulfo substituiertes N-Mono- oder N,N-Di-C₁-C₄-Alkylamino, Morpholino, gegebenenfalls im Phenylring durch Sulfo, Carboxy, Chlor, Acetylamino, Methyl oder Methoxy substituiertes Phenylamino oder N-C₁-C₄-Alkyl-N-phenylamino, worin das Alkyl gegebenenfalls durch Hydroxy, Sulfo oder Sulfato substituiert ist, gegebenenfalls durch 1 bis 3 Sulfogruppen substituiertes Naphthylamino, oder für einen faserreaktiven Rest der Formel (3a'), (3b'), (3c'), (3d') oder (3f')

-NH-(CH₂)₂₋₃-SO₂Y (3a'),

-NH-(CH₂)₂₋₃-O-(CH₂)₂₋₃-SO₂Y (3b'),

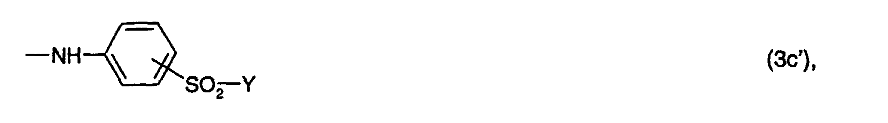

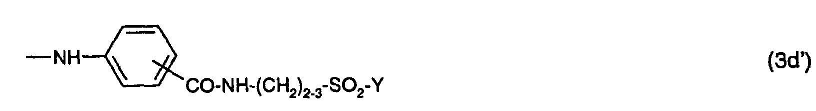

oder 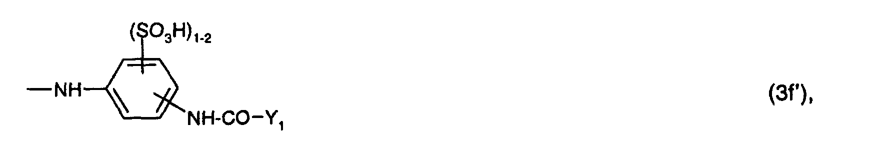 insbesondere (3c') oder (3d'), steht, worin
Y die oben angegebene Bedeutung hat, und
Y₁ für eine Gruppe -CH(Br)-CH₂-Br oder -C(Br)=CH₂ steht.

Im Fall der Reste der Formeln (3a') und (3b') ist Y bevorzugt β-Chlorethyl. Im Fall der Reste der Formeln (3c') und (3d') ist Y bevorzugt Vinyl oder β-Sulfatoethyl.

Als nicht-faserreaktive Substituenten für D₁ als Phenyl oder Naphthyl kommen
beispielsweise
C₁-C₄-Alkyl, worunter Methyl, Ethyl, n- oder iso-Propyl, n-, iso-, sec.- oder tert.-Butyl zu verstehen ist; C₁-C₄-Alkoxy, worunter Methoxy, Ethoxy, n- oder iso-Propoxy oder n-, iso-, sec.- oder tert.-Butoxy zu verstehen ist; Hydroxy-C₁-C₄-Alkoxy; Phenoxy; gegebenenfalls im Alkylteil durch Hydroxy oder C₁-C₄-Alkoxy substituiertes C₂-C₆-Alkanoylamino, wie z.B. Acetylamino, Hydroxyacetylamino, Methoxyacetylamino oder Propionylamino;
gegebenenfalls im Phenylteil durch Hydroxy, Sulfo, Halogen, C₁-C₄-Alkyl oder C₁-C₄-Alkoxy substituiertes Benzoylamino; gegebenenfalls im Alkylteil durch Hydroxy, C₁-C₄-Alkyl oder C₁-C₄-Alkoxy substituiertes C₁-C₆-Alkoxycarbonylamino; gegebenenfalls im Phenylteil durch Hydroxy, C₁-C₄-Alkyl oder C₁-C₄-Alkoxy substituiertes Phenoxycarbonylamino; Amino; gegebenenfalls im Alkylteil durch Hydroxy, C₁-C₄-Alkoxy, Carboxy, Cyano, Halogen, Sulfo, Sulfato, Phenyl oder Sulfophenyl substituiertes N-C₁-C₄-Alkyl- oder N,N-Di-C₁-C₄-Alkylamino, wie z.B. Methylamino, Aethylamino, N,N-Dimethylamino, N,N-Diethylamino, β-Cyanoethylamino, β-Hydroxyethylamino, N,N-Di-β-Hydroxyethylamino, β-Sulfoethylamino, γ-Sulfo-n-propylamino, β-Sulfatoethylamino, N-Ethyl-N-(3-Sulfobenzyl)-amino, N-(β-Sulfoethyl)-N-benzylamino; Cyclohexylamino; gegebenenfalls im Phenylteil durch Nitro, C₁-C₄-Alkyl, C₁-C₄-Alkoxy, Carboxy, Halogen oder Sulfo substituiertes N-Phenylamino oder N-C₁-C₄-Alkyl-N-phenylamino; C₁-C₄-Alkoxycarbonyl, z.B. Methoxy- oder Ethoxycarbonyl; Trifluoromethyl; Nitro; Cyano; Halogen, worunter generell z.B. Fluor, Brom oder insbesondere Chlor zu verstehen ist; Ureido; Hydroxy; Carboxy; Sulfo; Sulfomethyl; Carbamoyl; Carbamido; Sulfamoyl; gegebenenfalls im Phenylteil durch Sulfo oder Carboxy substituiertes N-Phenylsulfamoyl oder N-C₁-C₄-Alkyl-N-phenylsulfamoyl; C₁-C₄-Alkylsulfonyl wie z.B. Methyl- oder Ethylsulfonyl in Betracht.

Bei Azofarbstoffen übliche Substituenten für D*, M und K sind z.B. die oben für D₁ als Phenyl oder Naphthyl genannten nicht-faserreaktiven Substituenten und vorzugsweise gegebenenfalls durch Hydroxy, Sulfo oder Sulfato weitersubstituiertes C₁-C₄-Alkyl oder C₁-C₄-Alkoxy, Halogen, Carboxy, Sulfo, Nitro, Cyan, Trifluormethyl, Sulfamoyl, Carbamoyl, Amino, Ureido, Hydroxy, Sulfomethyl, C₂-C₄-Alkanoylamino, C₁-C₄-Alkylsulfonylamino gegebenenfalls im Phenylring durch C₁-C₄-Alkyl, C₁-C₄-Alkoxy, Halogen oder Sulfo substituiertes Benzoylamino oder gegebenenfalls durch C₁-C₄-Alkyl, C₁-C₄-Alkoxy, Halogen, Carboxy oder Sulfo substituiertes Phenyl.

Bevorzugte Mono- oder Disazoreste D₁ der Formel (4) oder (5) sind die Reste der Formel (6a), (6b), (6c), (6d), (6e), (6f), (6g), (6h), (6i), (6j), (6k), (61), (6m), (6n) oder (6o) 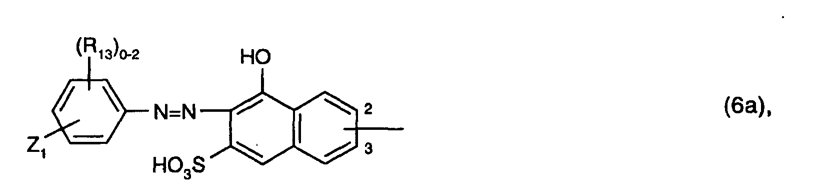 worin (R₁₃)₀₋₂ für 0 bis 2 gleiche oder verschiedene Substituenten aus der Gruppe C₁-C₄-Alkyl, C₁-C₄-Alkoxy, Halogen, Carboxy und Sulfo steht und Z₁ einen Rest der Formel (2a), (2b), (2c), (2d), (2e), (2f) oder (2g) bedeutet, wobei für die Reste der Formeln (2a), (2b), (2c), (2d), (2e), (2f) und (2g) die oben genannten Bedeutungen und Bevorzugungen gelten, 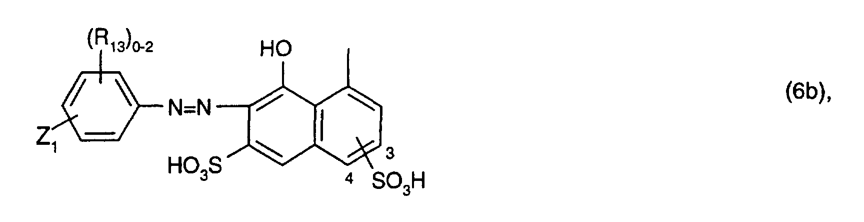 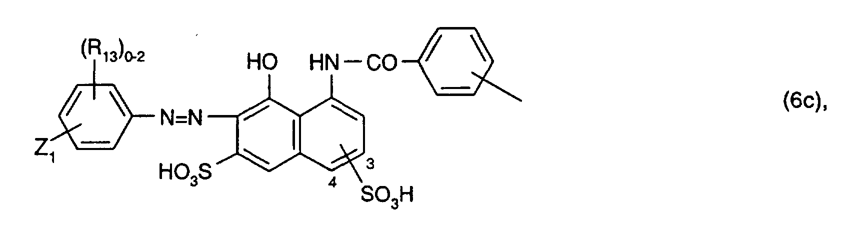 worin (R₁₃)₀₋₂ die zuvor angegebene Bedeutung hat, 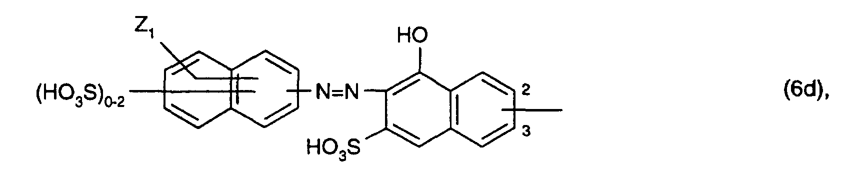 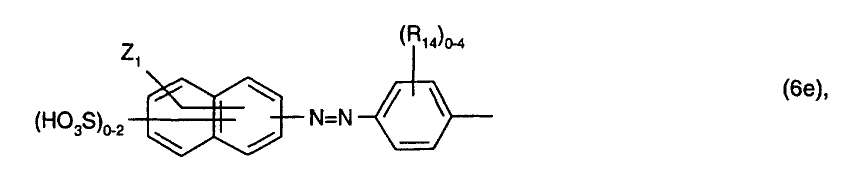 worin (R₁₄)₀₋₄ für 0 bis 4 gleiche oder verschiedene Substituenten aus der Gruppe Halogen, Nitro, Cyan, Trifluormethyl, Sulfamoyl, Carbamoyl, C₁-C₄-Alkyl, gegebenenfalls durch Hydroxy oder C₁-C₄-Alkoxy substituiertes C₁-C₄-Alkoxy, Amino, C₂-C₄-Alkanoylamino, Ureido, Hydroxy, Carboxy, Sulfomethyl, C₁-C₄-Alkylsulfonylamino und Sulfo steht und Z₁ die oben angegebene Bedeutung hat, 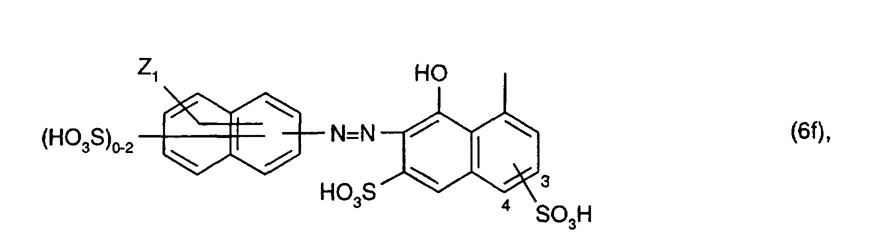 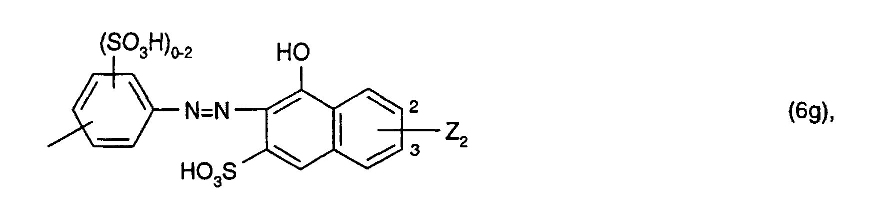 worin Z₁ die oben angegebene Bedeutung hat und Z₂ einem Rest der Formel (2b), (2d), (2e), (2f) oder (2g) entspricht, wobei für die Reste der Formeln (2b), (2d), (2e), (2f) und (2g) die oben genannten Bedeutungen und Bevorzugungen gelten, 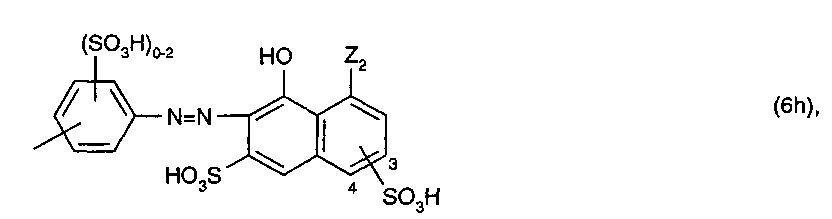 worin Z₂ die zuvor angegebene Bedeutung hat, 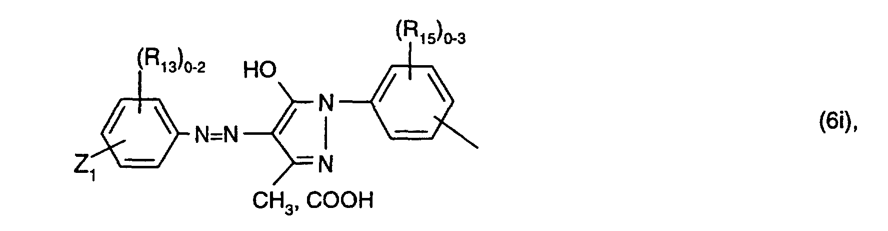 worin (R₁₃)₀₋₂ die oben angegebene Bedeutung hat, (R₁₅)₀₋₃ für 0 bis 3 gleiche oder verschiedene Substituenten aus der Gruppe C₁-C₄-Alkyl, C₁-C₄-Alkoxy, Halogen, Carboxy und Sulfo steht, und Z, die oben angegebene Bedeutung hat, 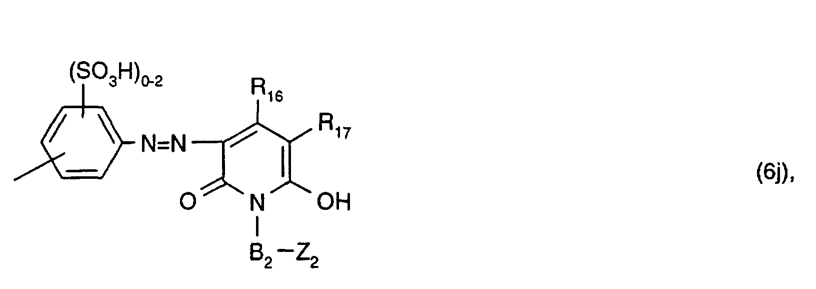 worin B₂ gegebenenfalls substituiertes C₂-C₆-Alkylen, R₁₆ Wasserstoff, C₁-C₄-Alkyl oder Phenyl, und R₁₇ Wasserstoff, Cyano, Carbamoyl oder Sulfomethyl ist, und Z₂ die oben angegebene Bedeutung hat, 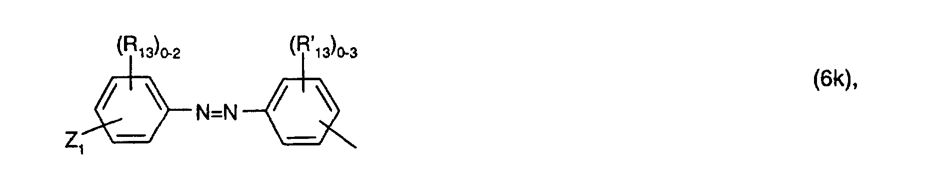 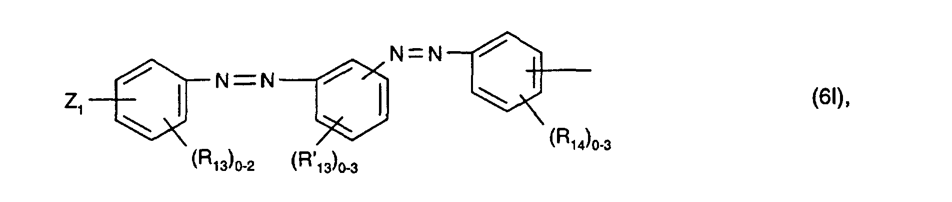 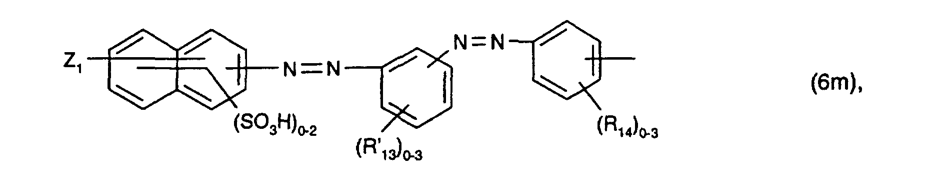 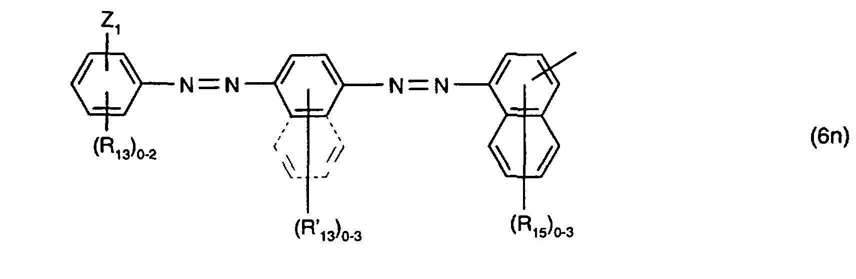 oder 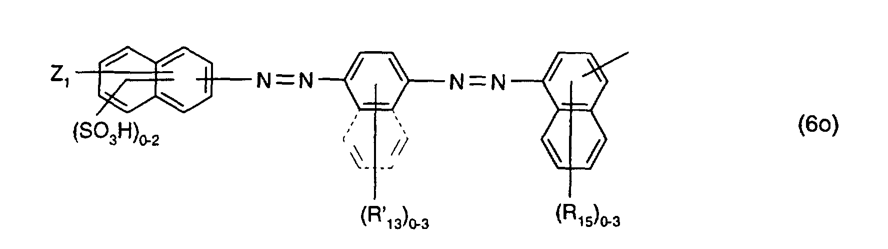 worin
(R₁₃)₀₋₂, (R₁₄)₀₋₃, (R₁₅)₀₋₃ und Z₁ jeweils die oben angegebene Bedeutung haben und (R₁₃')₀₋₃ für 0 bis 3 gleiche oder verschiedene Substituenten aus der Gruppe C₁-C₄-Alkyl, C₁-C₄-Alkoxy, Halogen, Carboxy und Sulfo steht.

Die Zahlen an den Naphthylringen der Reste der Formeln (6a), (6b), (6c), (6d), (6f), (6g) oder (6h) kennzeichnen die möglichen Bindungspositionen des entsprechenden Substituenten.

Als C₁-C₄-Alkylsulfonylamino kommt für (R₁₄)₀₋₄ z.B. Methyl-, Ethyl-, n-Propyl-, Isopropyl-, n-Butyl-, sek.-Butyl-, tert.-Butyl- oder Isobutylsulfonylamino, vorzugsweise Methyl- oder Ethylsulfonylamino und insbesondere Methylsulfonylamino, in Betracht.

Als C₂-C₆-Alkylen kommen für B₂ geradkettige oder verzweigte Alkylengruppen in Betracht, wie z.B. 1,2-Ethylen, 1,3-Propylen, 1,2-Propylen, 1,4-Butylen, 1,3-Butylen, 1,5-Pentylen, 3,5-Pentylen, 1,6-Hexylen, 2,5-Hexylen, 4,6-Hexylen oder die Reste der Formel 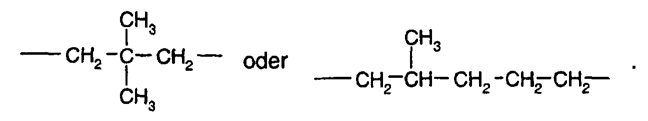 Die genannten Reste B₂ sind unsubstituiert oder z.B. durch Hydroxy, Sulfo, Carboxy oder Sulfato, vorzugsweise Hydroxy oder Sulfato und insbesondere Sulfato, substituiert und vorzugsweise unsubstituiert.

Bevorzugt bedeutet B₂ C₂-C₄-Alkylen und insbesondere 1,2-Ethylen.

Besonders bevorzugt als Mono- oder Disazorest D₁ ist der Rest der Formel (6j), worin B₂, R₁₆, R₁₇ und Z₂ die oben angegebenen Bedeutungen und Bevorzugungen haben.

In einer besonderen Ausführungsform der vorliegenden Erfindung bedeutet D₁ als Rest der Benzol-, Naphthalin- oder heterocyclischen Reihe einen Mono- oder Disazorest der Formel (4) oder (5), wobei für die Reste der Formel (4) oder (5) die oben angegebenen Bedeutungen und Bevorzugungen gelten.

In einer bevorzugten Ausführungsform der erfindungsgemässen Reaktivfarbstoffe bedeutet D₁ einen Rest der Formel (7) oder (6j') 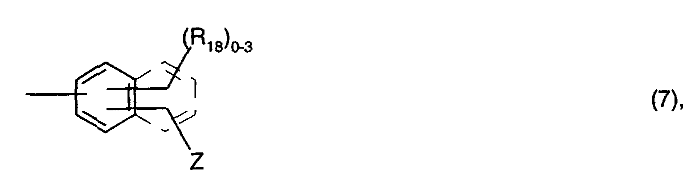 worin
(R₁₈)₀₋₃ für 0 bis 3 gleiche oder voneinander verschiedene Substituenten ausgewählt aus der Gruppe Halogen, C₁-C₄-Alkyl, C₁-C₄-Alkoxy, Carboxy, Nitro und Sulfo steht und
Z für einen Rest der Formel (2a), (2c), (2d), (2e) oder (2f) steht, worin
R₈ und R₉ Wasserstoff sind,
Hal Brom bedeutet,
Y Vinyl, β-Chlorethyl oder β-Sulfatoethyl ist,
T₁ für C₁-C₄-Alkoxy, gegebenenfalls durch Hydroxy, Carboxy oder Sulfo substituiertes C₁-C₄-Alkylthio, Hydroxy, Amino, gegebenenfalls im Alkylteil durch Hydroxy, Sulfato oder Sulfo substituiertes N-Mono- oder N,N-Di-C₁-C₄-Alkylamino, Morpholino, gegebenenfalls im Phenylring durch Sulfo, Carboxy, Chlor, Acetylamino, Methyl oder Methoxy substituiertes Phenylamino oder N-C₁-C₄-Alkyl-N-phenylamino, worin das Alkyl gegebenenfalls durch Hydroxy, Sulfo oder Sulfato substituiert ist, gegebenenfalls durch 1 bis 3 Sulfogruppen substituiertes Naphthylamino, oder für einen faserreaktiven Rest der Formel (3c') oder (3d') 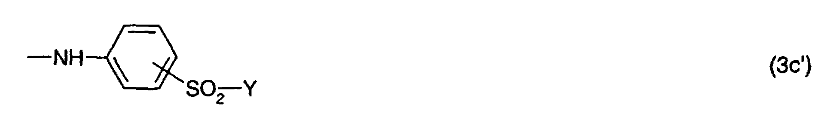 oder 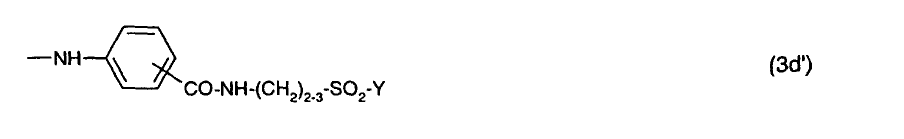 steht und Y die oben angegebene Bedeutung hat,
X₂ Chlor oder Fluor ist, und
m die Zahl 2 oder 3, insbesondere 2, bedeutet; oder 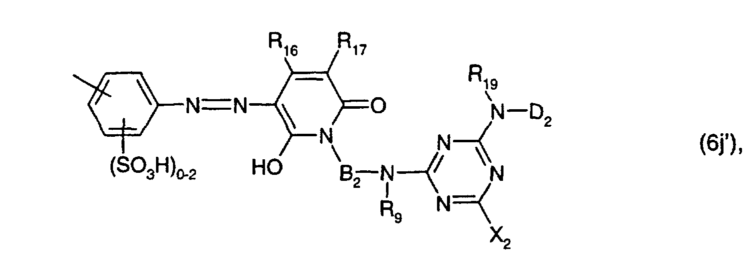 worin
B₂ gegebenenfalls durch Hydroxy, Sulfo, Carboxy oder Sulfato, vorzugsweise Hydroxy oder Sulfato substituiertes C₂-C₆-Alkylen ist,
D₂ einen Rest der Formel (7) bedeutet, worin (R₁₈)₀₋₃ die oben angegebenen Bedeutungen hat und Z ein Rest der Formel (2a), (2c), (2d) oder (2e), insbesondere (2a), ist, worin R₈, Hal, Y und m die oben angegebenen Bedeutungen haben,
R₁₆ Wasserstoff, C₁-C₄-Alkyl oder Phenyl ist,
R₁₇ Wasserstoff, Cyano, Carbamoyl oder Sulfomethyl bedeutet,
R₁₉ Wasserstoff Methyl oder Ethyl, insbesondere Wasserstoff, ist, und
R₉ und X₂ die oben angegebenen Bedeutungen haben.

In einer besonders bevorzugten Ausführungsform der erfindungsgemässen Reaktivfarbstoffe bedeutet D₁ einen Rest der Formel (7a), (7b), (7c), (7d) oder (6j") 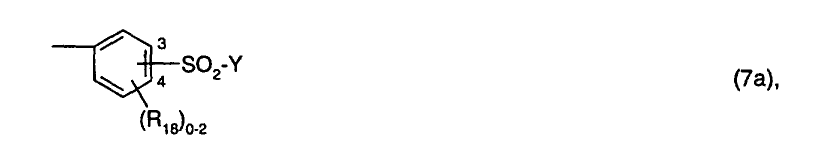 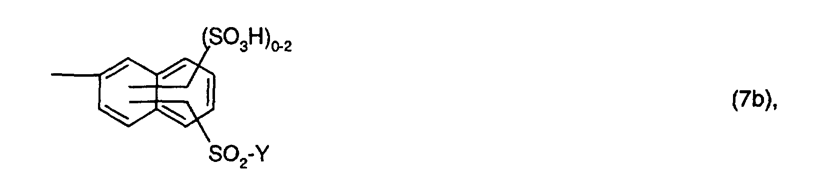 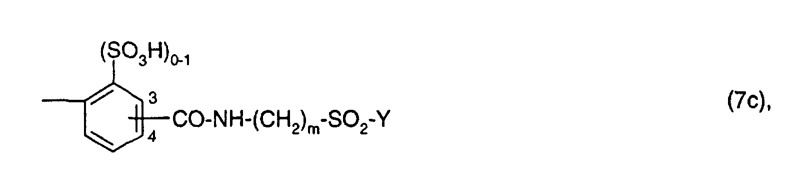 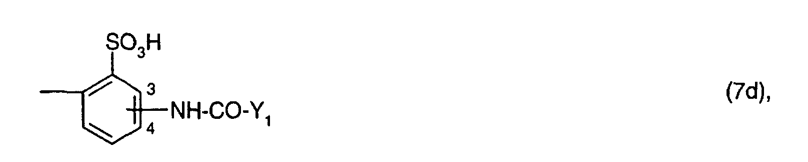 worin
(R₁₈)₀₋₂ für 0 bis 2 gleiche oder voneinander verschiedene Substituenten ausgewählt aus der Gruppe Halogen, C₁-C₄-Alkyl, C₁-C₄-Alkoxy und Sulfo, insbesondere Methyl, Methoxy und Sulfo, steht,
Y Vinyl, β-Chlorethyl oder β-Sulfatoethyl, insbesondere Vinyl oder β-Sulfatoethyl, bedeutet,
Y₁ eine Gruppe -CH(Br)-CH₂-Br oder -C(Br)=CH₂ ist und
m die Zahl 2 oder 3, insbesondere 2, ist; oder 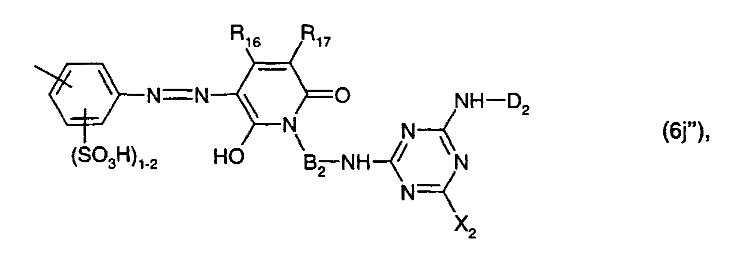 worin
B₂ C₂-C₄-Alkylen, insbesondere Ethylen, ist,
D₂ einen Rest der Formel (7a), (7b), (7c) oder (7d), insbesondere (7a), bedeutet, worin für (R₁₈)₀₋₂, Y, Y₁ und m die oben angegebenen Bedeutungen und Bevorzugungen gelten,
R₁₆ Methyl oder Ethyl, insbesondere Methyl, ist,
R₁₇ Carbamoyl oder Sulfomethyl, insbesondere Carbamoyl, bedeutet und
X₂ Fluor oder Chlor ist.

In einer ganz besonders bevorzugten Ausführungsform der erfindungsgemässen Reaktivfarbstoffe bedeutet D₁ einen Rest der Formel (7a), (7b), (7c) oder (6j"), insbesondere (7a), (7b) oder (6j"), worin für (R₁₈)₀₋₂, Y, m, B₂, D₂, R₁₆, R₁₇ und X₂ die oben angegebenen Bedeutungen und Bevorzugungen gelten.

V₁ und V₂ unabhängig voneinander als Phenyl sind unsubstituiert oder substituiert, z.B. durch C₁-C₄-Alkyl, wie beispielsweise Methyl oder Ethyl; C₁-C₄-Alkoxy, wie beispielsweise Methoxy oder Ethoxy; C₂-C₄-Alkanoylamino; wie beispielsweise Acetylamino oder Propionylamino; Carboxy; Carbamoyl; Sulfo oder Halogen, wie beispielsweise Chlor oder Brom.

V₁ und V₂ unabhängig voneinander als Phenoxy sind unsubstituiert oder im Phenylring substituiert, z.B. durch C₁-C₄-Alkyl, wie beispielsweise Methyl oder Ethyl; C₁-C₄-Alkoxy, wie beispielsweise Methoxy oder Ethoxy; C₂-C₄-Alkanoylamino; wie beispielsweise Acetylamino oder Propionylamino; Carboxy; Carbamoyl; Sulfo oder Halogen, wie beispielsweise Chlor oder Brom.

V₁ und V₂ unabhängig voneinander als C₂-C₆-Alkanoylamino, insbesondere C₂-C₄-Alkanoylamino ist unsubstituiert oder im Alkylteil substituiert z.B. durch Sulfo, Sulfato, Carboxy, Hydroxy oder C₁-C₄-Alkoxy, wie beispielsweise Methoxy oder Ethoxy. Beispielhaft seien Acetylamino, Hydroxyacetylamino, Methoxyacetylamino oder Propionylamino, insbesondere Acetylamino, genannt.

V₁ und V₂ unabhängig voneinander als Benzoylamino ist unsubstituiert oder im Phenylteil substituiert z.B. durch Hydroxy; Sulfo; Carboxy; Carbamoyl; Halogen, wie beispielsweise Chlor oder Brom; C₁-C₄-Alkyl, wie beispielsweise Methyl oder Ethyl; oder C₁-C₄-Alkoxy, wie beispielsweise Methoxy oder Ethoxy.

Bevorzugt bedeuten V₁ und V₂ Chlor, Brom, Acetylamino oder Propionylamino und insbesondere Chlor.

V₁ und V₂ sind identisch oder nicht identisch und vorzugsweise identisch.

X₁ als Halogen bedeutet z.B. Fluor, Chlor oder Brom und insbesondere Chlor oder Fluor.

X₁ als C₁-C₄-Alkylthio bedeutet beispielsweise Methylthio, Ethylthio, n-Propylthio, Isopropylthio oder n-Butylthio, insbesondere Ethylthio oder n-Propylthio. Die genannten Reste sind unsubstituiert oder im Alkylteil durch Hydroxy, Carboxy oder Sulfo substituiert. Bevorzugt sind die substituierten Reste.

X₁ als gegebenenfalls substituiertes Amino bedeutet Amino, welches unsubstituiert oder am N-Atom substituiert ist, wie z.B. folgende Reste:
N-Mono- oder N,N-Di-C₁-C₄-Alkylamino, welches sowohl die unsubstituierten wie auch die im Alkylteil z.B. durch C₁-C₄-Alkoxy, Hydroxy, Sulfo oder Sulfato substituierten Reste umfasst; bevorzugt sind die im Alkylteil substituierten Reste;
C₅-C₇-Cycloalkylamino, welches sowohl die unsubstituierten wie auch die im Cycloalkylring z.B. durch C₁-C₄-Alkyl, insbesondere Methyl, substituierten Reste umfasst; bevorzugt als solche Reste sind die entsprechenden Cyclohexylreste;
Phenylamino oder N-C₁-C₄-Alkyl-N-phenylamino, welches sowohl die unsubstituierten wie auch die im Phenylring z.B. durch C₁-C₄-Alkyl, C₁-C₄-Alkoxy, Halogen, Carboxy oder Sulfo substituierten Reste umfasst; bevorzugt sind diese Reste im Phenylring unsubstituiert oder durch Sulfo substituiert.

Als gegebenenfalls weitere Heteroatome enthaltende N-Heterocyclen kommt für X₁ z.B. Morpholino oder Piperidin-1-yl in Betracht.

Bevorzugt bedeutet X₁ Fluor oder Chlor.

R₁, R₂, R₃ und R₄ bedeuten bevorzugt unabhängig voneinander Wasserstoff oder C₁-C₄-Alkyl und insbesondere Wasserstoff.

R₅ und R₆ bedeuten vorzugsweise Wasserstoff.

Bevorzugt sind die erfindungsgemässen Reaktivfarbstoffe, dadurch gekennzeichnet, dass sie der Formel (1a) 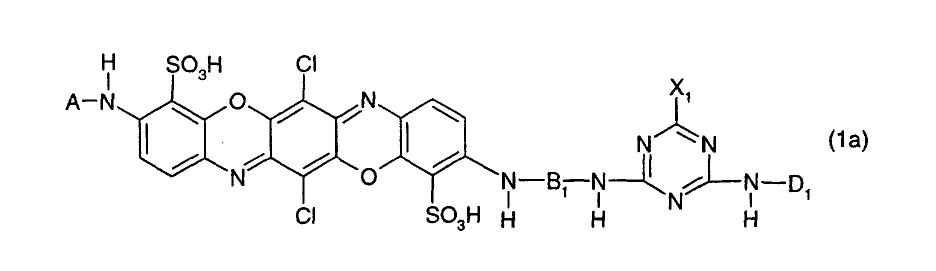 entsprechen, worin A, B₁, D₁ und X₁ die oben angegebenen Bedeutungen und Bevorzugungen haben.

Besonderes bevorzugt sind die erfindungsgemässen Reaktivfarbstoffe der Formel (1a), dadurch gekennzeichnet, dass
A gegebenenfalls durch Hydroxy, Sulfo, Carboxy oder Sulfato substituiertes C₁-C₄-Alkyl, gegebenenfalls durch C₁-C₄-Alkyl, C₁-C₄-Alkoxy, C₂-C₄-Alkanoylamino, Hydroxy, Carboxy, Carbamoyl, Sulfo oder Halogen substituiertes Phenyl, gegebenenfalls im Phenylring durch C₁-C₄-Alkyl, C₁-C₄-Alkoxy, C₂-C₄-Alkanoylamino, Hydroxy, Carboxy, Sulfo, Carbamoyl, Ureido oder Halogen substituiertes Phenyl-C₁-C₄-Alkylen oder gegebenenfalls durch C₁-C₄-Alkyl substituiertes C₅-C₇-Cycloalkyl und vorzugsweise gegebenenfalls durch Hydroxy, Sulfo, Carboxy oder Sulfato substituiertes C₁-C₄-Alkyl, bedeutet;
B₁ ein C₂-C₁₂-Alkylenrest, welcher durch 1, 2 oder 3 Glieder -O- unterbrochen sein kann und unsubstituiert oder durch Hydroxy, Sulfo, Sulfato, Cyano oder Carboxy substituiert ist, oder gegebenenfalls durch C₁-C₄-Alkyl, C₁-C₄-Alkoxy, C₂-C₄-Alkanoylamino, Sulfo, Halogen oder Carboxy substituiertes Phenylen, vorzugsweise ein C₂-C₁₂-Alkylenrest, insbesondere ein C₂-C₆-Alkylenrest, welcher durch 1, 2 oder 3 Glieder -O- unterbrochen sein kann und unsubstituiert oder durch Hydroxy oder Sulfato substituiert ist, und ganz besonders bevorzugt ein Rest der Formel -CH₂-CH(R₇)- oder -(R₇)CH-CH₂-, worin R₇ C₁-C₄-Alkyl bedeutet, ist;
X₁ Fluor oder Chlor ist; und
D₁ einem Rest der Formel (7) oder (6j'), worin für (R₁₈)₀₋₃, Z, B₂, D₂, R₉, R₁₆, R₁₇,R₁₉ und
X₂ die oben angegebenen Bedeutungen und Bevorzugungen gelten, insbesondere der Formel (7a), (7b), (7c), (7d) oder (6j"), entspricht, worin für (R₁₈)₀₋₂, Y, Y₁, m, B₂, D₂, R₁₆, R₁₇ und X₂ die oben angegebenen Bedeutungen und Bevorzugungen gelten.

Ganz besonderes bevorzugt sind die erfindungsgemässen Reaktivfarbstoffe der Formel (1a), dadurch gekennzeichnet, dass
A durch Hydroxy oder Sulfato substituiertes C₁-C₄-Alkyl, bedeutet,
B₁ ein Rest der Formel -CH₂-CH(CH₃)- oder -(CH₃)CH-CH₂- ist,
X₁ Fluor oder Chlor bedeutet,
D₁ einem Rest der Formel (7a), (7b), (7c) oder (6j"), insbesondere (7a), (7b) oder (6j"), entspricht, worin für (R₁₈)₀₋₂, Y, m, B₂, D₂, R₁₆, R₁₇ und X₂ die oben angegebenen Bedeutungen und Bevorzugungen gelten.

Gegenstand der vorliegenden Erfindung ist ferner ein Verfahren zur Herstellung der erfindungsgemässen Reaktivfarbstoffe, dadurch gekennzeichnet, dass man eine Verbindung der Formel (8) 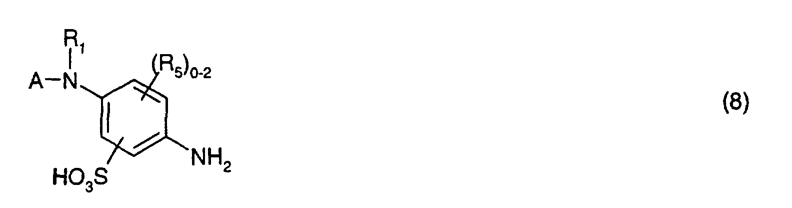 mit einer Verbindung der Formel (9) 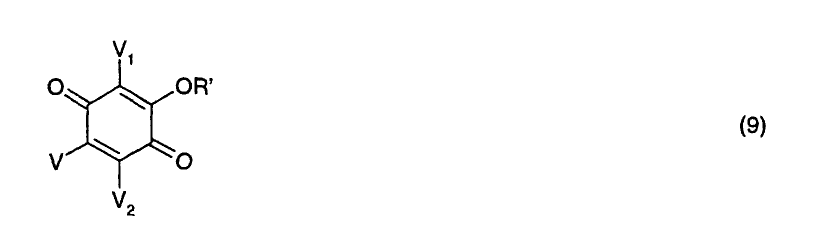 zu einer Verbindung der Formel (10) 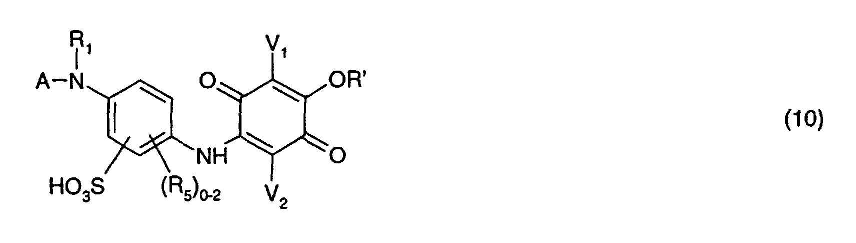 umsetzt, die Verbindung der Formel (10) mit einer Verbindung der Formel (11) 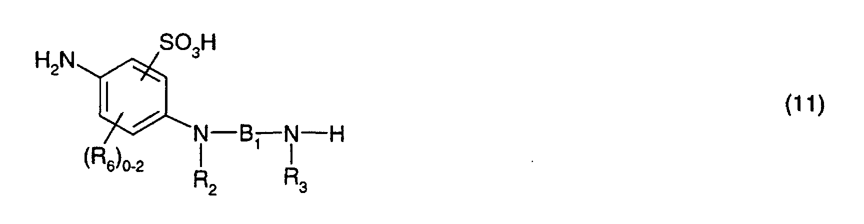 zu einer Verbindung der Formel (12) 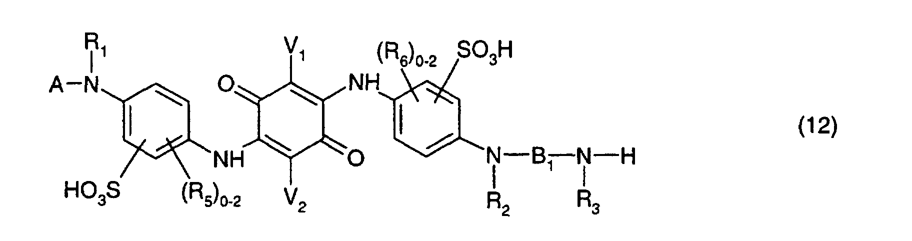 umsetzt, die Verbindung der Formel (12) zu einer Verbindung der Formel (13) 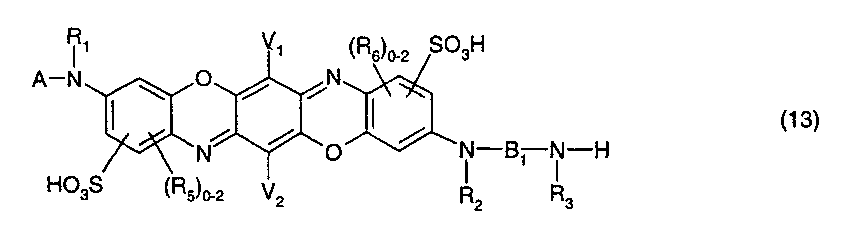 cyclisiert und die Verbindung der Formel (13) in beliebiger Reihenfolge mit 2,4,6-Trihalogen-s-triazin und einer Verbindung der Formel (14) 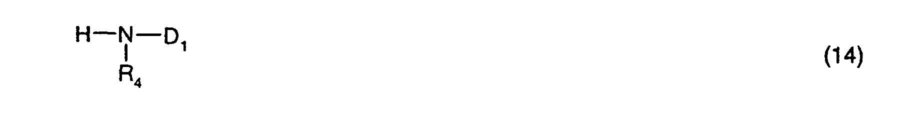 zu einer Verbindung der Formel (15) 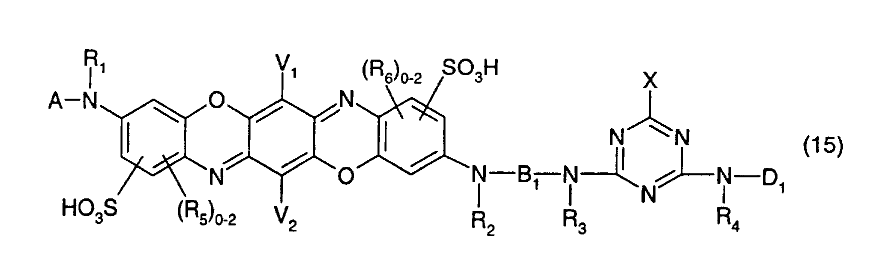 kondensiert, wobei für R₁, R₂, R₃, R₄, (R₅)₀₋₂, (R₆)₀₋₂, A, B₁, D₁, V₁ und V₂ die oben angegebenen Bedeutungen gelten, R' C₁-C₄-Alkyl, V Chlor oder Brom, insbesondere Chlor, und X Halogen und insbesondere Fluor oder Chlor bedeuten.

Das Halogenatom X in der Verbindung der Formel (15) lässt sich austauschen, indem man die Verbindung der Formel (15) mit einer Verbindung der Formel (16)

X₁-H (16),

worin X₁ die oben angegebenen Bedeutungen ausser Halogen hat, kondensiert.

Kondensationsreaktionen von aminogruppenhaltigen Farbstoffen mit 2,4,6-Trihalogen-s-triazin sind bekannt und z.B. in der EP-A-0 260 227 und der US-A-4 841 049 beschrieben.

Die Verbindungen der Formel (8), (9), (11) und (14) sind bekannt oder können in an sich bekannter Weise erhalten werden.

Das Endprodukt kann gegebenfalls noch einer Umwandlungsreaktion unterzogen werden. Eine solche Umwandlungsreaktion ist beispielsweise die Überführung einer in D₁ enthaltenen, vinylierbaren Reaktivgruppe in ihre Vinylform durch Behandeln mit verdünnter Natronlauge, wie z.B. die Überführung der β-Sulfatoethylsulfonyl- oder β-Chlorethylsulfonylgruppe in den Vinylsulfonylrest. Solche Reaktionen sind an sich bekannt.

Die erfindungsgemässen Verbindungen der Formel (1) eignen sich als Farbstoffe zum Färben und Bedrucken der verschiedensten Materialien, wie hydroxylgruppenhaltigen oder stickstoffhaltigen Fasermaterialien. Als Beispiele für stickstoffhaltige Fasermaterialien seien Seide, Leder, Wolle, Polyamidfasem und Polyurethane genannt. Die erfindungsgemässen Farbstoffe sind insbesondere zum Färben und Bedrucken von cellulosehaltigen Fasermaterialien aller Art geeignet. Solche cellulosehaltige Fasermaterialien sind beispielsweise die natürlichen Cellulosefasern, wie Baumwolle, Leinen und Hanf, sowie Zellstoff und regenerierte Cellulose, vorzugsweise Baumwolle. Die erfindungsgemässen Farbstoffe sind auch zum Färben oder Bedrucken von cellulosehaltigen Mischgeweben, z.B. von Gemischen aus Baumwolle und Polyamidfasern oder besonders von Baumwolle/Polyestermischfasern geeignet.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung oder durch mehrstündiges Lagern bei Raumtemperatur fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: 24,2 Teile 2,3,5-Trichlor-6-methoxy-1,4-benzochinon werden zusammen mit 23,2 Teilen 5-Amino-2-(2-hydroxyethylamino)benzolsulfonsäure und 9 Teilen wasserfreiem Natiumacetat in 2500 Teilen Methanol unter Rückfluss 3 Stunden gerührt. Die Reaktionsmischung wird mit 2500 Teilen Wasser versetzt, der entstandene Niederschlag abfiltriert, mit Wasser gewaschen und getrocknet. Man erhält 24 Teile eines orangefarbenen Pulvers, das in Form der freien Säure der Formel (101) 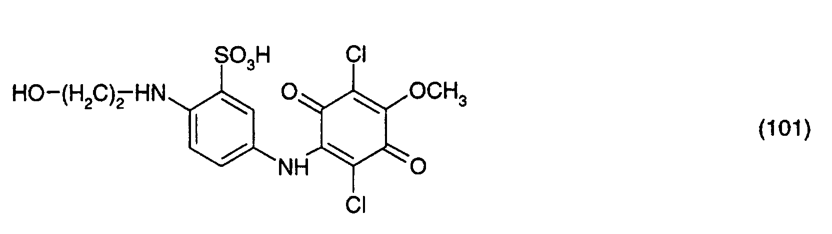 entspricht.

Beispiel 2: 43,7 Teile des gemäss Beispiel 1 erhaltenen Pulvers werden mit 24,5 Teilen 5-Amino-2-(2-aminopropylamino)benzolsulfonsäure in 500 Teilen Wasser gerührt, wobei während der Reaktion mit wässriger Natriumhydroxid-Lösung ein pH-Wert von 8 gehalten wird. Nach beendeter Reaktion wird der entstandene braune Niederschlag abfiltriert, mit Wasser gewaschen und im Vakuum getrocknet. Man erhält eine Verbindung, die in Form der freien Säure der Formel (102) 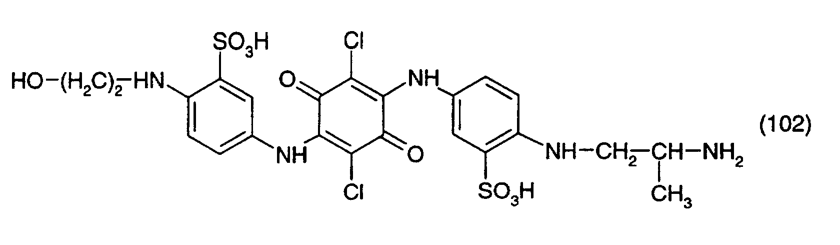 entspricht.

Beispiel 3: 65 Teile der fein zermahlenen Verbindung aus Beispiel 2 werden portionsweise in 300 Teile Oleum 25% eingetragen. Zu der Reaktionsmischung gibt man bei 0°C 55 Teile Kaliumperoxodisulfat und rührt weitere 3 Stunden bei 0°C. Nach beendeter Reaktion wird die Reaktionsmasse auf Eis gegossen und mit konz. Natriumhydroxid-Lösung teilweise neutralisiert. Der entstandene blaue Niederschlag wird abfiltriert mit Wasser gewaschen und im Vakuum getrocknet. Man erhält eine Verbindung, die in Form der freien Säure der Formel (103) 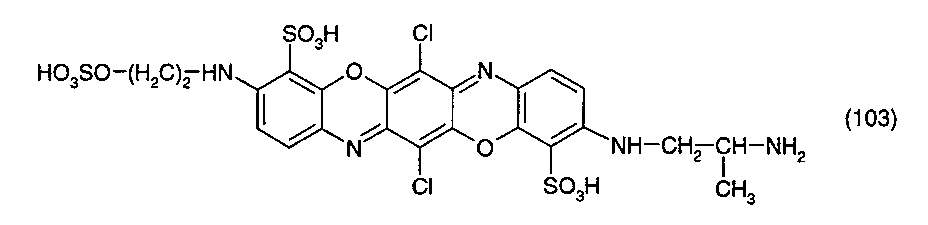 entspricht.

Beispiel 4: Zu einer Anschlämmung, hergestellt aus 19 Teilen Trichlortriazin, 50 Teilen eines Eis/Wasser-Gemisches und 5 Teilen Dinatriumhydrogenphosphat gibt man portionsweise 28,1 Teile 2-(4-Aminophenylsulfonyl)ethylhydrogensulfat. Bis zum Ende der Reaktion wird der pH-Wert dabei mit verdünnter wässriger Natriumhydroxid-Lösung bei 4 gehalten, danach auf 6,5 erhöht und gehalten. Zu dieser Lösung tropft man rasch eine erwärmte Lösung aus 72,6 Teilen der Verbindung gemäss Beispiel 3 und 2,5 Teilen Lithiumhydroxid in 500 Teilen Wasser. Die Temperatur wird dabei zwischen 25 und 30°C und der pH-Wert zwischen 9,5 und 10 gehalten. Man rührt noch 1 Stunde bei diesen Bedingungen, neutralisiert die Reaktionsmischung mit verdünnter Salzsäure, dialysiert und dampft im Vakuum ein. Man erhält eine Verbindung, die in Form der freien Säure der Formel (104) 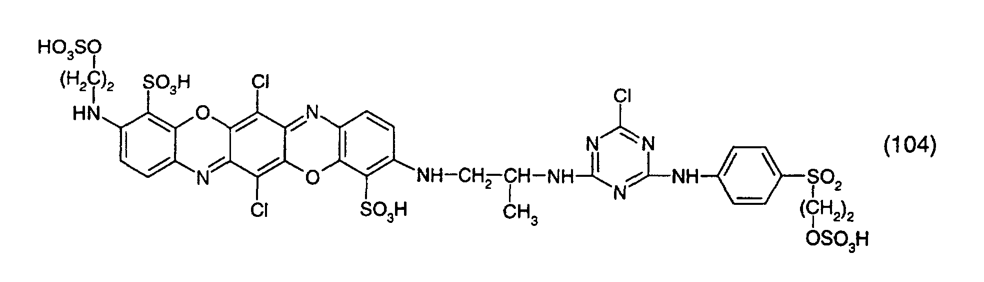 entspricht und Baumwolle in brillantblauen Tönen mit guten Allgemeinechtheiten färbt.

Beispiele 5 bis 28: Verfährt man wie in Beispiel 4 beschreiben, verwendet jedoch anstelle von 28,1 Teilen 2-(4-Aminophenylsulfonyl)ethylhydrogensulfat die äquimolare Menge eines Amins der Formel Dₓ-NH₂, worin Dₓ jeweils die in Tabelle 1 angegebene Bedeutung hat, so erhält man eine Verbindung, die in Form der freien Säure der allgemeinen Formel (105) 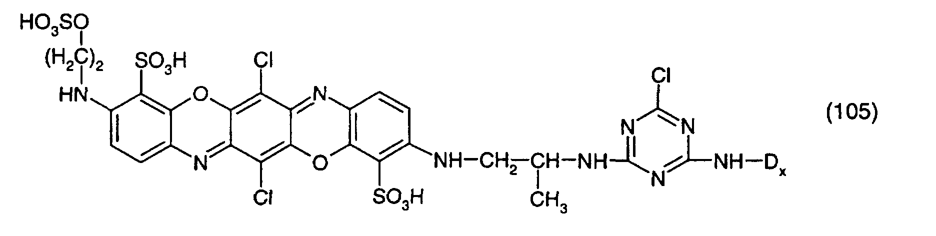 entspricht, worin Dₓ jeweils die in Tabelle 1 angegebene Bedeutung zukommt. Die Farbstoffe färben Baumwolle in brillantblauen Tönen mit guten Allgemeinechtheiten.

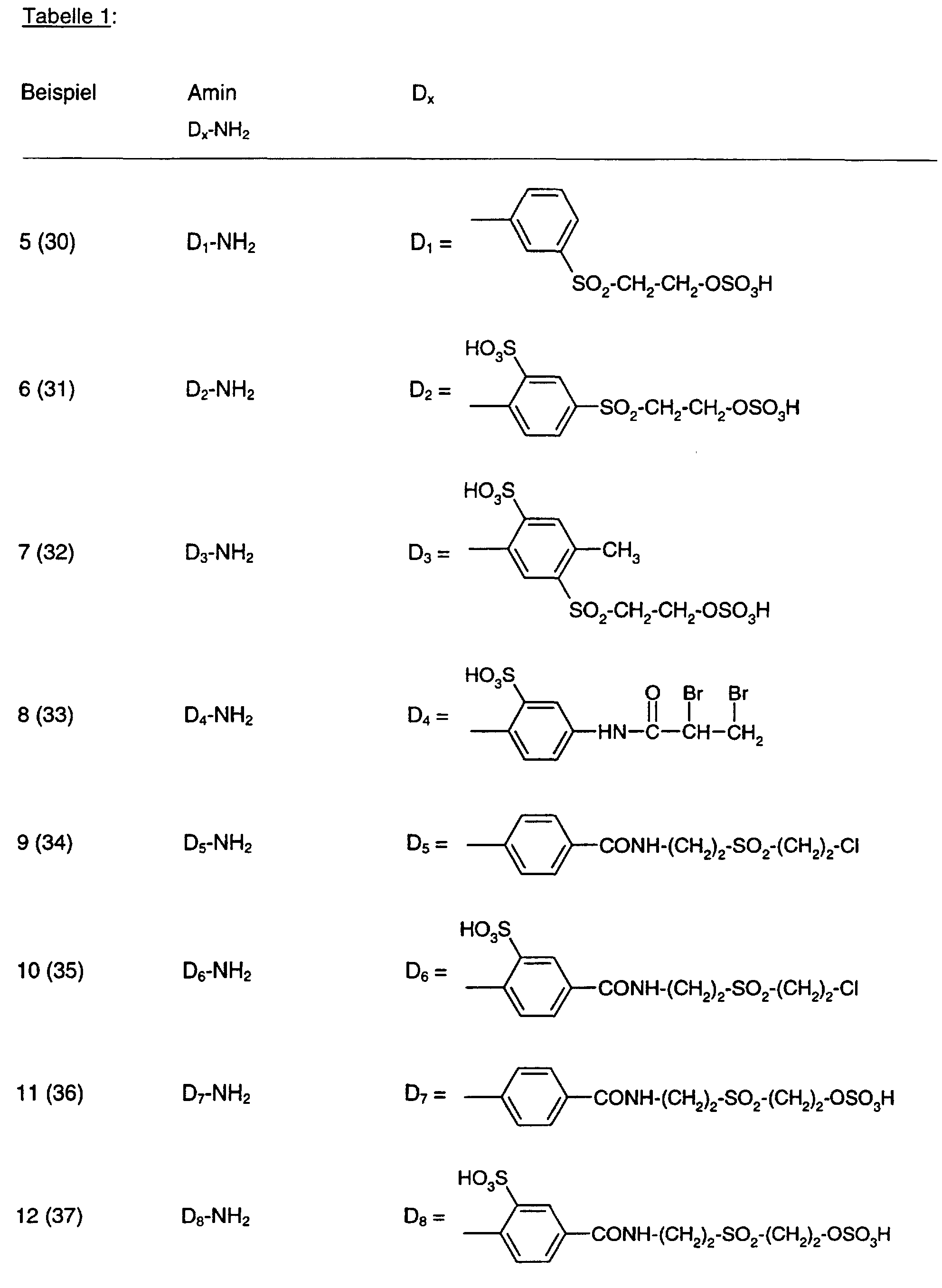

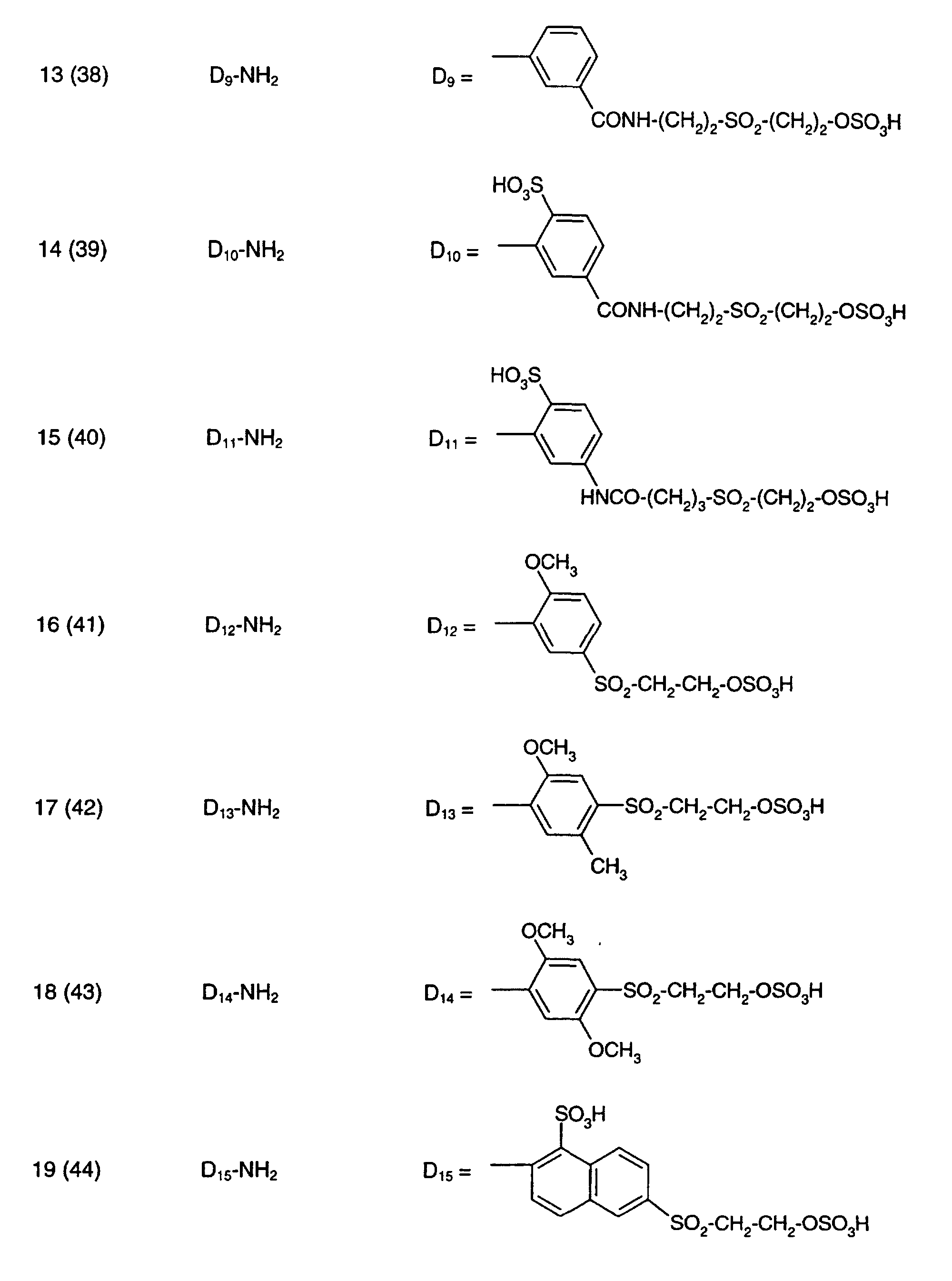

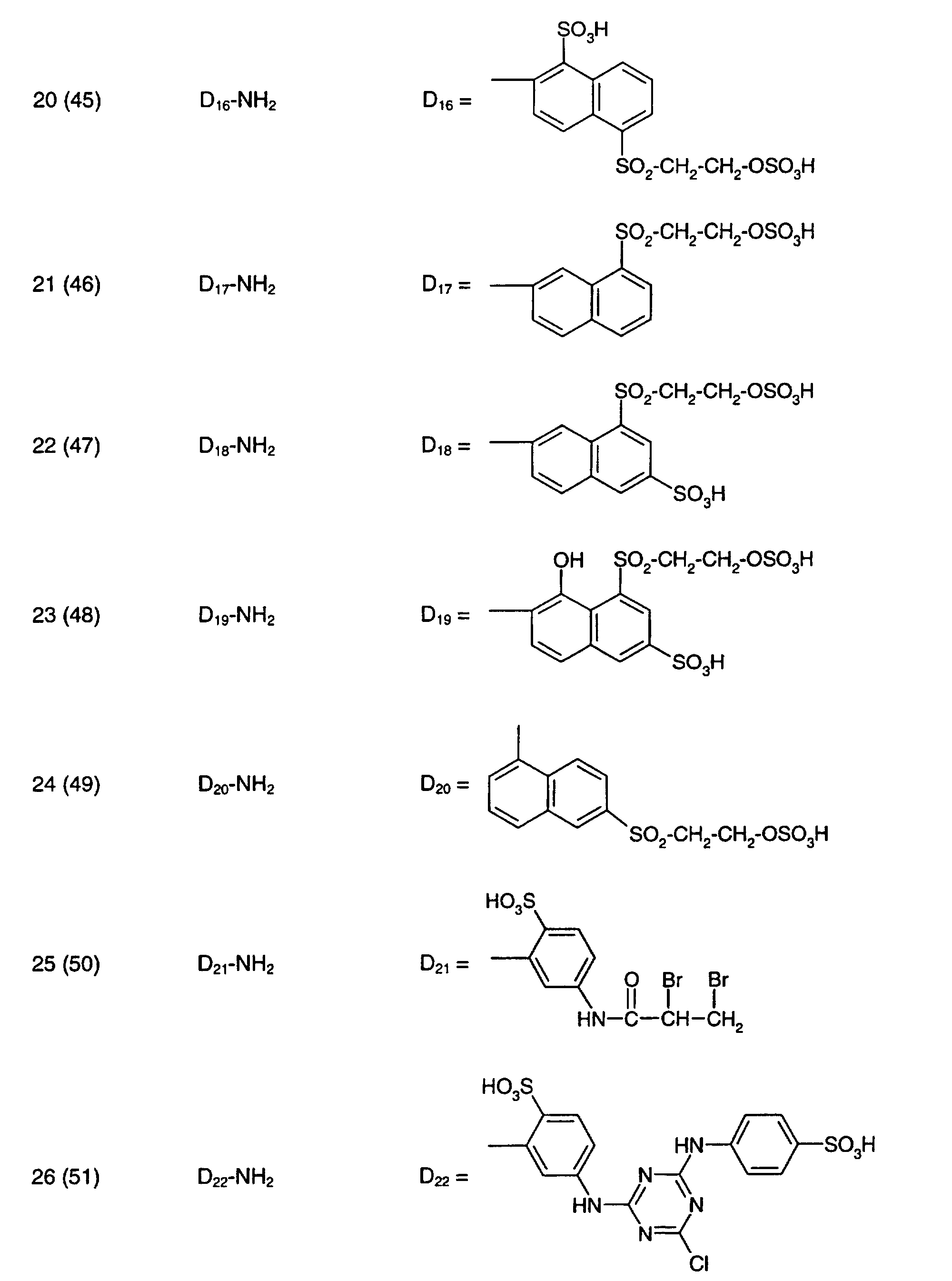

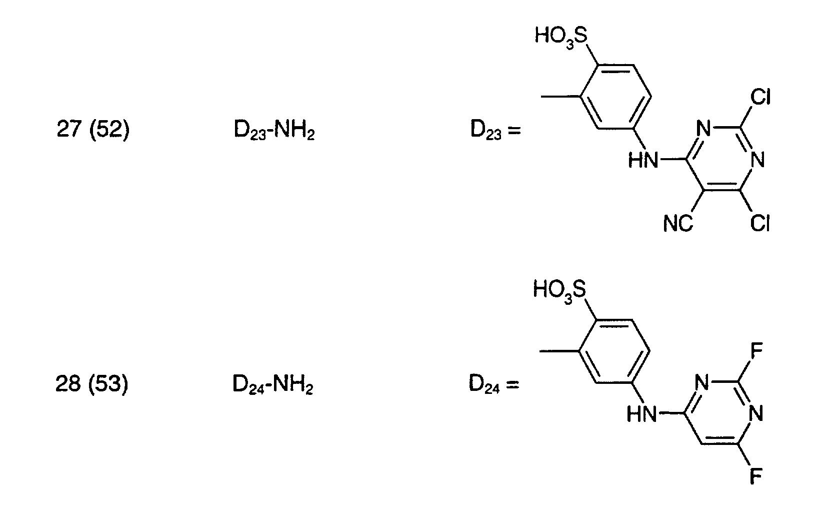

Beispiel 29: Zu 28,1 Teilen 2-(4-Aminophenylsulfonyl)ethylhydrogensulfat in 300 Teilen Wasser tropft man bei 0°C 13,3 Teile Trifluortriazin zu, der pH-Wert wird dabei mit verdünnter wässriger Natriumhydroxid-Lösung bei 6 gehalten. Zu dieser Lösung wird eine Lösung aus 72,6 Teilen der Verbindung gemäss Beispiel 3 und 2,5 Teilen Lithiumhydroxid in 500 Teilen Wasser gegeben. Die Temperatur wird dabei zwischen 25 und 30°C und der pH-Wert zwischen 9,5 und 10 gehalten. Man rührt noch 1 Stunde bei diesen Bedingungen, neutralisiert die Reaktionsmischung mit verdünnter Salzsäure, dialysiert und dampft im Vakuum ein. Man erhält eine Verbindung, die in Form der freien Säure der Formel (106) 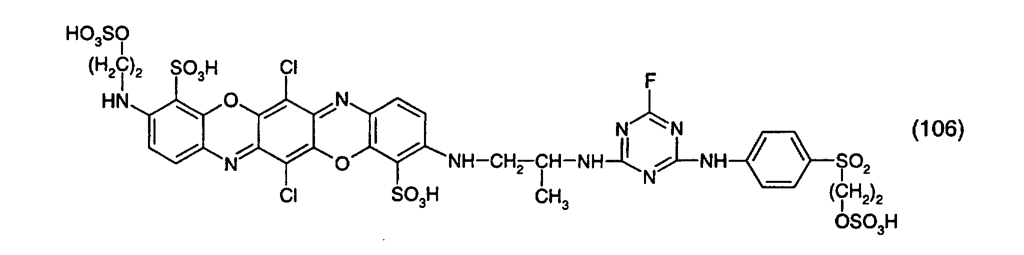 entspricht und Baumwolle in brillantblauen Tönen mit guten Allgemeinechtheiten färbt.

Beispiele 30 bis 53: Verfährt man wie in Beispiel 29 beschreiben, verwendet jedoch anstelle von 28,1 Teilen 2-(4-Aminophenylsulfonyl)ethylhydrogensulfat die äquimolare Menge eines Amins der Formel Dₓ-NH₂, worin Dₓ jeweils die in Tabelle 1 angegebene Bedeutung hat, so erhält man eine Verbindung, die in Form der freien Säure der allgemeinen Formel (107) 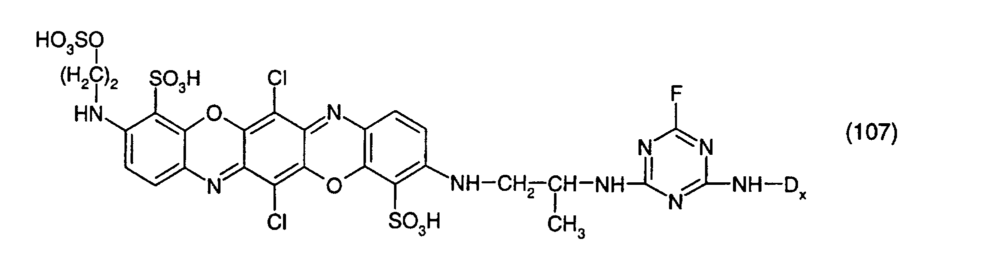 entspricht, worin Dₓ jeweils die in Tabelle 1 angegebene Bedeutung zukommt. Die Farbstoffe färben Baumwolle in brillantblauen Tönen mit guten Allgemeinechtheiten.

Beispiele 54 bis 71: Verfährt man wie in den Beispielen 2, 3 und 4 beschrieben, verwendet jedoch anstelle von 24,5 Teilen 5-Amino-2-(2-aminopropylamino)benzolsulfonsäure die äquimolare Menge eines Amins der Formel 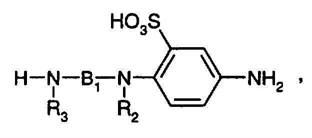 worin der Rest 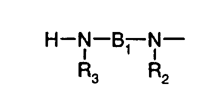 jeweils die in Tabelle 2, Spalte 2, angegebene Bedeutung hat, so erhält man eine Verbindung, die in Form der freien Säure der allgemeinen Formel (108) 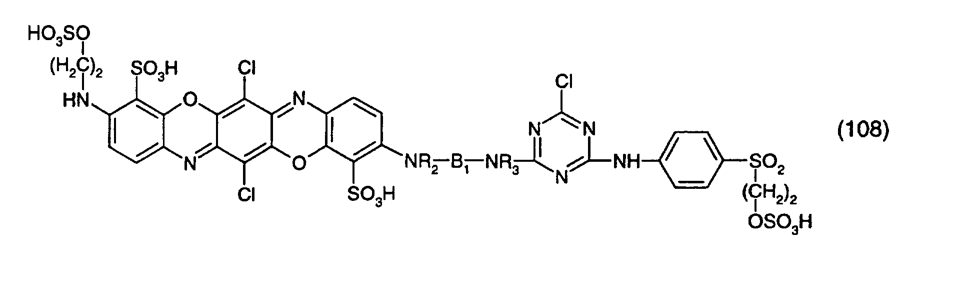 entspricht, worin dem Rest 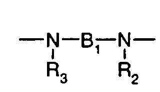 jeweils die in Tabelle 2, Spalte 3, angegebene Bedeutung zukommt. Die Farbstoffe färben Baumwolle in brillantblauen Tönen mit guten Allgemeinechtheiten.

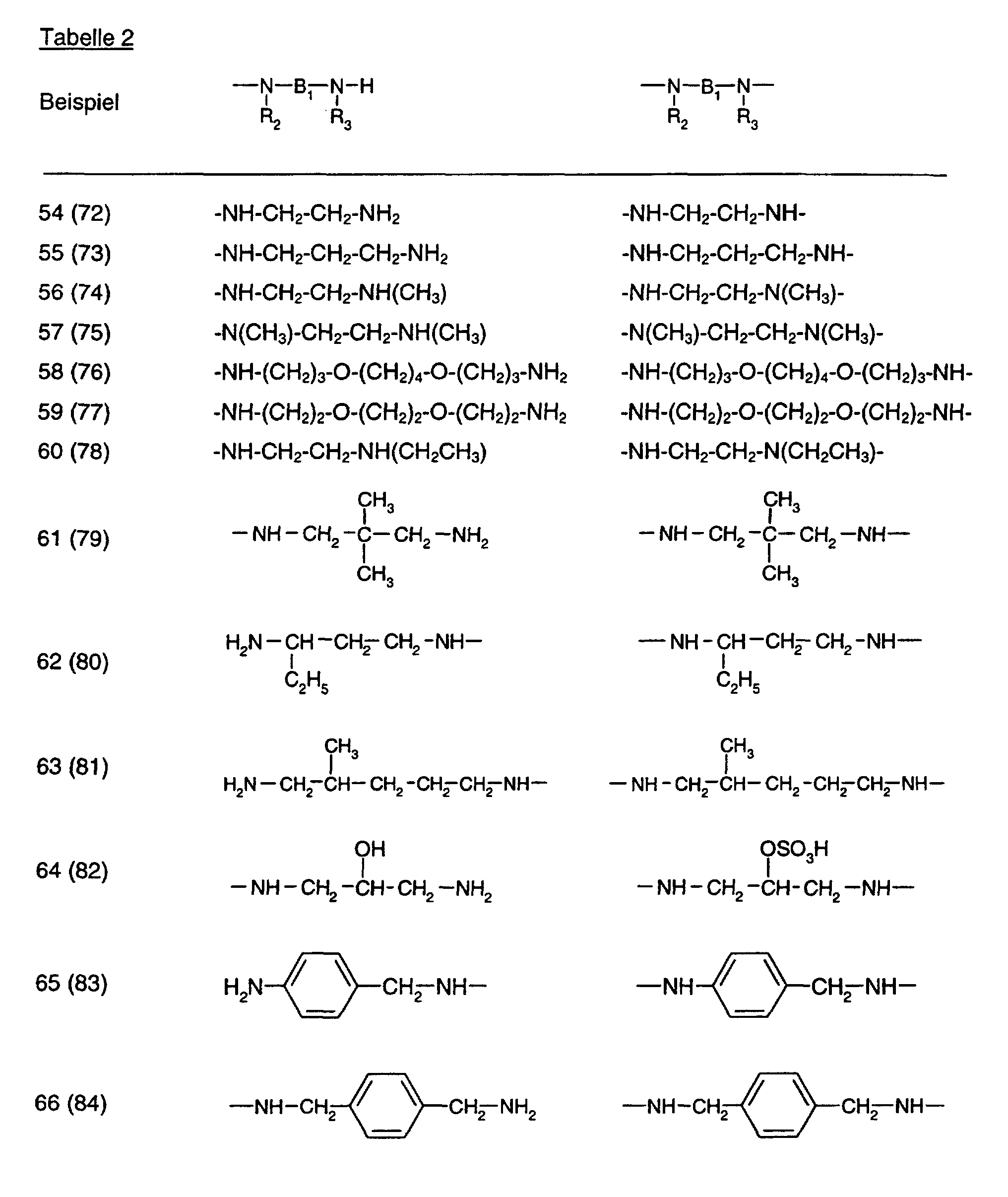

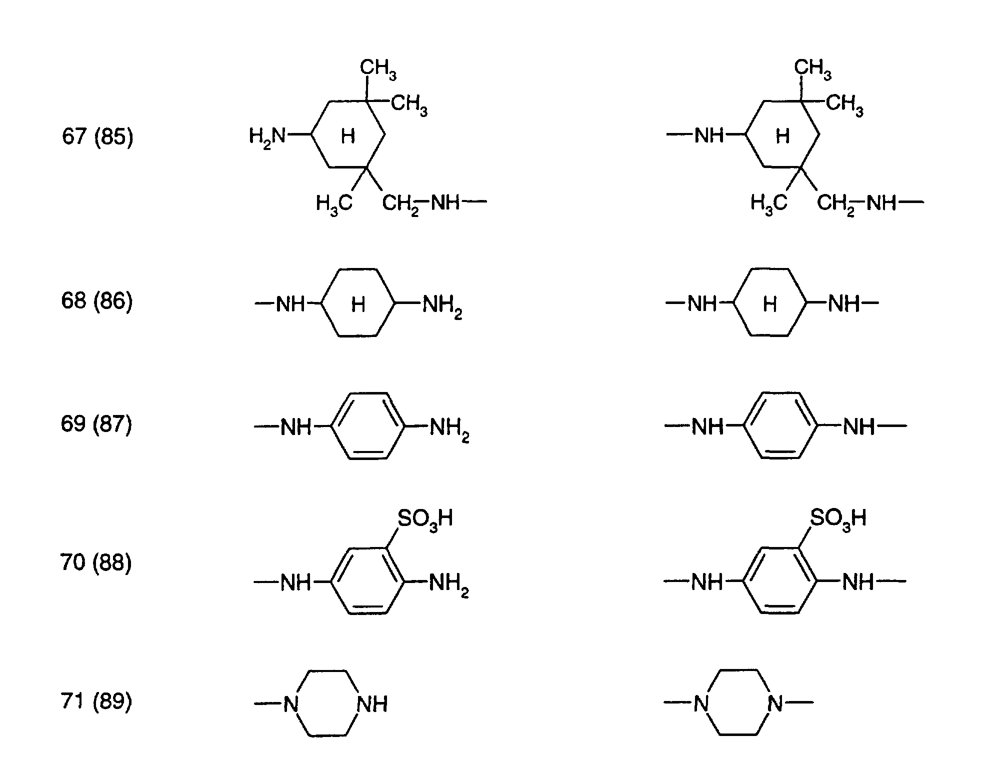

Beispiele 72 bis 89: Verfährt man wie in den Beispielen 2, 3 und 29 beschrieben, verwendet jedoch anstelle von 24,5 Teilen 5-Amino-2-(2-aminopropylamino)benzolsulfonsäure die äquimolare Menge eines Amins der Formel 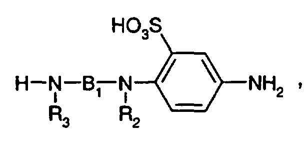 worin der Rest 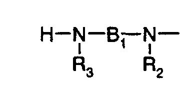 jeweils die in Tabelle 2, Spalte 2, angegebene Bedeutung hat, so erhält man eine Verbindung, die in Form der freien Säure der allgemeinen Formel (109) 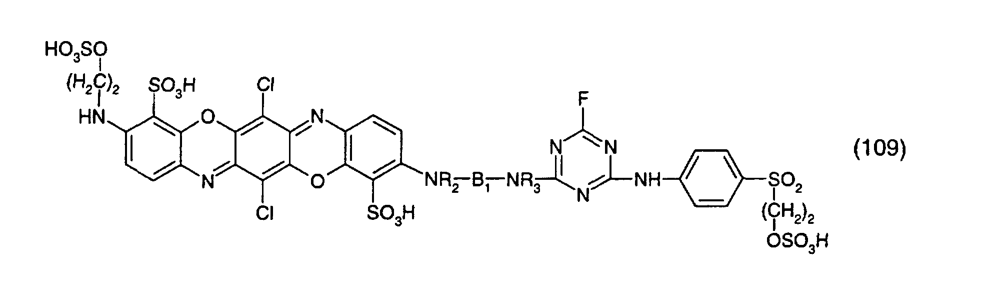 entspricht, worin dem Rest 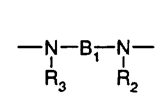 jeweils die in Tabelle 2, Spalte 3, angegebene Bedeutung zukommt. Die Farbstoffe färben Baumwolle in brillantblauen Tönen mit guten Allgemeinechtheiten.

Beispiele 90 bis 99: Verfährt man wie in den Beispielen 1 bis 4 beschrieben, verwendet jedoch anstelle von 23,2 Teilen 5-Amino-2-(2-hydroxyethylamino)benzolsulfonsäure die äquimolare Menge eines Amins der Formel 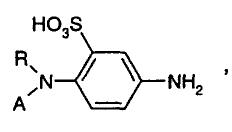 worin der Rest -NRA jeweils die in Tabelle 3, Spalte 2, angegebene Bedeutung hat, so erhält man eine Verbindung, die in Form der freien Säure der allgemeinen Formel (110) 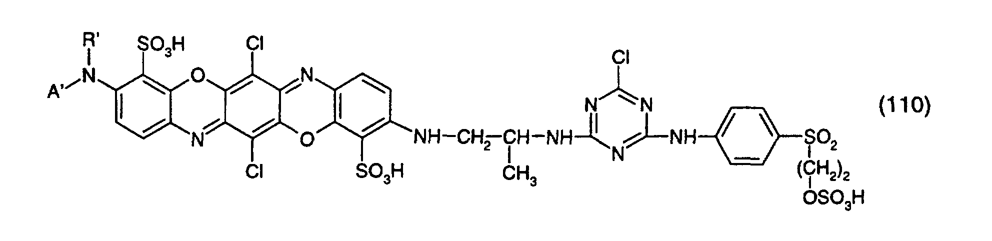 entspricht, worin -NR'A' jeweils die in Tabelle 3, Spalte 3, angegebene Bedeutung zukommt. Die Farbstoffe färben Baumwolle in brillantblauen Tönen mit guten Allgemeinechtheiten.

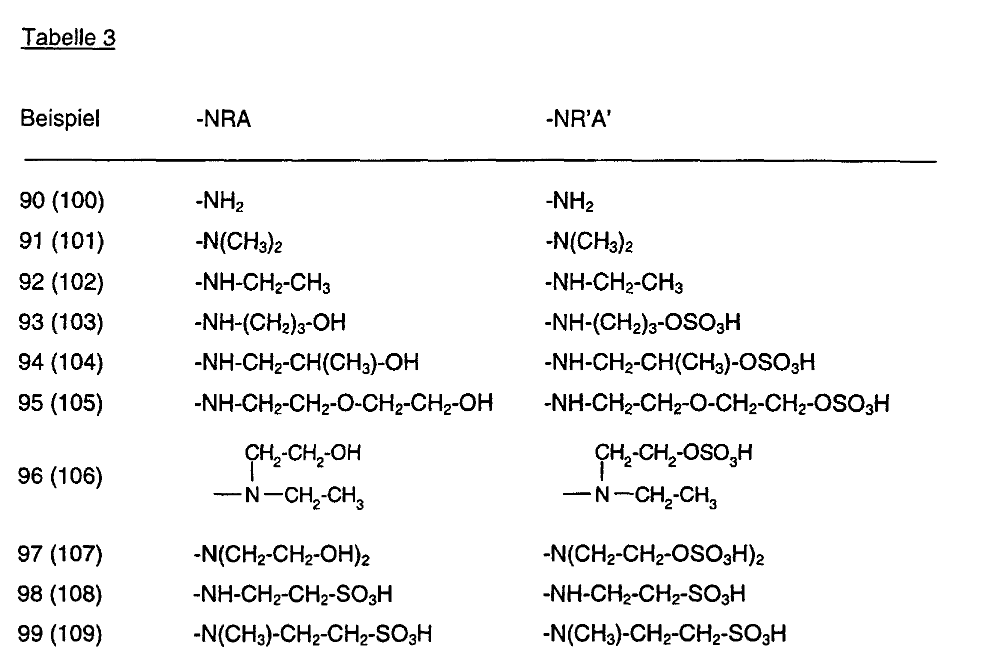

Beispiele 100 bis 109: Verfährt man wie in den Beispielen 1, 2, 3 und 29 beschrieben, verwendet jedoch anstelle von 23,2 Teilen 5-Amino-2-(2-hydroxyethylamino)benzolsulfonsäure die äquimolare Menge eines Amins der Formel 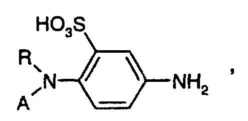 worin der Rest -NRA jeweils die in Tabelle 3, Spalte 2, angegebene Bedeutung hat, so erhält man eine Verbindung, die in Form der freien Säure der allgemeinen Formel (111) 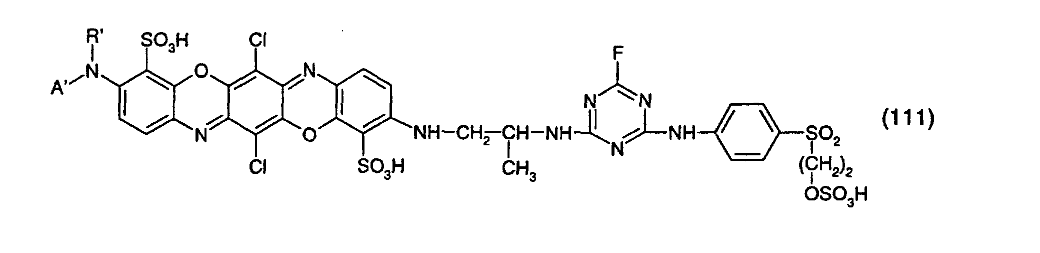 entspricht, worin -NR'A' jeweils die in Tabelle3, Spalte 3, angegebene Bedeutung zukommt. Die Farbstoffe färben Baumwolle in brillantblauen Tönen mit guten Allgemeinechtheiten.

Beispiel 110: Zu 28,1 Teilen 2-(4-Aminophenylsulfonyl)ethylhydrogensulfat in 300 Teilen Wasser tropft man bei 0°C 13,3 Teile Trifluortriazin zu, der pH-Wert wird dabei mit verdünnter wässriger Natriumhydroxid-Lösung bei 6 gehalten. Zu dieser Reaktionsmischung werden 21,1 Teile 1-(2-Amino-ethyl)-6-hydroxy-4-methyl-2-oxo-1,2-dihydro-pyridin-3-carbonamid gegeben. Der pH-Wert wird mit wässriger Natriumhydroxid-Lösung auf 8,5 erhöht und bis zum Ende der Kondensation gehalten. Man erwärmt auf 30°C, erhöht den pH-Wert auf 11, rührt 15 Minuten und neutralisiert die Reaktionsmischung mit verdünnter Salzsäure. Die Reaktionsmischung enthält die Verbindung der Formel (112)

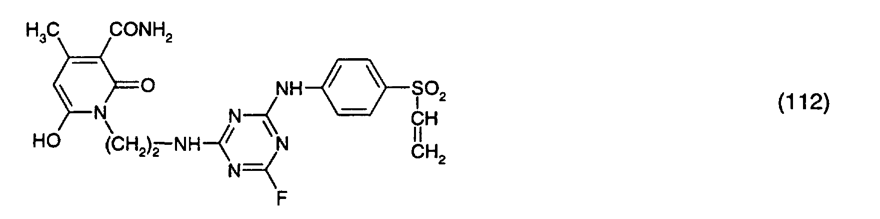

Beispiel 111: 26,8 Teile 1,3-Phenylendiamin-4,6-disulfosäure werden in 300 Teilen Wasser bei pH 6 gelöst, auf 0°C abgekühlt und mit 18,4 Teilen Trichlortriazin und etwas Netzmittel versetzt. Man rührt bei 0°C und einem pH-Wert von 6 bis die Kondensationsreaktion weitgehend beendet ist, versetzt dann mit 6,9 Teilen Natriumnitrit, 150 Teilen Eis und 29 Teilen konzentrierter Salzsäure, rührt für zwei weitere Stunden. Der Nitritüberschuss wird mit wenig Sulfaminsäure vernichtet und die gemäss Beispiel 110 erhaltene Reaktionsmischung wird innerhalb von 30 Minuten zugetropft. Anschliessend wird der pH-Wert langsam auf 6,5 erhöht und für zwei Stunden bei 6,5 gehalten. Die Reaktionsmischung wird mit 100 Teilen Kaliumchlorid versetzt, der entstandene Niederschlag abfiltriert, mit gesättigter Kaliumchlorid-Lösung gewaschen und getrocknet. Man erhält eine Verbindung, die in Form der freien Säure der Formel (113) 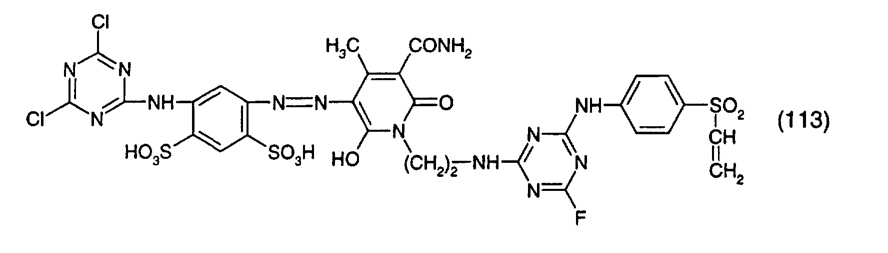 entspricht.

Beispiel 112: 72,7 Teile der Verbindung gemäss Beispiel 3 werden in 500 Teilen Wasser mit 2.5 Teilen Lithiumhydroxid bei 60°C gelöst und rasch zu einer Suspension aus 91,7 Teilen der gemäss Beispiel 111 hergestellten Verbindung in 800 Teilen Wasser gegeben. Der pH-Wert wird durch Zugabe von wässriger Natriumhydroxid-Lösung zwischen 9 und 9,5 und die Temperatur bei 30°C gehalten. Nach beendeter Kondensation wird das Produkt mit 260 Teilen Kaliumchlorid ausgesalzen, abfiltriert, mit gesättigter Kaliumchlorid-Lösung gewaschen und getrocknet. Man erhält eine Verbindung, die in Form der freien Säure der Formel (114) 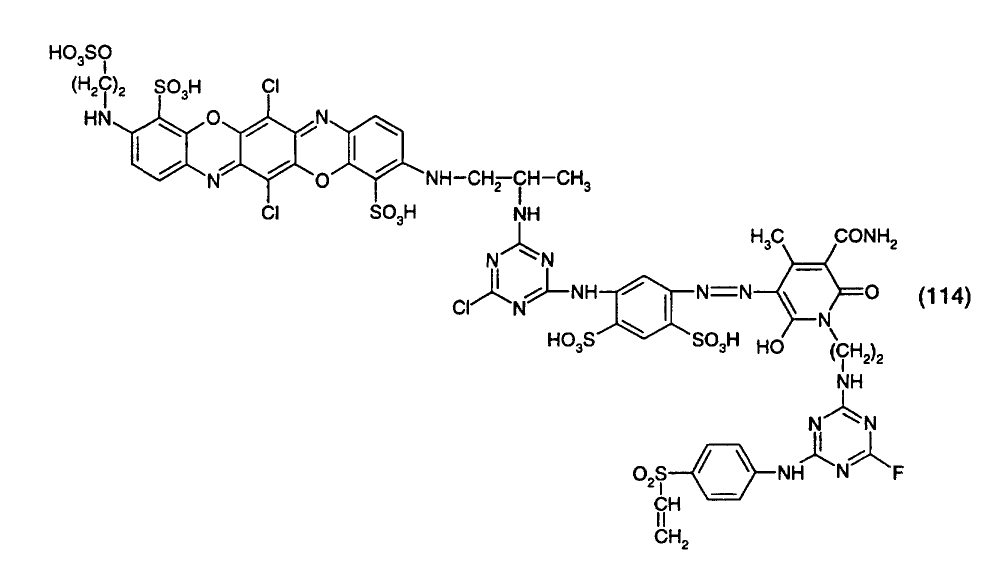 entspricht und Baumwolle in brillantgrünen Tönen mit guten Allgemeinechtheiten färbt.

In analoger Weise wie in den Beispielen 110, 111 und 112 beschrieben lassen sich die folgenden Verbindungen herstellen, die in Form der freien Säure den in Tabelle 4 angegebenen Formeln entsprechen. Die Farbstoffe färben Baumwolle in brillantgrünen Tönen mit guten Allgemeinechtheiten.

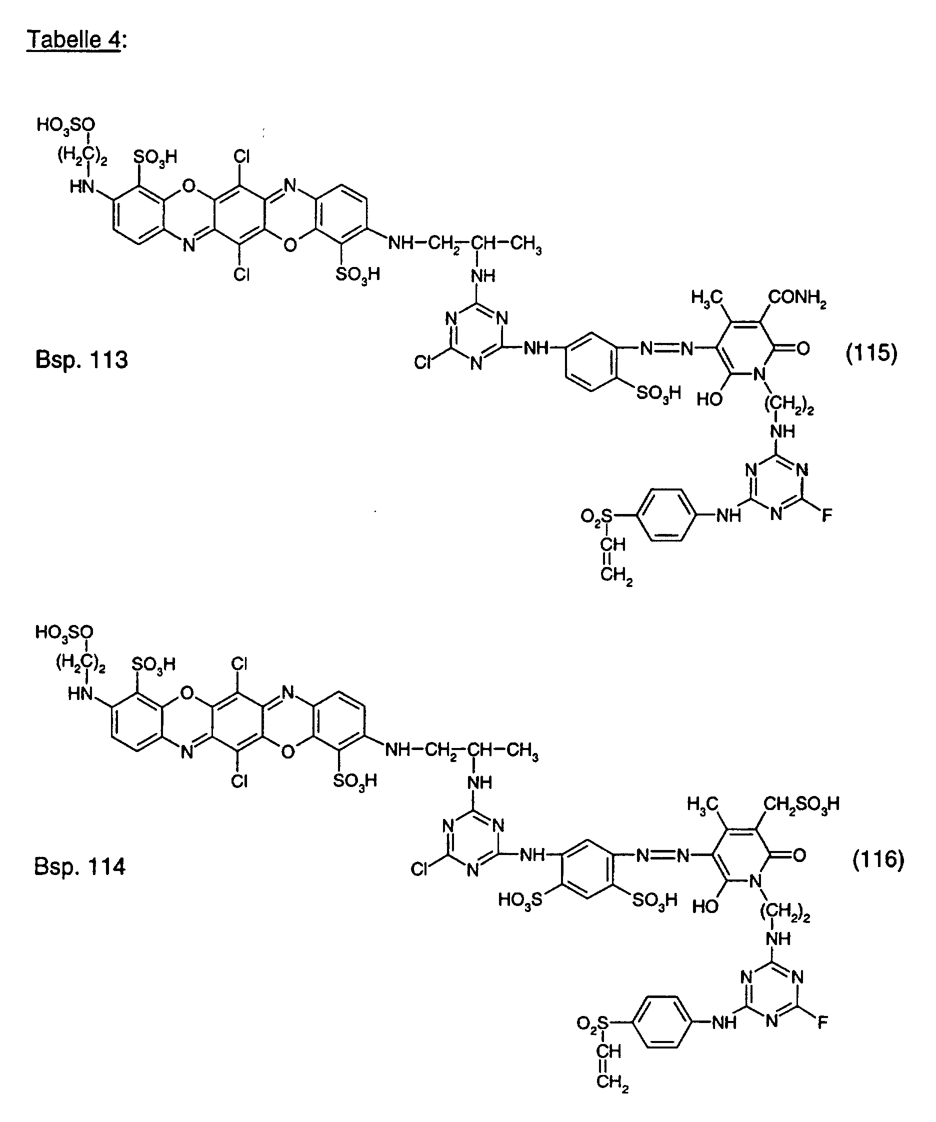

Färbevorschrift I: 2 Teile des gemäss Beispiel 4 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II: 2 Teile des gemäss Beispiel 4 erhaltenen Reaktivfarbstoffes werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III: 8 Teile des gemäss Beispiel 4 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb von 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV: 4 Teile des gemäss Beispiel 4 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V: 6 Teile des gemäss Beispiel 4 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°bé) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI: 2 Teile des gemäss Beispiel 4 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I: 3 Teile des gemäss Beispiel 4 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitro benzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II: 5 Teile des gemäss Beispiel 4 erhaltenen Reaktivfarbstoffes werden unter schnellem Rühren in 100 Teile einer Stammverdickung, enthaltend 50 Teile 5%ige Natriumalginverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel (1) 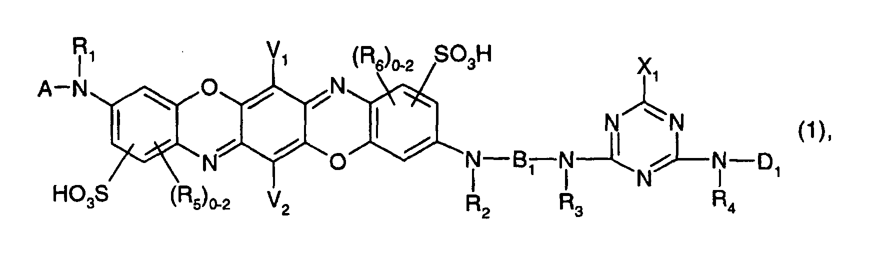 worin
R₁, R₂, R₃ und R₄ unabhängig voneinander Wasserstoff oder gegebenenfalls substituiertes C₁-C₄-Alkyl bedeuten,
(R₅)₀₋₂ und (R₆)₀₋₂ unabhängig voneinander für 0 bis 2 gleiche oder verschiedene Substituenten aus der Gruppe C₁-C₄-Alkyl, C₁-C₄-Alkoxy, C₂-C₄-Alkanoylamino, Halogen, Carboxy, Sulfo, Carbamoyl, N-C₁-C₄-Alkylcarbamoyl, N,N-Di-C₁-C₄-Alkylcarbamoyl, C₁-C₄-Alkylsulfonyl, Sulfamoyl, N-C₁-C₄-Alkylsulfamoyl und N,N-Di-C₁-C₄-Alkylsulfamoyl stehen,
A Wasserstoff oder gegebenenfalls durch Hydroxy, Sulfo, Carboxy oder Sulfato substituiertes C₁-C₄-Alkyl, gegebenenfalls durch C₁-C₄-Alkyl, C₁-C₄-Alkoxy, C₂-C₄-Alkanoylamino, Hydroxy, Carboxy, Carbamoyl, Sulfo oder Halogen substituiertes Phenyl oder Naphthyl, gegebenenfalls im Phenylring durch C₁-C₄-Alkyl, C₁-C₄-Alkoxy, C₂-C₄-Alkanoylamino, Hydroxy, Carboxy, Sulfo, Carbamoyl, Ureido oder Halogen substituiertes Phenyl-C₁-C₄-Alkylen oder gegebenenfalls durch C₁-C₄-Alkyl substituiertes C₅-C₇-Cycloalkyl bedeutet,
B₁ ein aliphatisches oder aromatisches Brückenglied ist,
D₁ durch mindestens eine faserreaktive Gruppe substituiertes Phenyl oder Naphthyl, das gegebenenfalls durch nicht-faserreaktive Substituenten weitersubstituiert ist, oder
einen durch mindestens eine faserreaktive Gruppe substituierten Mono- oder Disazorest der Formel (4) oder (5)
D*-N=N-(M-N=N)ᵤ-K- (4)
oder
-D*-N=N-(M-N=N)ᵤ-K (5)
bedeutet, worin
D* der Rest einer Diazokomponente der Benzol- oder Naphthalinreihe ist,
M den Rest einer Mittelkomponente der Benzol- oder Naphthalinreihe bedeutet,
K der Rest einer Kupplungskomponente der Benzol-, Naphthalin-, Pyrazolon-,
6-Hydroxypyridon-(2)- oder Acetessigsäurearylamid-Reihe ist,
und u die Zahl 0 oder 1, vorzugsweise 0 ist, wobei D*, M und K weiterhin bei Azofarbstoffen übliche Substituenten tragen können,
V₁ und V₂ unabhängig voneinander Wasserstoff, Halogen, C₁-C₄-Alkyl, C₁-C₄-Alkoxy, oder gegebenenfalls substituiertes Phenyl, Phenoxy, C₂-C₆-Alkanoylamino oder Benzoylamino bedeuten, und
X₁ Halogen, Hydroxy, C₁-C₄-Alkoxy, C₁-C₄-Alkylthio, gegebenenfalls substituiertes Amino oder ein gegebenenfalls weitere Heteroatome enthaltender N-Heterocyclus ist, mit der Massgabe, dass
A und R₁ nicht Wasserstoff sind, wenn B₁ Ethylen, 1,3-Propylen, 1,4-Butylen, gegebenenfalls durch Sulfo substituiertes Phenylen oder 1,4-Cyclohexylen bedeutet oder der Rest 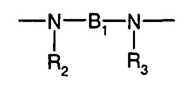 Piperazin ist, und
A nicht Hydroxyethyl und R₁ nicht Wasserstoff bedeuten, wenn B₁ Ethylen und X₁ 2,6-di-Sulfo-phenylamino ist.

2. Reaktivfarbstoffe gemäss Abspruch 1, **dadurch gekennzeichnet, dass** R₁, R₂, R₃ und R₄ unabhängig voneinander Wasserstoff oder C₁-C₄-Alkyl bedeuten.

3. Reaktivfarbstoffe gemäss einem der Ansprüche 1 und 2, **dadurch gekennzeichnet, dass** A gegebenenfalls durch Hydroxy, Sulfo, Carboxy oder Sulfato substituiertes C₁-C₄-Alkyl, gegebenenfalls durch C₁-C₄-Alkyl, C₁-C₄-Alkoxy, C₂-C₄-Alkanoylamino, Hydroxy, Carboxy, Carbamoyl, Sulfo oder Halogen substituiertes Phenyl oder Naphthyl, gegebenenfalls im Phenylring durch C₁-C₄-Alkyl, C₁-C₄-Alkoxy, C₂-C₄-Alkanoylamino, Hydroxy, Carboxy, Sulfo, Carbamoyl, Ureido oder Halogen substituiertes Phenyl-C₁-C₄-Alkylen oder gegebenenfalls durch C₁-C₄-Alkyl substituiertes C₅-C₇-Cycloalkyl bedeutet.

4. Reaktivfarbstoffe gemäss einem der Ansprüche 1 bis 3, **dadurch gekennzeichnet, dass** B₁ einen C₂-C₁₂-Alkylenrest, welcher durch 1, 2 oder 3 Glieder -O- unterbrochen sein kann und unsubstituiert oder durch Hydroxy, Sulfo, Sulfato, Cyano oder Carboxy substituiert ist, oder einen gegebenenfalls durch C₁-C₄-Alkyl, C₁-C₄-Alkoxy, C₂-C₄-Alkanoylamino, Sulfo, Halogen oder Carboxy substituierten Phenylenrest bedeutet.

5. Reaktivfarbstoffe gemäss einem der Ansprüche 1 bis 4, **dadurch gekennzeichnet, dass** D₁ einem Rest der Formel (7) oder (6j') 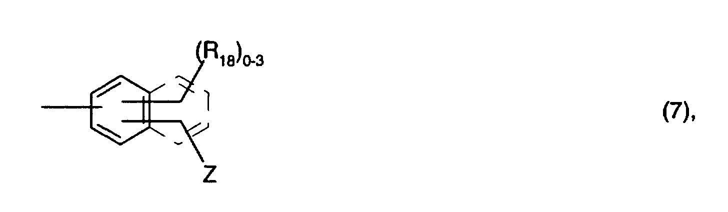 worin
(R₁₈)₀₋₃ für 0 bis 3 gleiche oder voneinander verschiedene Substituenten ausgewählt aus der Gruppe Halogen, C₁-C₄-Alkyl, C₁-C₄-Alkoxy, Carboxy, Nitro und Sulfo steht und
Z für einen Rest der Formel (2a), (2c), (2d), (2e) oder (2f)
-SO₂-Y (2a),
-CONR₈-(CH₂)ₘ-SO₂-Y (2c),
-NH-CO-CH(Hal)-CH₂-Hal (2d),
-NH-CO-C(Hal)=CH₂ (2e), 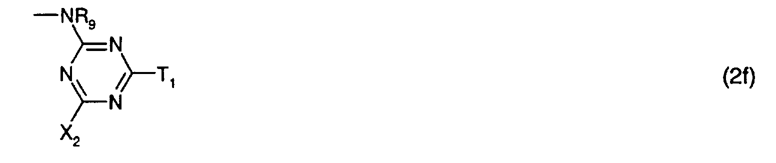
steht, worin
R₈ und R₉ Wasserstoff sind,
Hal Brom bedeutet,
Y Vinyl, β-Chlorethyl oder β-Sulfatoethyl ist,
T₁ für C₁-C₄-Alkoxy, gegebenenfalls durch Hydroxy, Carboxy oder Sulfo substituiertes C₁-C₄-Alkylthio, Hydroxy, Amino, gegebenenfalls im Alkylteil durch Hydroxy, Sulfato oder Sulfo substituiertes N-Mono- oder N,N-Di-C₁-C₄-Alkylamino, Morpholino, gegebenenfalls im Phenylring durch Sulfo, Carboxy, Chlor, Acetylamino, Methyl oder Methoxy substituiertes Phenylamino oder N-C₁-C₄-Alkyl-N-phenylamino, worin das Alkyl gegebenenfalls durch Hydroxy, Sulfo oder Sulfato substituiert ist, gegebenenfalls durch 1 bis 3 Sulfogruppen substituiertes Naphthylamino, oder für einen faserreaktiven Rest der Formel (3c') oder (3d') 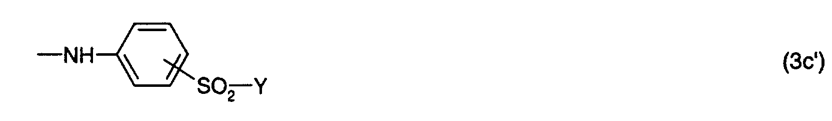 oder 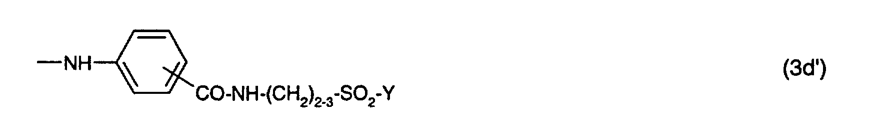 steht und Y die oben angegebene Bedeutung hat,
X₂ Chlor oder Fluor ist und
m die Zahl 2 oder 3 bedeutet; oder 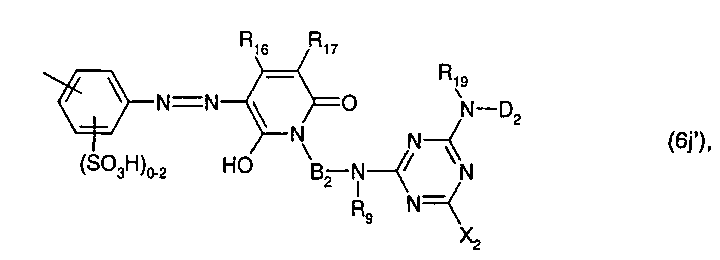 entspricht, worin
B₂ gegebenenfalls durch Hydroxy, Sulfo, Carboxy oder Sulfato substituiertes C₂-C₆-Alkylen ist,
D₂ einen Rest der Formel (7) bedeutet, worin (R₁₈)₀₋₃ die oben angegebenen Bedeutungen hat und Z ein Rest der Formel (2a), (2c), (2d) oder (2e) ist, worin R₈, Hal, Y und m die oben angegebenen Bedeutungen haben,
R₁₆ Wasserstoff, C₁-C₄-Alkyl oder Phenyl ist,
R₁₇ Wasserstoff, Cyano, Carbamoyl oder Sulfomethyl bedeutet,
R₁₉ Wasserstoff Methyl oder Ethyl ist, und
R₉ und X₂ die oben angegebenen Bedeutungen haben.

6. Reaktivfarbstoffe gemäss einem der Ansprüche 1 bis 5, **dadurch gekennzeichnet, dass** D₁ einem Rest der Formel (7a), (7b), (7c), (7d) oder (6j") 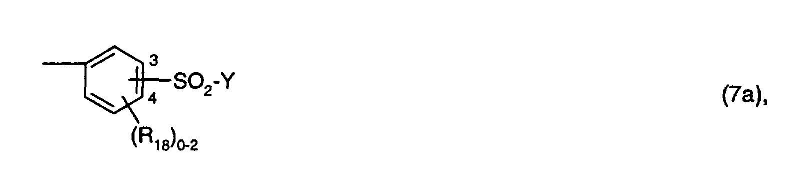 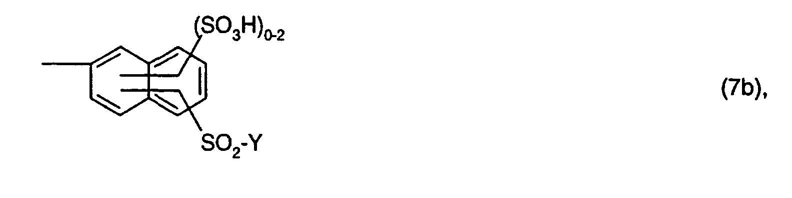 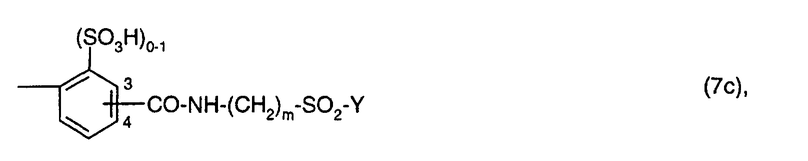 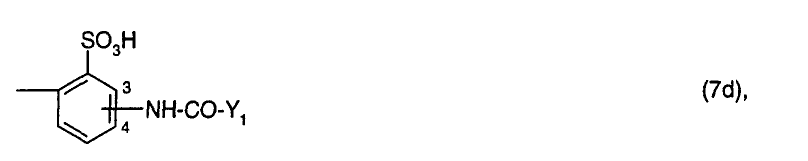 worin
(R₁₈)₀₋₂ für 0 bis 2 gleiche oder voneinander verschiedene Substituenten ausgewählt aus der Gruppe Halogen, C₁-C₄-Alkyl, C₁-C₄-Alkoxy und Sulfo steht,
Y Vinyl, β-Chlorethyl oder β-Sulfatoethyl bedeutet,
Y₁ eine Gruppe -CH(Br)-CH₂-Br oder -C(Br)=CH₂ ist und
m die Zahl 2 oder 3 ist; oder 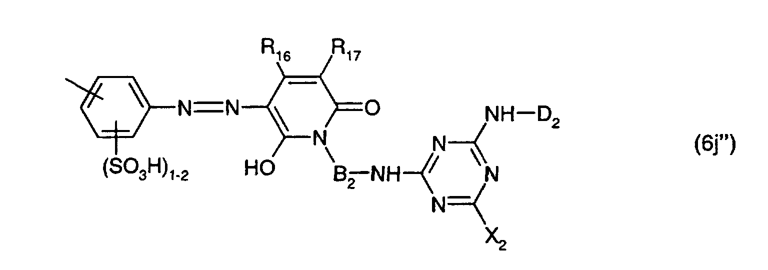 entspricht, worin
B₂ C₂-C₄-Alkylen ist,
D₂ einen Rest der Formel (7a), (7b), (7c) oder (7d) bedeutet, worin (R₁₈)₀₋₂, Y, Y₁ und m die oben angegebenen Bedeutungen haben,
R₁₆ Methyl oder Ethyl ist,
R₁₇ Carbamoyl oder Sulfomethyl bedeutet und
X₂ Fluor oder Chlor ist.

7. Reaktivfarbstoffe gemäss einem der Ansprüche 1 bis 6, **dadurch gekennzeichnet, dass** X₁ Fluor oder Chlor bedeutet.

8. Reaktivfarbstoffe gemäss einem der Ansprüche 1 bis 7, **dadurch gekennzeichnet, dass** sie der Formel (1a) 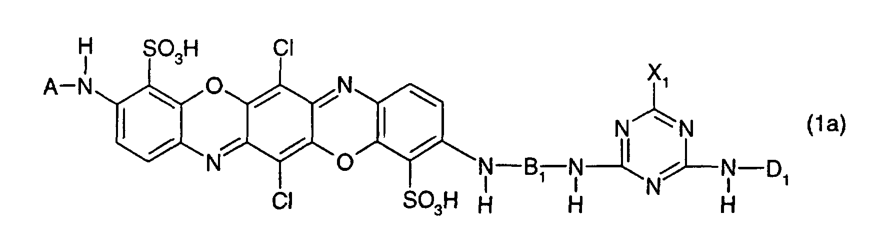 entsprechen, worin A, B₁, D₁ und X₁ die in Anspruch 1 angegebenen Bedeutungen haben.

9. Reaktivfarbstoffe gemäss Anspruch 8, **dadurch gekennzeichnet, dass**
A gegebenenfalls durch Hydroxy, Sulfo, Carboxy oder Sulfato substituiertes C₁-C₄-Alkyl, gegebenenfalls durch C₁-C₄-Alkyl, C₁-C₄-Alkoxy, C₂-C₄-Alkanoylamino, Hydroxy, Carboxy, Carbamoyl, Sulfo oder Halogen substituiertes Phenyl, gegebenenfalls im Phenylring durch C₁-C₄-Alkyl, C₁-C₄-Alkoxy, C₂-C₄-Alkanoylamino, Hydroxy, Carboxy, Sulfo, Carbamoyl, Ureido oder Halogen substituiertes Phenyl-C₁-C₄-Alkylen oder gegebenenfalls durch C₁-C₄-Alkyl substituiertes C₅-C₇-Cycloalkyl bedeutet;
B₁ ein C₂-C₁₂-Alkylenrest, welcher durch 1, 2 oder 3 Glieder -O- unterbrochen sein kann und unsubstituiert oder durch Hydroxy, Sulfo, Sulfato, Cyano oder Carboxy substituiert ist, oder gegebenenfalls durch C₁-C₄-Alkyl, C₁-C₄-Alkoxy, C₂-C₄-Alkanoylamino, Sulfo, Halogen oder Carboxy substituiertes Phenylen ist;
X₁ Fluor oder Chlor bedeutet;
D₁ einem Rest der Formel (7) oder (6j') 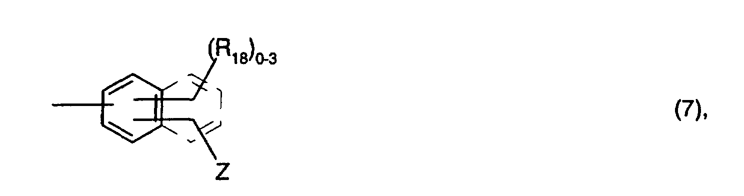 worin
(R₁₈)₀₋₃ für 0 bis 3 gleiche oder voneinander verschiedene Substituenten ausgewählt aus der Gruppe Halogen, C₁-C₄-Alkyl, C₁-C₄-Alkoxy, Carboxy, Nitro und Sulfo steht und
Z für einen Rest der Formel (2a), (2c), (2d), (2e) oder (2f)
-SO₂-Y (2a),
-CONR₈-(CH₂)ₘ-SO₂-Y (2c),
-NH-CO-CH(Hal)-CH₂-Hal (2d),
-NH-CO-C(Hal)=CH₂ (2e), 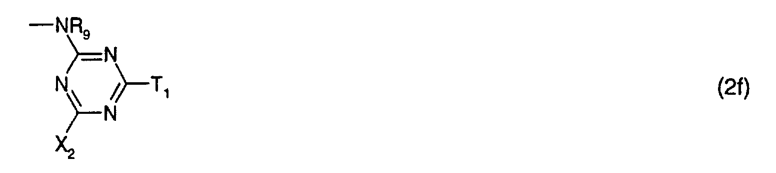
steht, worin
R₈ und R₉ Wasserstoff sind,
Hal Brom bedeutet,
Y Vinyl, β-Chlorethyl oder β-Sulfatoethyl ist,
T₁ für C₁-C₄-Alkoxy, gegebenenfalls durch Hydroxy, Carboxy oder Sulfo substituiertes C₁-C₄-Alkylthio, Hydroxy, Amino, gegebenenfalls im Alkylteil durch Hydroxy, Sulfato oder Sulfo substituiertes N-Mono- oder N,N-Di-C₁-C₄-Alkylamino, Morpholino, gegebenenfalls im Phenylring durch Sulfo, Carboxy, Chlor, Acetylamino, Methyl oder Methoxy substituiertes Phenylamino oder N-C₁-C₄-Alkyl-N-phenylamino, worin das Alkyl gegebenenfalls durch Hydroxy, Sulfo oder Sulfato substituiert ist, gegebenenfalls durch 1 bis 3 Sulfogruppen substituiertes Naphthylamino, oder für einen faserreaktiven Rest der Formel (3c') oder (3d') 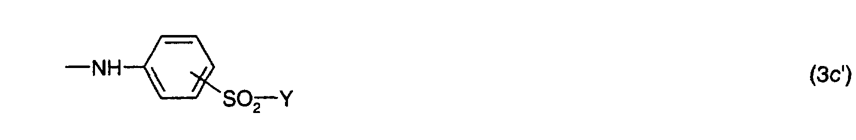 oder 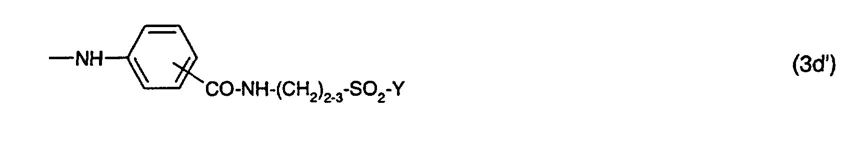 steht und Y die oben angegebene Bedeutung hat,
X₂ Chlor oder Fluor ist und
m die Zahl 2 oder 3 bedeutet; oder 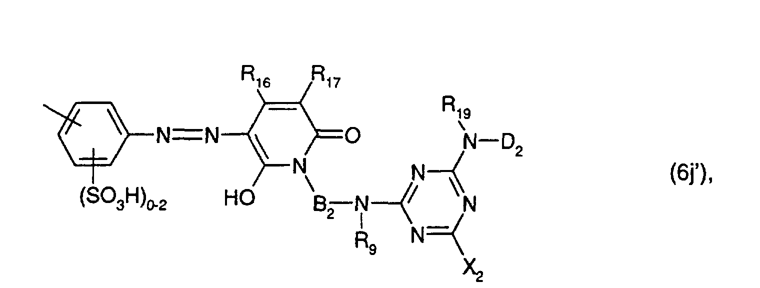 entspricht, worin
B₂ gegebenenfalls durch Hydroxy, Sulfo, Carboxy oder Sulfato substituiertes C₂-C₆-Alkylen ist,
D₂ einen Rest der Formel (7) bedeutet, worin (R₁₈)₀₋₃ die oben angegebenen Bedeutungen hat und Z ein Rest der Formel (2a), (2c), (2d) oder (2e) ist, worin R₈, Hal, Y und m die oben angegebenen Bedeutungen haben,
R₁₆ Wasserstoff, C₁-C₄-Alkyl oder Phenyl ist,
R₁₇ Wasserstoff, Cyano, Carbamoyl oder Sulfomethyl bedeutet,
R₁₉ Wasserstoff Methyl oder Ethyl ist, und
R₉ und X₂ die oben angegebenen Bedeutungen haben.

10. Reaktivfarbstoffe gemäss einem der Ansprüche 8 oder 9, **dadurch gekennzeichnet, dass**
A durch Hydroxy oder Sulfato substituiertes C₁-C₄-Alkyl bedeutet,
B₁ ein Rest der Formel -CH₂-CH(CH₃)- oder -(CH₃)CH-CH₂- ist,
X₁ Fluor oder Chlor bedeutet,
D₁ einem Rest der Formel (7a), (7b), (7c) oder (6j"), 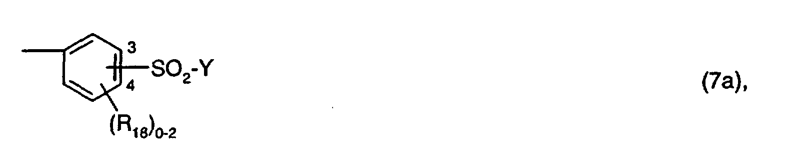 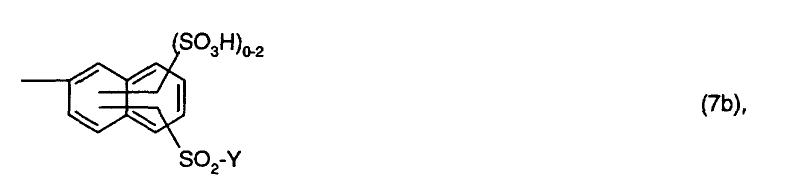 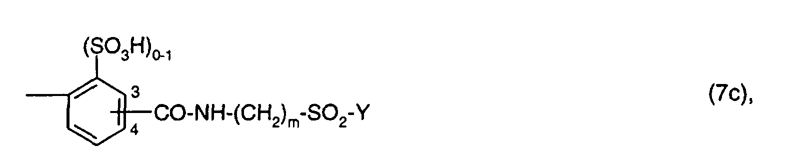 worin
(R₁₈)₀₋₂ für 0 bis 2 gleiche oder voneinander verschiedene Substituenten ausgewählt aus der Gruppe Methyl, Methoxy und Sulfo steht,
Y Vinyl oder β-Sulfatoethyl bedeutet,
m die Zahl 2 oder 3, oder 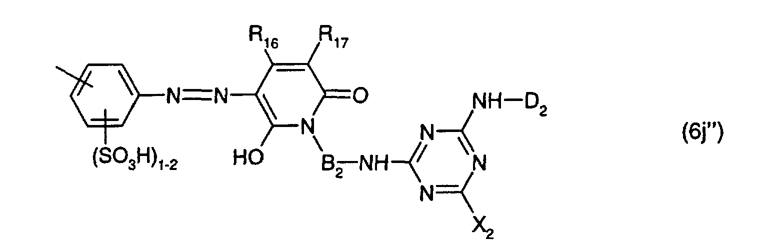 entspricht, worin
B₂ Ethylen ist,
D₂ einen Rest der Formel (7a) bedeutet, worin (R₁₈)₀₋₂ und Y die oben angegebenen Bedeutungen haben,
R₁₆ Methyl ist,
R₁₇ Carbamoyl oder Sulfomethyl bedeutet und
X₂ Fluor oder Chlor ist.

11. Verfahren zur Herstellung von Reaktivfarbstoffen gemäss Anspruch 1, **dadurch gekennzeichnet, dass** man eine Verbindung der Formel (8) 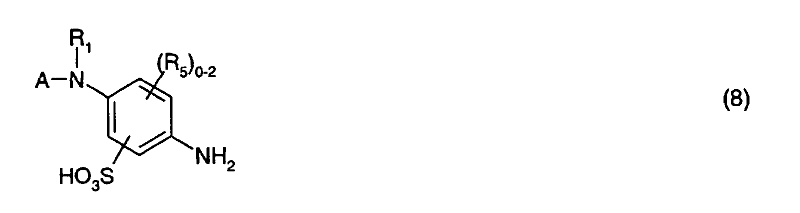 mit einer Verbindung der Formel (9) 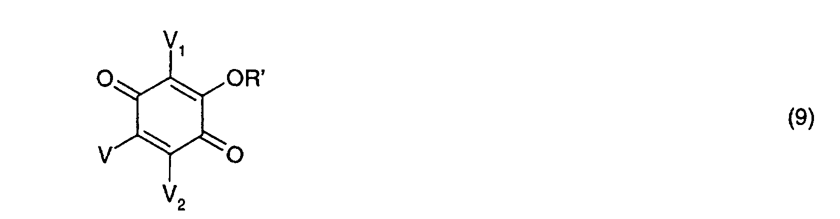 zu einer Verbindung der Formel (10) 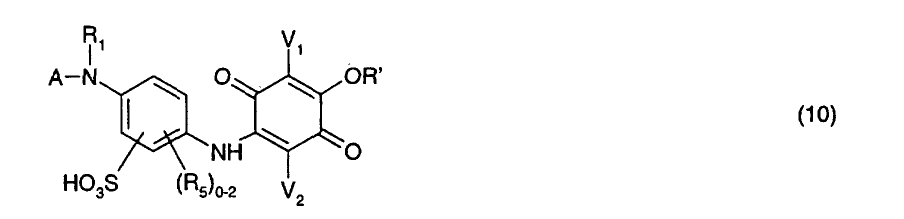 umsetzt, die Verbindung der Formel (10) mit einer Verbindung der Formel (11) 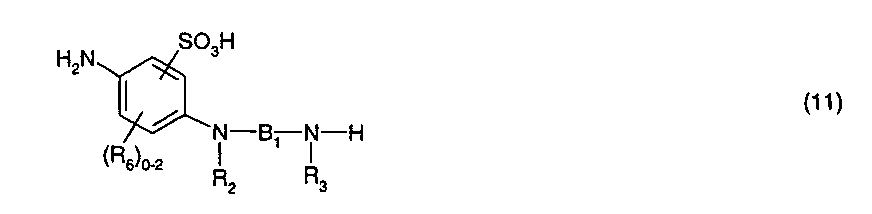 zu einer Verbindung der Formel (12) 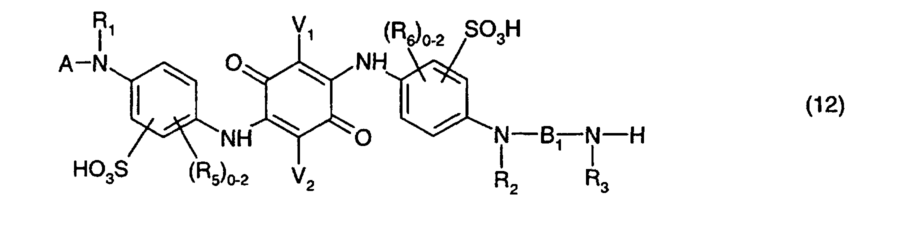 umsetzt, die Verbindung der Formel (12) zu einer Verbindung der Formel (13) 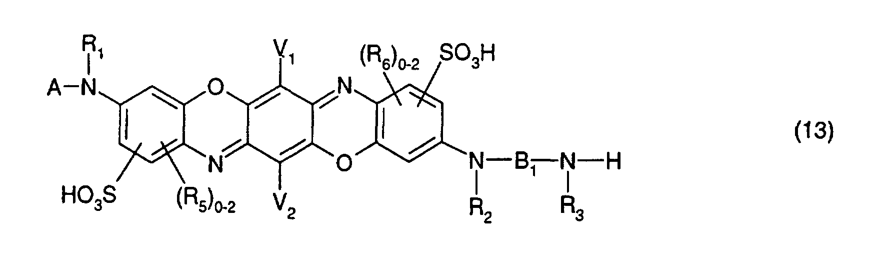 cyclisiert und die Verbindung der Formel (13) in beliebiger Reihenfolge mit 2,4,6-Trihalogen-s-triazin und einer Verbindung der Formel (14) 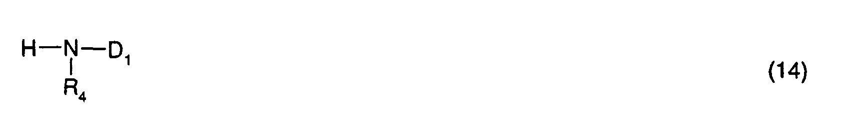 zu einer Verbindung der Formel (15) 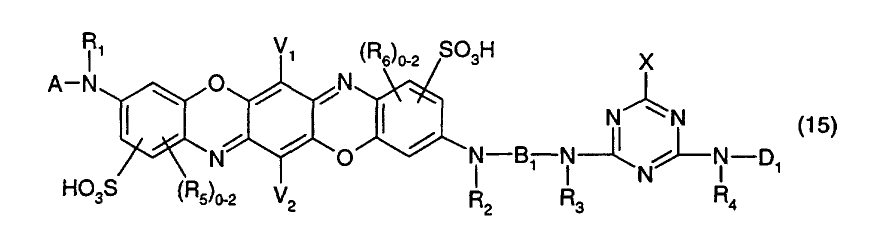 kondensiert, wobei für R₁, R₂, R₃, R₄, (R₅)₀₋₂, (R₆)₀₋₂, A, B₁, D₁, V₁ und V₂, die in Anspruch 1 angegebenen Bedeutungen gelten und R' C₁-C₄-Alkyl, V Chlor oder Brom und X Fluor oder Chlor bedeuten.

12. Verwendung von Reaktivfarbstoffen gemäss einem der Ansprüche 1 bis 10 bzw. der gemäss Anspruch 11 erhaltenen Reaktivfarbstoffe zum Färben oder Bedrucken von hydroxylgruppenhaltigen oder stickstoffhaltigen Fasermaterialien.

13. Verwendung gemäss Anspruch 12, **dadurch gekennzeichnet, dass** man cellulosehaltige Fasermaterialien, insbesondere baumwollhaltige Fasermaterialien, färbt oder bedruckt.

## Claims

1. A reactive dye of the formula (1) 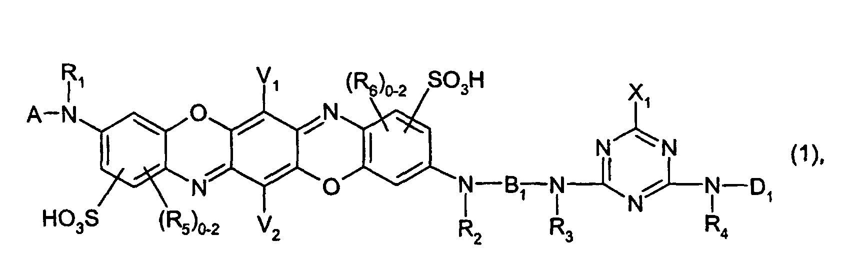 in which
R₁, R₂, R₃ and R₄ independently of one another are hydrogen or substituted or unsubstituted C₁-C₄alkyl,
(R₅)₀₋₂ and (R₆)₀₋₂ independently of one another are 0 to 2 identical or different substituents from the group consisting of C₁-C₄alkyl, C₁-C₄alkoxy, C₂-C₄alkanoylamino, halogen, carboxyl, sulfo, carbamoyl, N-C₁-C₄alkylcarbamoyl, N,N-di-C₁-C₄alkylcarbamoyl, C₁-C₄alkylsulfonyl, sulfamoyl, N-C₁-C₄alkylsulfamoyl and N,N-di-C₁-C₄alkylsulfamoyl,
A is hydrogen or C₁-C₄alkyl which is unsubstituted or substituted by hydroxyl, sulfo, carboxyl or sulfato, phenyl or naphthyl which are unsubstituted or substituted by C₁-C₄alkyl, C₁-C₄alkoxy, C₂-C₄alkanoylamino, hydroxyl, carboxyl, carbamoyl, sulfo or halogen, phenyl-C₁-C₄alkylene which is unsubstituted or substituted in the phenyl ring by C₁-C₄alkyl, C₁-C₄alkoxy, C₂-C₄alkanoylamino, hydroxyl, carboxyl, sulfo, carbamoyl, ureido or halogen, or C₅-C₇cycloalkyl which is unsubstituted or substituted by C₁-C₄alkyl,
B₁ is an aliphatic or aromatic bridge member,
D₁ is phenyl or naphthyl which is substituted by at least one fibre-reactive group and is or is not further substituted by substituents which are not fibre-reactive, or is a mono- or disazo radical which is substituted by at least one fibre-reative group and is of the formula (4) or (5)
D*-N=N-(M-N=N)ᵤ-K- (4)
or
-D*-N=N-(M-N=N)ᵤ-K (5),
in which
D* is the radical of a diazo component of the benzene or naphthalene series,
M is the radical of a middle component of the benzene or naphthalene series,
K is the radical of a coupling component of the bezene, naphthalene, pyrazolone, 6-hydroxypyrid-2-one or acetoacetarylamide series,
and u is the number 0 or 1, preferably 0, where D*, M and K can furthermore carry substituents customary in azo dyes,
V₁ and V₂ independently of one another are hydrogen, halogen, C₁-C₄alkyl, C₁-C₄alkoxy, or substituted or unsubstituted phenyl, phenoxy, C₂-C₆alkanoylamino or benzoylamino and
X₁ is halogen, hydroxyl, C₁-C₄alkoxy, C₁-C₄alkylthio, substituted or unsubstituted amino or an N-heterocycle which may contain further heteroatoms, with the proviso that
A and R₁ are not hydrogen if B₁ is ethylene, 1,3-propylene, 1,4-butylene, phenylene which is unsubstituted or substituted by sulfo, or 1,4-cyclohexylene, or the radical 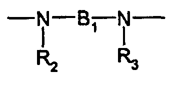 is piperazine and
A is not hydroxyethyl and R₁ is not hydrogen if B₁ is ethylene and X₁ is 2,6-disulfo-phenylamino.

2. A reactive dye according to claim 1, in which R₁, R₂, R₃ and R₄ independently of one another are hydrogen or C₁-C₄alkyl.

3. A reactive dye according to either claim 1 or claim 2, in which A is C₁-C₄alkyl, which is unsubstituted or substituted by hydroxyl, sulfo, carboxyl or sulfato, phenyl or naphthyl which are unsubstituted or substituted by C₁-C₄alkyl, C₁-C₄alkoxy, C₂-C₄alkanoylamino, hydroxyl, carboxyl, carbamoyl, sulfo or halogen, phenyl-C₁-C₄alkylene which is unsubstituted or substituted in the phenyl ring by C₁-C₄-alkyl, C₁-C₄alkoxy, C₂-C₄alkanoylamino, hydroxyl, carboxyl, sulfo, carbamoyl, ureido or halogen, or C₅-C₇-cycloalkyl which is unsubstituted or substituted by C₁-C₄alkyl.

4. A reactive dye according to any one of claims 1 to 3, in which B₁ is a C₂-C₁₂alkylene radical, which can be interrupted by 1, 2 or 3 members -O- and is unsubstituted or substituted by hydroxyl, sulfo, sulfato, cyano or carboxyl, or a phenylene radical which is unsubstituted or substituted by C₁-C₄alkyl, C₁-C₄alkoxy, C₂-C₄alkanoylamino, sulfo, halogen or carboxyl.

5. A reactive dye according to any one of claims 1 to 4, in which D₁ is a radical of the formula (7) or (6j') 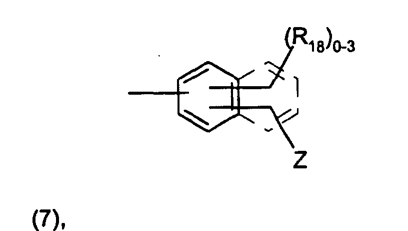 in which
(R₁₈)₀₋₃ is 0 to 3 identical or different substituents chosen from the group consisting of halogen, C₁-C₄alkyl, C₁-C₄alkoxy, carboxyl, nitro and sulfo and
Z is a radical of the formula (2a), (2c), (2d), (2e) or (2f)
-SO₂-Y (2a),
-CONR₈-(CH₂)ₘ-SO₂-Y (2c),
-NH-CO-CH(hal)-CH₂-hal (2d),
-NH-CO-C(hal)=CH₂ (2e), 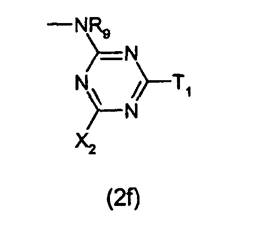
in which
R₈ and R₉ are hydrogen,
hal is bromine,
Y is vinyl, β-chloroethyl or β-sulfatoethyl,
T₁ is C₁-C₄alkoxy, C₁-C₄alkylthio which is unsubstituted or substituted by hydroxyl, carboxyl or sulfo, hydroxyl, amino, N-mono- or N,N-di-C₁-C₄alkylamino which are unsubstituted or substituted in the alkyl moiety by hydroxyl, sulfato or sulfo, morpholino, phenylamino or N-C₁-C₄alkyl-N-phenylamino, which are unsubstituted or substituted in the phenyl ring by sulfo, carboxyl, chlorine, acetylamino, methyl or methoxy and in which the alkyl is unsubstituted or substituted by hydroxyl, sulfo or sulfato, naphthylamino which is unsubstituted or substituted by 1 to 3 sulfo groups, or a fibre-reactive radical of the formula (3c') or (3d') 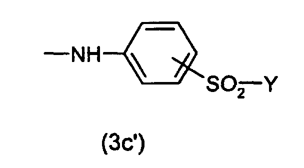 or 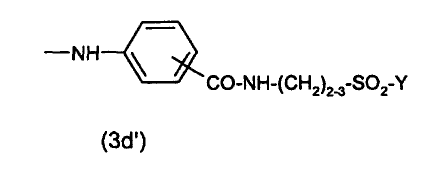 and Y is as defined above,
X₂ is chlorine or fluorine and
m is the number 2 or 3; or 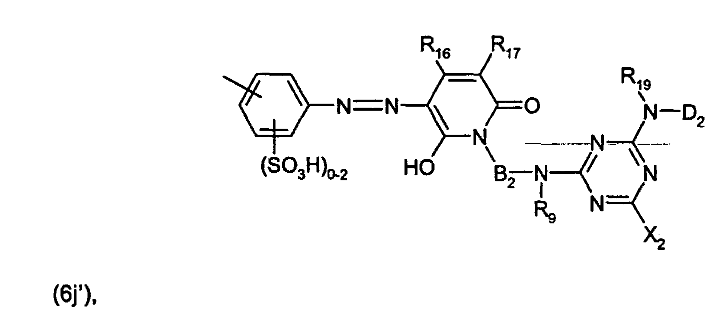 in which
B₂ is C₂-C₆alkylene which is unsubstituted or substituted by hydroxyl, sulfo, carboxyl or sulfato,
D₂ is a radical of the formula (7) in which (R₁₈)₀₋₃ is is as defined above and Z is a radical of the formula (2a), (2c), (2d) or (2e), in which R₈, hal, Y and m are as defined above,
R₁₆ is hydrogen, C₁-C₄alkyl or phenyl,
R₁₇ is hydrogen, cyano, carbamoyl or sulfomethyl,
R₁₉ is hydrogen, methyl or ethyl, and
R₉ and X₂ are as defined above.

6. A reactive dye according to any one of claims 1 to 5, in which D₁ is a radical of the formula (7a), (7b), (7c), (7d) or (6j") 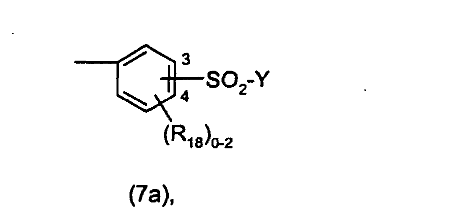 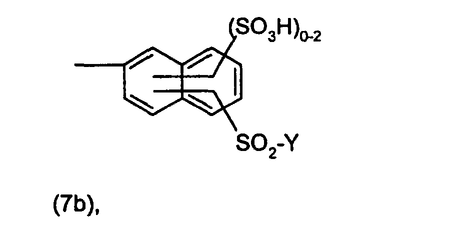 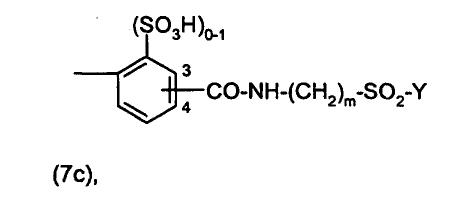 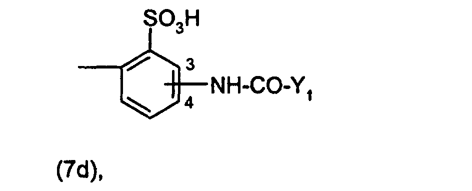 in which
(R₁₈)₀₋₂ is 0 to 2 identical or different substituents chosen from the group consisting of halogen, C₁-C₄alkyl, C₁-C₄alkoxy and sulfo,
Y is vinyl, β-chloroethyl or β-sulfatoethyl,
Y₁ is a group -CH(Br)-CH₂-Br or -C(Br)=CH₂ and
m is the number 2 or 3, or 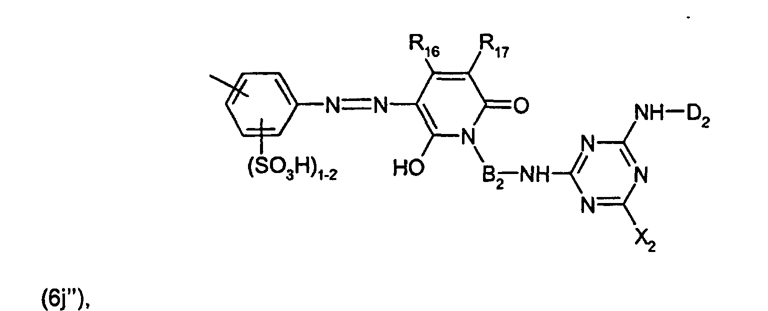 in which
B₂ is C₂-C₄alkylene,
D₂ is a radical of the formula (7a), (7b), (7c) or (7d), in which
(R₁₈)₀₋₂, Y, Y₁ and m are as defined above,
R₁₆ is methyl or ethyl,
R₁₇ is carbamoyl or sulfomethyl, and
X₂ is fluorine or chlorine.

7. A reactive dye according to any one of claims 1 to 6, in which X₁ is fluorine or chlorine.

8. A reactive dye according to any one of claims 1 to 7, which has the formula (1a) 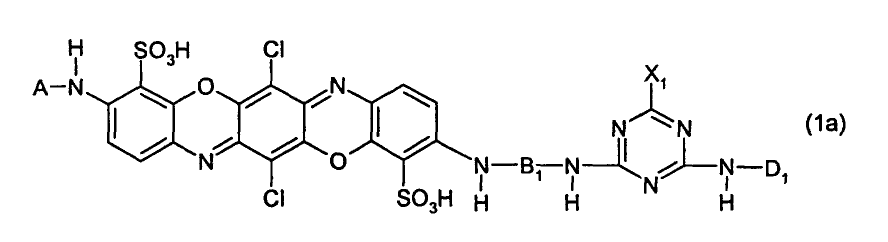 in which A, B₁, D₁ and X₁ are as defined in claim 1.

9. A reactive dye according to claim 8, in which
A is C₁-C₄alkyl which is unsubstituted or substituted by hydroxyl, sulfo, carboxyl or sulfato, phenyl which is unsubstituted or substituted by C₁-C₄alkyl, C₁-C₄alkoxy, C₂-C₄alkanoylamino, hydroxyl, carboxyl, carbamoyl, sulfo or halogen, phenyl-C₁-C₄alkylene which is unsubstituted or substituted in the phenyl ring by C₁-C₄alkyl, C₁-C₄alkoxy, C₂-C₄alkanoylamino, hydroxyl, carboxyl, sulfo, carbamoyl, ureido or halogen or C₅-C₇cycloalkyl which is unsubstituted or substituted by C₁-C₄alkyl,
B₁ is a C₂-C₁₂alkylene radical, which can be interrupted by 1, 2 or 3 members -O- and is unsubstituted or substituted by hydroxyl, sulfo, sulfato, cyano or carboxyl, or phenylene which is unsubstituted or substituted by C₁-C₄alkyl, C₁-C₄alkoxy, C₂-C₄alkanoylamino, sulfo, halogen or carboxyl,
X₁ is fluorine or chlorine;
D₁ is a radical of the formula (7) or (6j'), 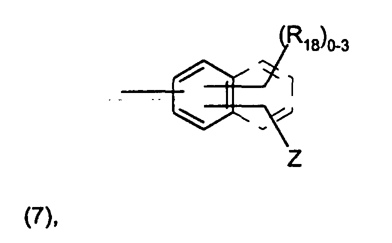 in which
(R₁₈)₀₋₃ is 0 to 3 identical or different substituents chosen from the group consisting of halogen, C₁-C₄alkyl, C₁-C₄alkoxy, carboxyl, nitro and sulfo and
Z is a radical of the formula (2a), (2c), (2d), (2e) or (2f)
-SO₂-Y (2a),
-CONR₈-(CH₂)ₘ-SO₂-Y (2c),
-NH-CO-CH(hal)-CH₂-hal (2d),
-NH-CO-C(hal)=CH₂ (2e), 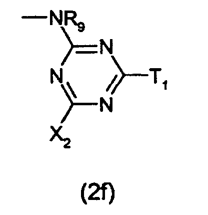
in which
R₈ and R₉ are hydrogen,
hal is bromine,
Y is vinyl, β-chloroethyl or β-sulfatoethyl,
T₁ is C₁-C₄alkoxy, C₁-C₄alkylthio which is unsubstituted or substituted by hydroxyl, carboxyl or sulfo, hydroxyl, amino, N-mono- or N,N-di-C₁-C₄alkylamino which are unsubstituted or substituted in the alkyl moiety by hydroxyl, sulfato or sulfo, morpholino, phenylamino or N-C₁-C₄alkyl-N-phenylamino, which are unsubstituted or substituted in the phenyl ring by sulfo, carboxyl, chlorine, acetylamino, methyl or methoxy and in which the alkyl is unsubstituted or substituted by hydroxyl, sulfo or sulfato, naphthylamino which is unsubstituted or substituted by 1 to 3 sulfo groups, or a fibre-reactive radical of the formula (3c') or (3d') 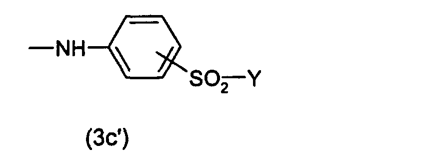 or 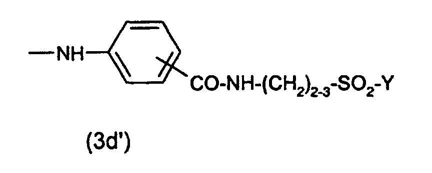 and Y is as defined above,
X₂ is chlorine or fluorine and
m is the number 2 or 3; or 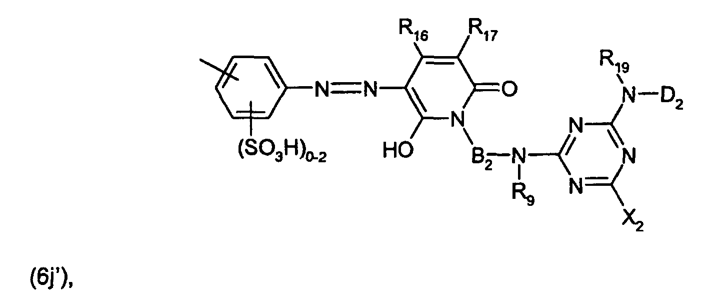 in which
B₂ is C₂-C₆alkylene which is unsubstituted or substituted by hydroxyl, sulfo, carboxyl or sulfato,
D₂ is a radical of the formula (7) in which (R₁₈)₀₋₃ is as defined above and Z is a radical of the formula (2a), (2c), (2d) or (2e), in which R₈, hal, Y and m are as defined above,
R₁₆ is hydrogen, C₁-C₄alkyl or phenyl,
R₁₇ is hydrogen, cyano, carbamoyl or sulfomethyl,
R₁₉ is hydrogen, methyl or ethyl, and
R₉ and X₂ are as defined above.

10. A reactive dye according to either claim 8 or claim 9, in which
A is C₁-C₄alkyl substituted by hydroxyl or sulfato,
B₁ is a radical of the formula -CH₂-CH(CH₃)- or -(CH₃)CH-CH₂-,
X₁ is fluorine or chlorine,
D₁ is a radical of the formula (7a), (7b), (7c) or (6j"), 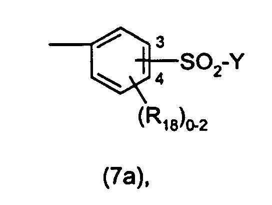 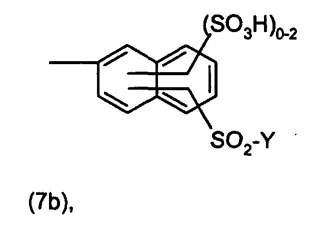 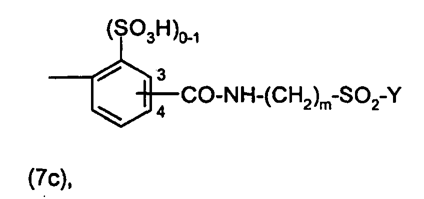 in which
(R₁₈)₀₋₂ is 0 to 2 identical or different substituents chosen from the group consisting of methyl, methoxy and sulfo,
Y is vinyl or β-sulfatoethyl,
m is the number 2 or 3, or 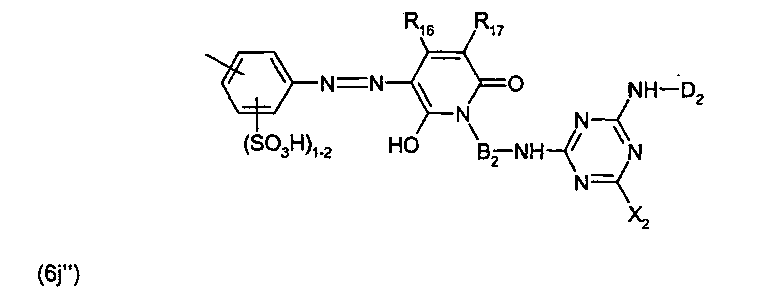 in which
B₂ is ethylene,
D₂ is a radical of the formula (7a), in which (R₁₈)₀₋₂ and Y are as defined above,
R₁₆ is methyl,
R₁₇ is carbamoyl or sulfomethyl and
X₂ is fluorine or chlorine.

11. A process for the preparation of a reactive dye according to claim 1, which comprises reacting a compound of the formula (8) 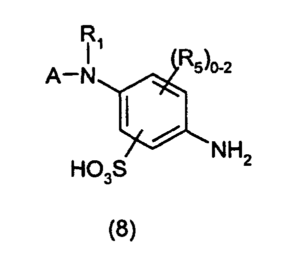 with a compound of the formula (9) 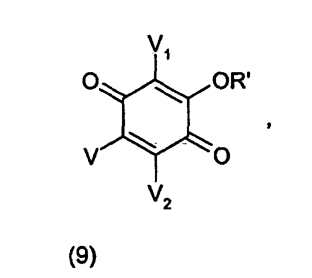 to give a compound of the formula (10) 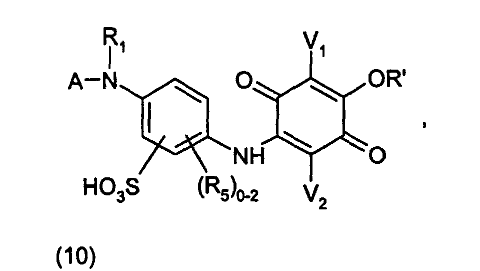 reacting the compound of the formula (10) with a compound of the formula (11) 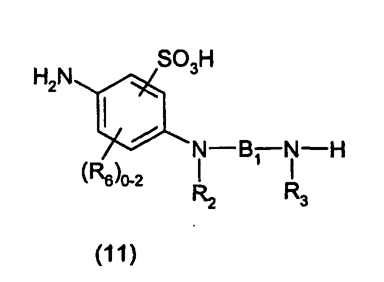 to give a compound of the formula (12) 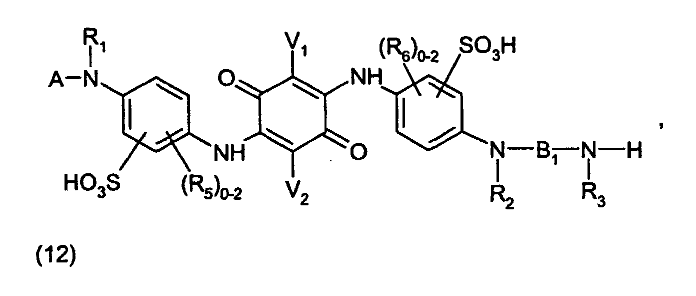 cyclizing the compound of the formula (12) to give a compound of the formula (13) 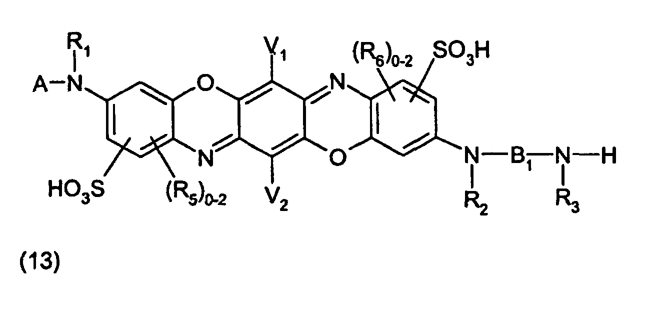 and subjecting the compound of the formula (13) to a condensation reaction in any desired sequence with 2,4,6-trihalogeno-s-triazine and a compound of the formula (14) 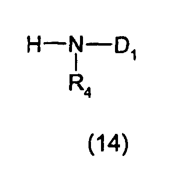 to give a compound of the formula (15) 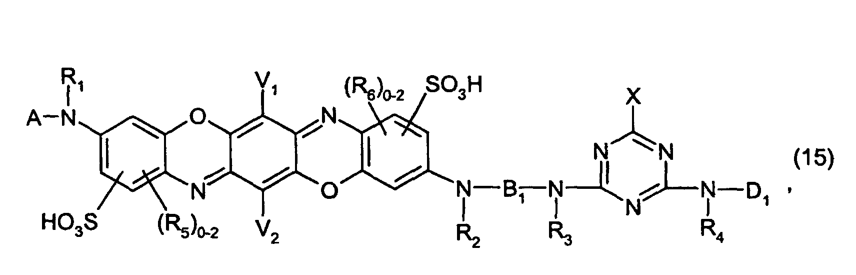 in which R₁, R₂, R₃, R₄, (R₅)₀₋₂, (R₆)₀₋₂, A, B₁, D₁, V₁ and V₂ are as defined in claim 1, R' is C₁-C₄alkyl, V is chorine or bromine, and X is fluorine or chlorine.

12. The use of a reactive dye according to any one of claims 1 to 10 or a reactive dye obtained according to claim 11 for dyeing or printing fibre material containing hydroxyl groups or containing nitrogen.

13. The use according to claim 12, in which cellulosic fibre materials, in particular cotton materials, are dyed or printed.

## Revendications

1. Colorants réactifs de formule (1) 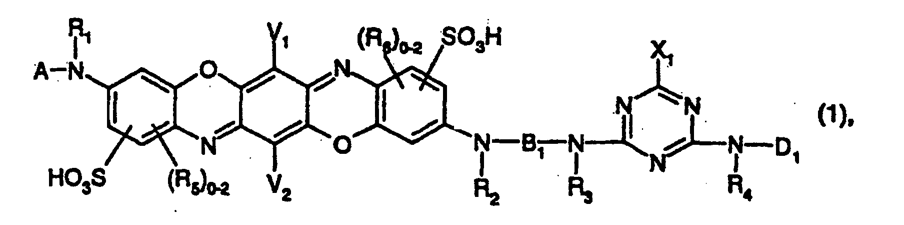 où
R₁, R₂, R₃ et R₄, indépendamment les uns des autres, représentent un atome d'hydrogène ou un groupe alkyle en C₁-C₄ éventuellement substitué,
(R₅)₀₋₂ et (R₆)₀₋₂, indépendamment l'un de l'autre, représentent 0 à 2 substituants identiques ou différents pris dans le groupe comprenant alkyle en C₁-C₄, alkoxy en C₁-C₄, (alcanoyl en C₂-C₄)amino, halogène, carboxy, sulfo, carbamoyle, N-(alkyl en C₁-C₄)-carbamoyle, N,N-di-(alkyl en C₁-C₄)carbamoyle, (alkyl en C₁-C₄)sulfonyle, sulfamoyle, N-(alkyl en C₁-C₄)-sulfamoyle et N,N-di-(alkyl en C₁-C₄)sulfamoyle,
A représente un atome d'hydrogène ou éventuellement un groupe alkyle en C₁-C₄ substitué par des substituants hydroxy, sulfo, carboxy ou sulfato, phényle ou naphtyle éventuellement substitué par un substituant alkyle en C₁-C₄, alkoxy en C₁-C₄, (alcanoyl en C₂-C₄)amino, hydroxy, carboxy, carbamoyle, sulfo ou halogène, phénylalkylène en C₁-C₄ éventuellement substitué dans le cycle phényle par un substituant alkyle en C₁-C₄, alkoxy en C₁-C₄, (alcanoyl en C₂-C₄) amino, hydroxy, carboxy, sulfo, carbamoyle, uréido ou halogène, ou cycloalkyle en C₅-C₇ éventuellement substitué par un substituant alkyle en C₁-C₄,
B₁ est un pont aliphatique ou aromatique,
D₁ est un groupe phényle ou naphtyle substitué par au moins un groupe réactif sur la fibre, qui est éventuellement substitué davantage par des substituants non réactifs sur la fibre, ou
par un reste mono- ou disazoïque substitué par au moins un groupe réactif sur la fibre de formule (4) ou (5)
**D*-N=N-(M-N=N)**_{**u**}**-K- (4)**
ou
**-D*-N=N-(M-N=N)**_{**u**}**-K (5)**
où
D* représente le reste d'un composant diazoïque de la famille du benzène ou du naphtalène,
M représente le reste d'un composant central de la famille du benzène ou du naphtalène,
K représente le reste d'un composant de copulation de la famille du benzène, du naphtalène, de la pyrazolone, de la 6-hydroxypyridone-(2) ou de l'arylamide d'acide acétique,
et u vaut 0 ou 1, de préférence 0, où D*, M et K peuvent porter de plus des substituants usuels pour des colorants azoïques,
V₁ et V₂, indépendamment l'un de l'autre, représentent un atome d'hydrogène, un atome d'halogène, un groupe alkyle en C₁-C₄, alkoxy en C₁-C₄, ou phénoxy, (alcanoyl en C₂-C₆)amino, benzoylamino ou phényle éventuellement substitué, et
X₁ représente un atome d'halogène, un groupe hydroxy, alkoxy en C₁-C₄, (alkyl en C₁-C₄)thio, amino éventuellement substitué ou un N-hétérocycle éventuellement présentant d'autres hétéroatomes, à condition que
A et R₁ ne représentent pas un atome d'hydrogène, lorsque B₁ représente éthylène, 1,3-propylène, 1,4-butylène, 1,4-cyclohexylène ou phénylène éventuellement substitué par un substituant sulfo, ou le reste 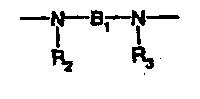 est pipérazine, et
A ne représente par un groupe hydroxyéthyle et R₁ ne représente pas un atome d'hydrogène, quand B₁ représente un groupe éthylène et X₁ représente un groupe 2,6-disulfo-phénylamino.

2. Colorants réactifs selon la revendication 1, **caractérisés en ce que** R₁, R₂, R₃ et R₄, indépendamment les uns des autres, représentent un atome d'hydrogène ou un groupe alkyle en C₁-C₄.

3. Colorants réactifs selon l'une des revendications 1 et 2, **caractérisés en ce que**
A représente un groupe alkyle en C₁-C₄ éventuellement substitué par des substituants hydroxy, sulfo, carboxy ou sulfato, phényle ou naphtyle éventuellement substitué par des substituants alkyle en C₁-C₄, alkoxy en C₁-C₄, (alcanoyl en C₂-C₄)amino, hydroxy, carboxy, carbamoyle, sulfo ou halogène, phénylalkylène en C₁-C₄ éventuellement substitué dans le cycle phényle par des substituants alkyle en C₁-C₄, alkoxy en C₁-C₄, (alcanoyl en C₂-C₄)amino, hydroxy, carboxy, sulfo, carbamoyle, uréido ou halogène, ou cycloalkyle en C₅-C₇ éventuellement substitué par un substituant alkyle en C₁-C₄.

4. Colorants réactifs selon l'une des revendications 1 à 3, **caractérisés en ce que**
B₁ représente un reste alkylène en C₂-C₁₂, qui peut être interrompu par 1, 2 ou 3 membres -O- et non substitué ou substitué par des substituants hydroxy, sulfo, sulfato, cyano ou carboxy, ou un reste phénylène éventuellement substitué par un substituant alkyle en C₁-C₄, alkoxy en C₁-C₄, (alcanoyl en C₂-C₄)amino, sulfo, halogène ou carboxy.

5. Colorants réactifs selon l'une des revendications 1 à 4, **caractérisés en ce que** D₁ représente un reste de formule (7) ou (6j') 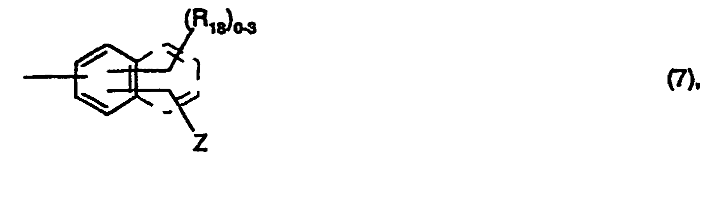 où
(R₁₈)₀₋₃ représente 0 à 3 substituants identiques ou différents pris dans le groupe comprenant halogène, alkyle en C₁-C₄, alkoxy en C₁-C₄, carboxy, nitro et sulfo et
Z représente un reste de formules (2a), (2c), (2d), (2e) ou (2f)
**-SO**_{**2**}**-Y (2a),**
**-CONR**_{**8**}**-(CH**_{**2**}**)**_{**m**}**-SO**_{**2**}**-Y (2c),**
**-NH-CO-CH(Hal)-CH**_{**2**}**-Hal (2d),**
**-NH-CO-C(Hal)=CH**_{**2**} **(2e),** 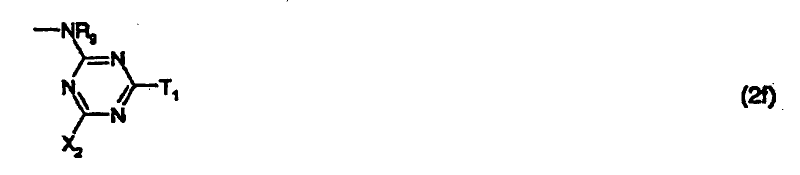
où
R₈ et R₉ représentent un atome d'hydrogène,
Hal représente un atome de brome,
Y représente un groupe vinyle, β-chloréthyle ou β-sulfatoéthyle,
T₁ représente un groupe alkoxy en C₁-C₄, (alkyl en C₁-C₄)thio éventuellement substitué par des substituants hydroxy, carboxy ou sulfo, hydroxy, amino, N-mono- ou N,N-di-(alkyl en C₁-C₄)amino éventuellement substitué dans le fragment alkyle par des substituants hydroxy, sulfato ou sulfo, morpholino, N-(alkyl en C₁-C₄)-N-phénylamino ou phénylamino éventuellement substitué dans le cycle phényle par des substituants sulfo, carboxy, chloro, acétylamino, méthyle ou méthoxy, où le fragment alkyle est éventuellement substitué par des substituants hydroxy, sulfo ou sulfato, naphtylamino éventuellement substitué par 1 à 3 groupes sulfo, ou représente un reste réactif sur la fibre de formule (3c') ou (3d') 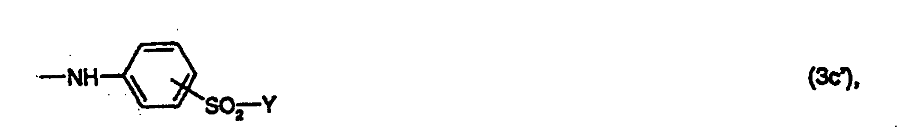 ou 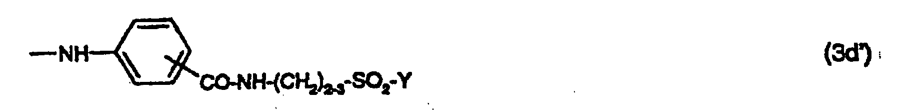 et Y possède la signification donnée ci-dessus,
X₂ représente un atome de chlore ou de fluor, et
m vaut 2 ou 3 ; ou 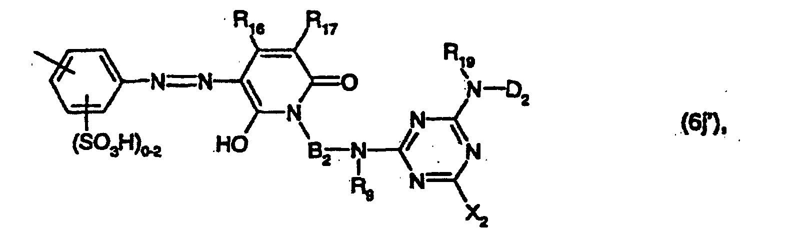 où
B₂ représente un groupe alkylène en C₂-C₆ éventuellement substitué par des substituants hydroxy, sulfo, carboxy ou sulfato,
D₂ représente un reste de formule (7), où (R₁₈)₀₋₃ possède les significations données ci-dessus et Z représente un reste de formule (2a), (2c), (2d) ou (2e), où R₈, Hal, Y et m possèdent les significations données ci-dessus,
R₁₆ représente un atome d'hydrogène, un groupe alkyle en C₁-C₄ ou phényle,
R₁₇ représente un atome d'hydrogène, un groupe cyano, carbamoyle ou sulfométhyle,
R₁₉ représente un atome d'hydrogène, un groupe méthyle ou éthyle, et
R₉ et X₂ possèdent les significations données ci-dessus.

6. Colorants réactifs selon l'une des revendications 1 à 5, **caractérisés en ce que** D₁ représente un reste de formule (7a), (7b), (7c), (7d) ou (6j") 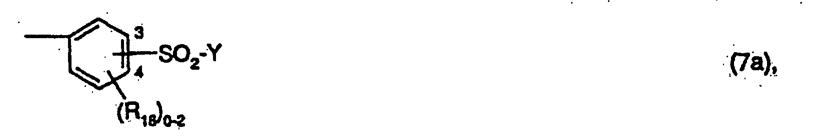 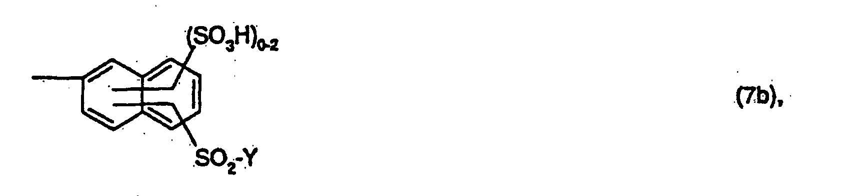 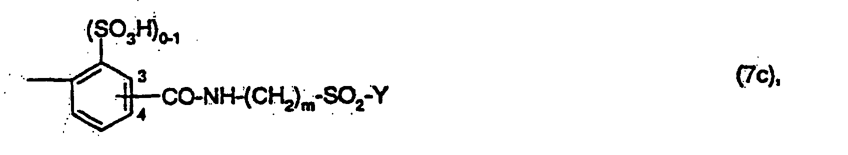 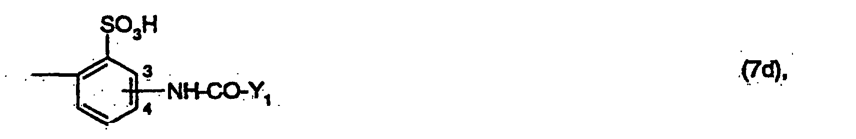 où
(R₁₈)₀₋₂ représente 0 à 2 substituants identiques ou différents pris dans le groupe comprenant halogène, alkyle en C₁-C₄, alkoxy en C₁-C₄ et sulfo,
Y représente un groupe vinyle, β-chloroéthyle ou β-sulfatoéthyle,
Y₁ représente un groupe -CH(Br)-CH₂Br ou -C(Br)=CH₂ et
m vaut 2 ou 3 ; ou 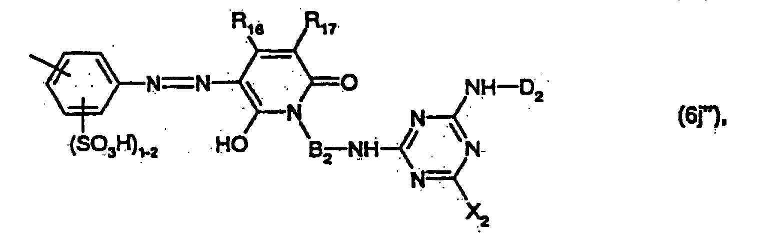 où
B₂ représente un groupe alkylène en C₂-C₄,
D₂ représente un reste de formules (7a), (7b), (7c) ou (7d), où
(R₁₈)₀₋₂, Y, Y₁ et m possèdent les significations données ci-dessus,
R₁₆ représente un groupe méthyle ou éthyle,
R₁₇ représente un groupe carbamoyle ou sulfométhyle, et
X₂ représente un atome de fluor ou de chlore.

7. Colorants réactifs selon l'une des revendications 1 à 6, **caractérisés en ce que** X₁ représente un atome de fluor ou de chlore.

8. Colorants réactifs selon l'une des revendications 1 à 7, **caractérisés en ce qu'**ils répondent à la formule (1a) 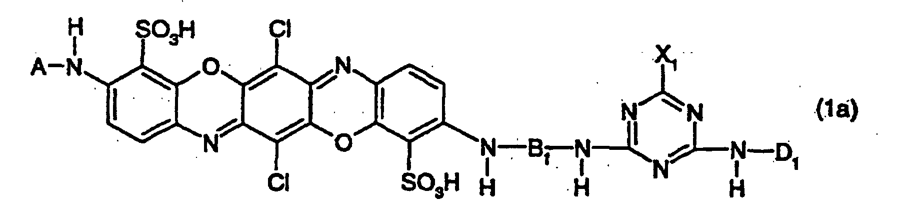 où A, B₁, D₁ et X₁ possèdent les significations et les préférences données ci-dessus.

9. Colorants réactifs selon la revendication 8, **caractérisés en ce que**
A représente un groupe alkyle en C₁-C₄ éventuellement substitué par des substituants hydroxy, sulfo, carboxy ou sulfato, phényle éventuellement substitué par des substituants alkyle en C₁-C₄, alkoxy en C₁-C₄, (alcanoyl en C₂-C₄)amino, hydroxy, carboxy, carbamoyle, sulfo ou halogène, phénylalkylène en C₁-C₄ éventuellement substitué dans le cycle phényle par des substituants alkyle en C₁-C₄, alkoxy en C₁-C₄, (alcanoyl en C₂-C₄)-amino, hydroxy, carboxy, sulfo, carbamoyle, uréido ou halogène, ou cycloalkyle en C₅-C₇ éventuellement substitué par un substituant alkyle en C₁-C₄ ;
B₁ représente un reste alkylène en C₂-C₁₂, qui peut être interrompu par 1, 2 ou 3 membres -O- et est non substitué ou substitué par des substituants hydroxy, sulfo, sulfato, cyano ou carboxy, ou représente un groupe phénylène éventuellement substitué par des substituants alkyle en C₁-C₄, alkoxy en C₁-C₄, (alcanoyl en C₂-C₄)amino, sulfo, halogène ou carboxy ;
X₁ représente un atome de fluor ou de chlore.
D₁ représente un reste de formules (7) ou (6j") 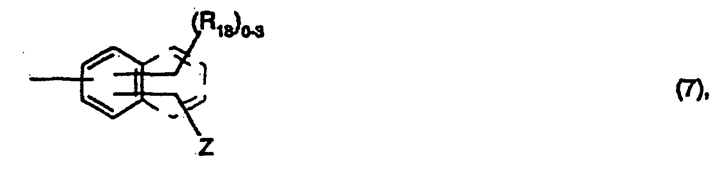 où
(R₁₈)₀₋₃ représente 0 à 3 substituants identiques ou différents pris dans le groupe comprenant halogène, alkyle en C₁-C₄, alkoxy en C₁-C₄, carboxy, nitro et sulfo et
Z représente un reste de formules (2a), (2c), (2d), (2e) ou (2f) où
**-SO**_{**2**}**-Y (2a),**
**-CONR**_{**8**}**-(CH**_{**2**}**)**_{**m**}**-SO**_{**2**}**-Y (2c),**
**-NH-CO-CH(Hal)-CH**_{**2**}**-Hal (2d),**
**-NH-CO-C(Hal)=CH**_{**2**} **(2e),** 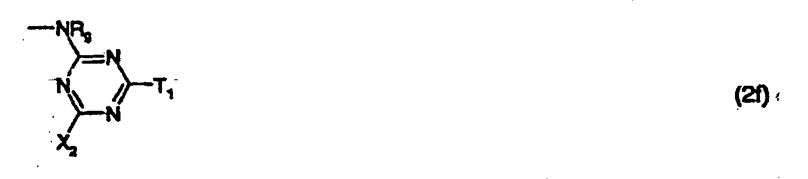
où
R₈ et R₉ représentent un atome d'hydrogène,
Hal représente un atome de brome,
Y représente un groupe vinyle, β-chloréthyle ou β-sulfatoéthyle,
T₁ représente un groupe alkoxy en C₁-C₄, (alkyl en C₁-C₄)thio éventuellement substitué par des substituants hydroxy, carboxy ou sulfo, hydroxy, amino, N-mono- ou N,N-di-(alkyl en C₁-C₄)amino éventuellement substitué dans le fragment alkyle par des substituants hydroxy, sulfato ou sulfo, morpholino, N-(alkyl en C₁-C₄)-N-phénylamino ou phénylamino éventuellement substitué dans le cycle phényle par des substituants sulfo, carboxy, chloro, acétylamino, méthyle ou méthoxy, où le fragment alkyle est éventuellement substitué par des substituants hydroxy, sulfo ou sulfato, naphtylamino éventuellement substitué par 1 à 3 groupes sulfo, ou représente un reste réactif sur la fibre de formule (3c') ou (3d') 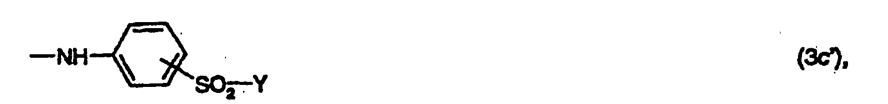 ou 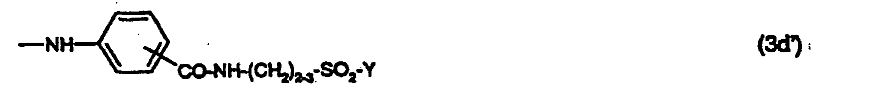 et Y possède la signification donnée ci-dessus,
X₂ représente un atome de chlore ou de fluor, et
m vaut 2 ou 3 ; ou 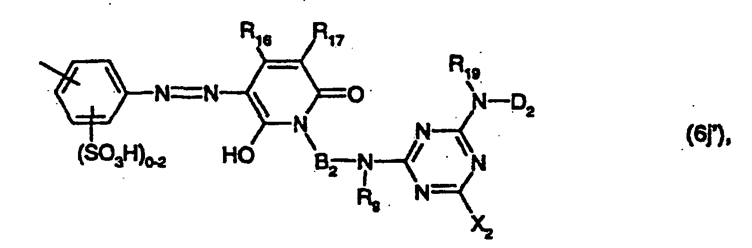 où
B₂ représente un groupe alkylène en C₂-C₆ éventuellement substitué par des substituants hydroxy, sulfo, carboxy ou sulfato,
D₂ représente un reste de formule (7), où (R₁₈)₀₋₃ possède les significations données ci-dessus et Z représente un reste de formule (2a), (2c), (2d) ou (2e), où R₈, Hal, Y et m possèdent les significations données ci-dessus,
R₁₆ représente un atome d'hydrogène, un groupe alkyle en C₁-C₄ ou phényle,
R₁₇ représente un atome d'hydrogène, un groupe cyano, carbamoyle ou sulfométhyle,
R₁₉ représente un atome d'hydrogène, un groupe méthyle ou éthyle, et
R₉ et X₂ possèdent les significations données ci-dessus.

10. Colorants réactifs selon l'une dés revendications 8 ou 9, **caractérisés en ce que**
A représente un groupe alkyle en C₁-C₄ substitué par un substituant hydroxy ou sulfato,
B₁ représente un reste de formule -CH₂-CH(CH₃)- ou - (CH₃)CH-CH₂-,
X₁ représente un atome de fluor ou de chlore,
D₁ représente un reste de formule (7a), (7b), (7c) ou (6j") 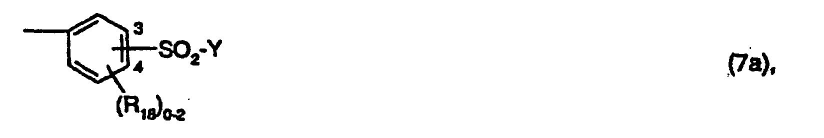 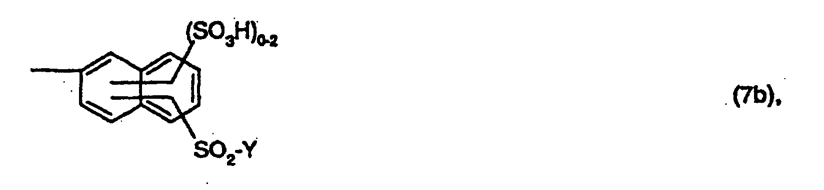 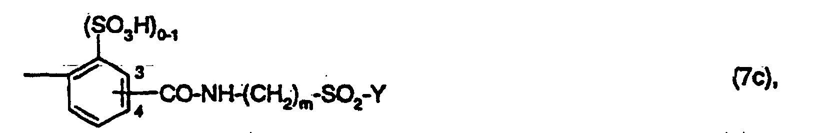 où
(R₁₈)₀₋₂ représente 0 à 2 substituants identiques ou différents pris dans le groupe comprenant méthyle, méthoxy et sulfo,
Y représente un groupe vinyle ou β-sulfatoéthyle,
m vaut 2 ou 3 ; ou 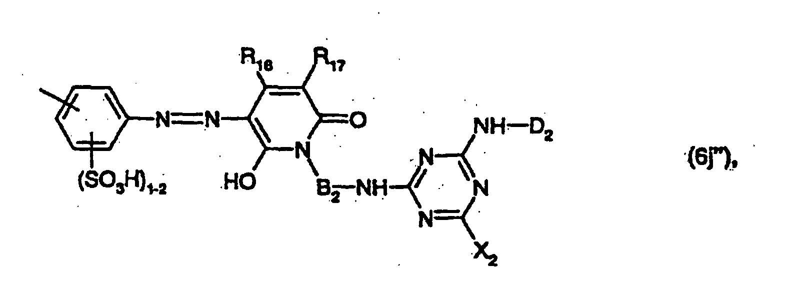 où
B₂ représente un groupe éthylène,
D₂ représente un reste de formule (7a), où (R₁₈)₀₋₂ et Y possèdent les significations données ci-dessus,
R₁₆ représente un groupe méthyle,
R₁₇ représente un groupe carbamoyle ou sulfométhyle, et
X₂ représente un atome de fluor ou de chlore.

11. Procédé pour la préparation de colorants réactifs selon la revendication 1, **caractérisé en ce qu'**on fait réagir un composé de formule (8) 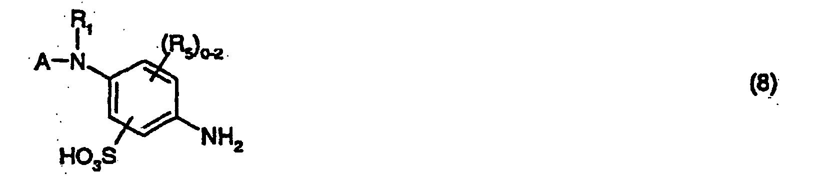 sur un composé de formule (9) 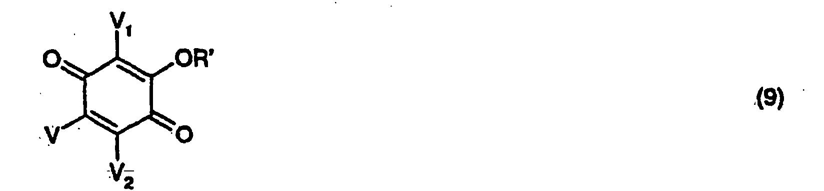 pour obtenir un composé de formule (10) 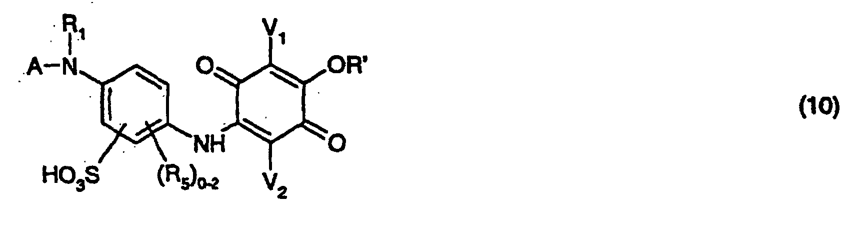 on fait réagir le composé de formule (10) sur un composé de formule (11) 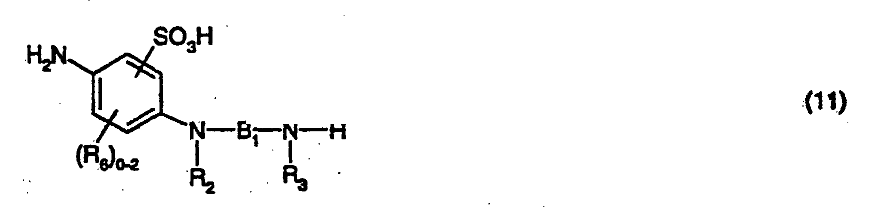 pour obtenir un composé de formule (12) 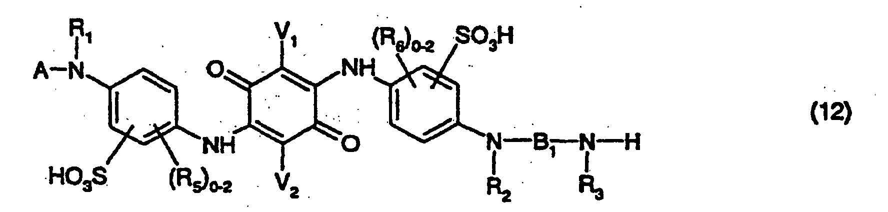 on cyclise le composé de formule (12) pour obtenir un composé de formule (13) 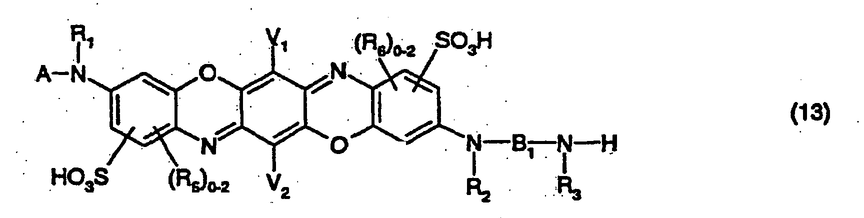 et on condense le composé de formule (13), dans un ordre quelconque, sur la 2,4,6-trihalogéno-s-triazine et un composé de formule (14) 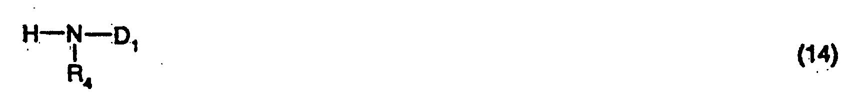 pour obtenir un composé de formule (15) 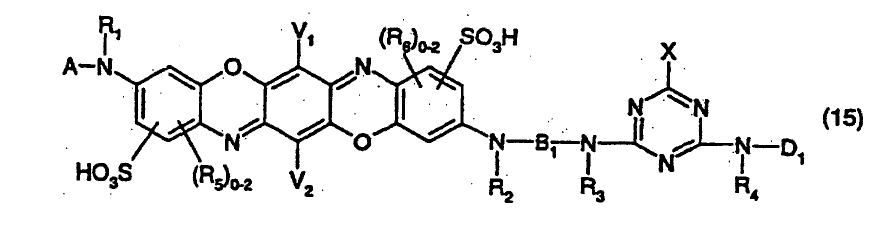 R₁, R₂, R₃, R₄, (R₅)₀₋₂, (R₆)₀₋₂, A, B₁, D₁, V₁ et V₂ possèdent les significations données ci-dessus, R' représente un groupe alkyle en C₁-C₄, V représente un atome de chlore ou de brome, et X représente un atome de fluor ou de chlore.

12. Utilisation de colorants réactifs selon l'une des revendications 1 à 10 ou des colorants réactifs obtenus selon la revendication 11, pour la teinture ou l'impression de matières fibreuses azotées ou présentant des groupes hydroxyle.

13. Utilisation selon la revendication 12, **caractérisée en ce qu'**on teint ou imprime des matières fibreuses cellulosiques, en particulier des matières fibreuses contenant du coton.
